# EUROPÄISCHE PATENTSCHRIFT

(11) **EP 1 112 140 B1**
(45) Veröffentlichungstag und Bekanntmachung des Hinweises auf die Patenterteilung: **12.12.2012**
(21) Anmeldenummer: 99953638.6
(22) Anmeldetag: 01.09.1999
(51) Int. Cl.: B23K 26/06, H01S 3/23

(54) **LASERSTRAHLUNGSQUELLE**
LASER RADIATION SOURCE
SOURCE DE RAYONNEMENT LASER

(30) Priorität: 08.09.1998 DE 19840926
(43) Veröffentlichungstag der Anmeldung: 04.07.2001
(60) Teilanmeldung: 05009046.3
(73) Patentinhaber: HELL Gravure Systems GmbH & Co. KG, 24148 Kiel (DE)
(72) Erfinder: JÜRGENSEN, Heinrich, D-24223 Raisdorf (DE)
(86) Internationale Anmeldenummer: PCT/DE1999/002721
(87) Internationale Veröffentlichungsnummer: WO 2000/013839

(56) Entgegenhaltungen:
- EP-A2- 0 580 394
- US-A- 5 084 882
- US-A- 5 396 506
- US-A- 5 694 408

## Beschreibung

Die Erfindung betrifft eine Laserstrahlungsquelle hoher Leistungsdichte und hoher Energie zur Materialbearbeitung, sowie eine Anordnung zur Materialbearbeitung mit einer solchen Laserstrahlungsquelle.

Bei der Materialbearbeitung mit gebündelten Energiestrahlen, wie bspw. Elektronenstrahlen oder Laserstrahlen, gibt es Anwendungsfälle, bei denen Strukturen erzeugt werden müssen, die hohe Anforderungen an den gebündelten Energiestrahl bzgl. seiner Strahlgeometrie und der Fokussierbarkeit des Strahls stellen. Gleichzeitig wird aber eine große Strahlleistung benötigt.

Ein typischer Fall, bei dem äußerst feine Strukturen auf einer Bearbeitungsfläche erzeugt werden müssen, ist die Herstellung von Druckformen, sei es für Tiefdruck, Offsetdruck, Hochdruck, Siebdruck oder Flexodruck oder für sonstige Druckverfahren. Bei der Herstellung von Druckformen ist es erforderlich, äußerst feine Strukturen auf der Oberfläche der Druckformen zu erzeugen, da mittels der Oberfläche der Druckformen hochaufgelöste Bildinformation wie Text, Rasterbilder, Grafiken und Linienmuster (Linework) wiedergegeben werden sollen.

Beim Tiefdruck wurden in der Vergangenheit die Druckformen mittels Ätzung hergestellt, was zu guten Resultaten geführt hat, die Ätzung wurde aber im Laufe der Zeit durch die umweltfreundlichere Gravur mittels elektromagnetisch angetriebener Diamantstichel abgelöst. Es werden im Tiefdruck normalerweise als Druckformen Druckzylinder verwendet, deren Oberfläche aus Kupfer besteht, in die diese feinen, für den Druck erforderlichen Strukturen in Form von Näpfchen mittels des Diamantstichels eingraviert werden. Die Druckzylinder werden beim Tiefdruck nach ihrer Fertigstellung in eine Druckmaschine eingebracht, in der die Näpfchen mit Druckfarbe gefüllt werden. Anschließend wird die überschüssige Farbe mittels eines Rakelmessers entfernt und die verbleibende Druckfarbe wird beim Druckprozeß auf den Bedruckstoff übertragen. Man verwendet hierbei Kupferzylinder wegen ihrer langen Standzeit im Druckprozeß. Eine lange Standzeit ist bei hohen Auflagen, z.B. im insbesondere Magazindruck oder Verpackungsdruck erforderlich, da beim Druckprozeß die Oberfläche der Druckform infolge der Einwirkung des Rakelmessers und des Bedruckstoffs verschleißt. Um die Standzeit noch weiter zu verlängern, werden die Druckzylinder mit einer aufgalvanisierten Kupferschicht versehen, oder aber es werden auch Vollzylinder aus Kupfer verwendet. Eine weitere Möglichkeit, die Standzeit noch mehr zu verlängern besteht darin, daß die Kupferoberfläche nach der Gravur galvanisch verchromt wird. Um eine noch längere Standzeit zu erreichen wird zusätzlich das sog. "Heißverchromen" angewendet, bei dem der galvanische Prozeß unter erhöhter Temperatur abläuft. Hiermit können die längsten, bisher erreichbaren Standzeiten erreicht werden. Hieraus ergibt sich, daß Kupfer als Material für die Oberfläche von Tiefdruckzylindern am geeignetsten ist. Andere Materialien als Kupfer haben sich bisher für hohe Auflagen nicht bewährt.

Bei der Erzeugung der Näpfchen erfolgt der Antrieb des Diamantstichels über ein elektromechanisch angetriebenes Magnetsystem mit einem oszillierenden Anker, auf dem der Diamantstichel befestigt ist. Ein solches elektromechanisches Schwingungssystem kann wegen der aufzubringenden Kräfte, die zum Gravieren der Näpfchen erforderlich sind, nicht beliebig schnell gemacht werden. Dieses Magnetsystem wird daher oberhalb seiner Resonanzfrequenz betrieben, damit die höchste Gravierfrequenz, d.h. die höchste Graviergeschwindigkeit erreicht werden kann. Um die Graviergeschwindigkeit noch weiter zu steigern, hat man bei den heutigen Graviermaschinen mehrere solcher Graviersysteme nebeneinander in Achsrichtung des Kupferzylinders angeordnet. Dies reicht aber immer noch nicht für die heute geforderte kurze Gravierzeit der Druckzylinder aus, da die Gravierzeit direkt auf die Aktualität des Druckergebnisses Einfluß nimmt. Aus diesem Grunde wird die Tiefdruckgravur nicht für den Zeitungsdruck, sondern vorwiegend für den Magazindruck eingesetzt.

Beim Einsatz mehrerer Graviersysteme werden in die Oberfläche des Druckzylinders gleichzeitig mehrere sog. Stränge eingraviert. Ein solcher Strang enthält z.B. eine oder mehrere ganze Magazinseiten. Ein Problem, das dabei auftritt ist, daß in den einzelnen Strängen wegen der verschiedenen Graviersysteme, die unabhängig voneinander angesteuert werden, bei gleichem zu gravierenden Tonwert Näpfchen unterschiedlicher Volumina erzeugt werden, was zu Unterschieden in den einzelnen Strängen führt, die das Auge beim späteren Betrachten erkennt. Aus diesem Grunde wird z.B. beim Verpackungsdruck nur mit einem Graviersystem gearbeitet, damit diese Fehler, die im Magazindruck toleriert werden, nicht auftreten.

Bei der Gravur der Näpfchen wird das Näpfchenvolumen abhängig vom Bildinhalt der zu druckenden Vorlage variiert. Hierbei soll der jeweilige Tonwert der Vorlage beim Druck möglichst genau wiedergegeben werden. Bei der Abtastung der Vorlagen werden zur Erkennung der Tonwertstufen aus Gründen der Bildsignalverarbeitung (z.B. Gradationseinstellungen) Analog/Digitalumwandler z.B. mit einer Auflösung von 12 Bit eingesetzt, was in diesem Falle einer Auflösung in 4096 Tonwerte entspricht. Aus dieser hochaufgelösten Bildinformation wird das Signal für die Ansteuerung des elektromagnetischen Graviersystems gewonnen, das üblicherweise ein 8-Bit Signal ist, was einer Auflösung in 256 Tonwertstufen entspricht. Um die entsprechenden Volumina, die zur Erreichung dieses Tonwertumfangs erforderlich sind, zu erzeugen, wird die Eindringtiefe des Diamantstichels in die Kupferoberfläche durch die Ansteuerung des Magnetsystems variiert, wobei sich die Geometrie der Näpfchen etwa zwischen 120 pm Durchmesser bei einer Tiefe von 40 µm und etwa 30 µm Durchmesser bei einer Tiefe von 3 µm ändert. Weil nur ein sehr kleiner Variationsbereich in der Tiefe der Näpfchen zwischen 40 µm und 3 µm zur Verfügung steht, muß die Eindringtiefe des Stichels, mit dem die Näpfchen graviert werden, auf Bruchteile von µm genau gesteuert werden, um den gewünschten Tonwertumfang reproduzierbar zu erreichen. Wie hieraus zu ersehen ist, ist eine äu-βerst hohe Präzision bei der Gravur der Näpfchen erforderlich, was die Erzeugung der erforderlichen Durchmesser und Tiefen der Näpfchen angeht. Da die Geometrie der gravierten Näpfchen direkt von der Form des Stichels abhängt, werden außerdem noch sehr hohe Anforderungen an die Geometrie des Diamantstichels gestellt, die, wie es sich gezeigt hat, nur mit sehr hohem Aufwand und unter viel Ausschuß bei der Herstellung der Stichel erreicht werden kann. Außerdem unterliegt der Diamantstichel einem Verschleiß, da bei der Gravur eines großen Druckzylinders mit 14 Strängen, einem Umfang von 1,8 m und einer Länge von 3,6 m bei einem Raster von 70 Linien/cm, was einer Anzahl von 4900 Näpfchen/cm² entspricht, ca. 20 Millionen Näpfchen von einem Stichel graviert werden müssen. Bricht während der Gravur eines Druckzylinders einer der Diamantstichel ab, so ist der ganze Druckzylinder unbrauchbar, was einerseits einen erheblichen finanziellen Schaden anrichtet und zum anderen einen gravierenden Zeitverlust darstellt, da ein neuer Zylinder graviert werden muß, was den Druckbeginn um Stunden hinausschiebt. Aus diesem Grunde tauschen die Anwender vielfach die Stichel vorsorglich früher aus. Wie hieraus weiterhin zu ersehen ist, kommt es auch in hohem Maße auf die Standfestigkeit der Diamantstichel an.

Alles in allem ist die elektromechanische Gravur gut geeignet, um Tiefdruckzylinder hoher Qualität herzustellen, sie hat aber eine Reihe von Schwachpunkten und ist sehr aufwendig und man würde diese Nachteile gerne durch ein anderes Verfahren eliminieren.

Die so hergestellten Näpfchen, die später die Druckfarbe aufnehmen sollen, sind außerdem entsprechend einem feinen regulären Raster, nämlich dem Druckraster, auf der Oberfläche der Druckform angeordnet, wobei für jede Druckfarbe ein separater Druckzylinder hergestellt wird, und wobei jeweils ein anderes Raster mit unterschiedlichem Winkel und unterschiedlicher Rasterweite verwendet wird. Bei diesen Rastern verbleiben zwischen den einzelnen Näpfchen schmale Stege, die beim Druck in der Druckmaschine das Rakelmesser tragen, das die überflüssige Farbe nach dem Einfärben abrakelt. Ein weiterer Nachteil der Betriebsweise dieser elektromechanischen Gravur ist, daß auch Texte und Linien gerastert wiedergegeben werden müssen, was zu Vertreppungen der Konturen der Schriftzeichen und der Linien führt, die das Auge als störend erkennt. Dies ist ein Nachteil gegenüber dem weit verbreiteten Offsetdruck, bei dem diese Vertreppung um eine Größenordnung kleiner gehalten werden kann, was dann vom Auge nicht mehr erkannt wird und zu einer besseren Qualität führt, die mit dem Tiefdruck bisher nicht erreicht werden kann. Dies ist ein gravierender Nachteil des Tiefdruckverfahrens.

Ebenso können bei der Tiefdruckgravur keine stochastischen Raster erzeugt werden, bei denen die Größe der Näpfchen und die Position der Näpfchen dem Tonwert entsprechend zufällig verteilt werden kann, was aber bei der Gravur mittels des Diamantstichels nicht möglich ist. Solche stochastischen Raster werden auch vielfach "Frequenzmodulierte Raster" genannt, die den Vorteil haben, daß Details viel besser wiedergegeben werden können, und daß kein Moiré auftritt, was auch zu einer besseren Bildqualität als beim Tiefdruck führt.

Weiterhin ist es bekannt, zur Erzeugung der Näpfchen das in der Materialbearbeitung angewendete Elektronenstrahlgravierverfahren einzusetzen, das wegen der hohen Energie des Elektronenstrahls und der enormen Präzision bzgl. Strahlablenkung und Strahlgeometrie sehr gute Resultate gezeigt hat.

Dieses Verfahren ist in der Druckschrift "Schnelles Elektronenstrahlgravierverfahren zur Gravur von Metallzylindern", Optik 77, No. 2 (1987), Seiten 83-92, Wissenschaftliche Verlagsgesellschaft mbH Stuttgart, beschrieben. Wegen des sehr hohen Aufwandes, der für die Hardware und Elektronik erforderlich ist, wurde die Elektronenstrahlgravur in der Praxis bisher nicht für die Gravur von Kupferzylindern für den Tiefdruck eingesetzt, sondern nur in der Stahlindustrie zur Oberflächengravur von sogenannten Texturwalzen für die Blechherstellung, mit denen Texturen in die Bleche gewalzt werden.

In der Fachliteratur und auch in der Patentliteratur ist wiederholt vorgeschlagen worden, die Kupferzylinder mittels Laser zu gravieren. Da Kupfer aber für Laserstrahlung ein sehr guter Reflektor ist, sind sehr hohe Leistungen und insbesondere sehr hohe Leistungsdichten der zu verwendenden Laser erforderlich, um in das Kupfer einzudringen und es aufzuschmelzen. Es gibt bisher keine Lasergraviereinheit mit Laserstrahlungsquellen entsprechend hoher Leistungsdichte und Energie, mit der es gelingt, die Kupferzylinder für den Tiefdruck mit der geforderten Näpfchenstruktur in der Kupferoberfläche zu versehen.

Man hat zwar trotzdem versucht, Laser für die Tiefdruckgravur einzusetzen, indem man auf andere Materialien als Kupfer ausgewichen ist. So ist z.B. in der Druckschrift DE-A-19 27 323 vorgeschlagen worden, Kupferzylinder mittels chemischer Ätzung so vorzubereiten, daß die Oberfläche des Kupferzylinders bereits Näpfchen aufweist, die ein Volumen haben, das der maximalen Druckdichte entspricht. Diese Näpfchen werden mit einem festen Füllmaterial z.B. Kunststoff gefüllt. Mittels eines Lasers wird dann von dem Füllmaterial soviel entfernt, bis das gewünschte Näpfchenvolumen erreicht ist. Dieses Verfahren kommt zwar mit geringerer Laserleistung aus, als nötig wäre, um das Kupfer, wie bei der Elektronenstrahlgravur aufzuschmelzen und zu verdampfen. Bei diesem Verfahren wird aber im Druckprozeß der verbleibende Kunststoff vom Lösungsmittel der Druckfarbe angegriffen und zersetzt, so daß nur eine geringe Druckauflage möglich ist. Dieses Verfahren hat sich in der Praxis nicht bewährt und ist nicht zum Einsatz gekommen.

Es ist weiterhin in der Druckschrift der VDD Seminarreihe "Direktes Lasergravierverfahren für metallbeschichtete Tiefdruckzylinder", herausgegeben im Rahmen eines "Kolloquium vom Verein Deutscher Druckingenieure e.V. und dem Fachgebiet Druckmaschinen und Druckverfahren, Fachbereich Maschinenbau, Technische Hochschule Darmstadt", von Dr. phil. nat. Jakob Frauchiger, MDC Max Dätwyler, AG, Darmstadt, 12. Dez. 1996, vorgeschlagen worden, mit Zink beschichtete Tiefdruckzylinder durch einen mit Bogenlampen gepumpten, gütegeschalteten Nd: YAG Hochleistungs-Festkörperlaser zu gravieren. Bei diesem Verfahren wird das Volumen der Näpfchen durch die optische Leistung des Lasers bestimmt. Die für die Gravur erforderliche Laserleistung wird über eine Lichtleitfaser, deren Austritt durch eine Vario-Fokussieroptik auf die Zylinderoberfläche abgebildet wird, auf die Zylinderoberfläche übertragen. Hierbei ist es erforderlich, die Fokussieroptik präzise auf konstantem Abstand zur Oberfläche zu halten, um den exakt definierten Durchmesser der Näpfchen zu gewährleisten.

Ein Nachteil dieses Verfahrens ist, daß die zum Pumpen des Lasers erforderlichen Bogenlampen eine relativ kurze Lebensdauer haben und nach ca. 500 Betriebsstunden ersetzt werden müssen. Bei einem Ausfall der Pumplichtquelle während der Gravur wird der Gravierzylinder unbrauchbar. Dies entspricht einem Ausfall des Diamantstichels bei der elektromechanischen Gravur und hat die gleichen Nachteile zur Folge. Ein vorbeugender Austausch der Bogenlampen ist kosten- und arbeitsintensiv, zumal damit zu rechnen ist, daß der Laserstrahl nach dem Austausch der Lampen in seiner Lage nachjustiert werden muß. Diese lampengepumpten Festkörperlaser haben außerdem einen sehr schlechten Wirkungsgrad, da das laseraktive Material nur einen geringen Bruchteil der angebotenen Energie aus der Pumpquelle, d.h. hier aus der Bogenlampe, absorbiert und in Laserlicht umsetzt. Dies bedeutet insbesondere bei hohen Laserleistungen einen hohen elektrischen Anschlußwert, hohe Betriebskosten für elektrische Energie und Kühlung und insbesondere einen erheblichen Aufwand für bauliche Maßnahmen aufgrund der Größe der Laser- und Kühleinheit. Der Raumbedarf ist so groß, daß die Lasereinheit sich aus Platzgründen außerhalb der Maschine befinden muß, was wiederum Probleme mit sich bringt, um die Laserleistung auf die Oberfläche des Druckzylinders zu bringen.

Ein entscheidender Nachteil dieses Verfahrens besteht darin, daß Zink wesentlich weicher als Kupfer ist und als Oberflächenmaterial für Druckzylinder nicht geeignet ist. Da es sich bei dem Rakelmesser, mit dem vor dem Druck in der Druckmaschine die überschüssige Farbe abgerakelt wird, um ein Stahlmesser handelt, wird die Zinkoberfläche nach einer gewissen Zeit beschädigt und der Druckzylinder wird unbrauchbar. Ein Druckzylinder mit einer Oberfläche aus Zink erreicht daher nicht annähernd eine so lange Standzeit im Druck, wie ein Druckzylinder mit einer Oberfläche aus Kupfer. Druckformen mit Zinkoberfläche sind deshalb nicht für hohe Auflagen geeignet.

Auch wenn man, wie weiterhin vorgeschlagen, die Zinkoberfläche nach der Gravur verchromt, um die Standzeit zu erhöhen, kommt die Standfestigkeit den normalen Kupferzylindern nicht nahe. Chrom haftet auf Zink nicht so gut, wie auf Kupfer und das sog. "Heißverchromen", das bei Kupferzylindern mit Erfolg angewendet wird, um eine optimale Haftung des Chroms auf dem Kupfer zu erreichen, ist bei Zink nicht möglich, da das Zink hierbei schmelzen würde. Da die Chromschicht nicht sehr gut auf dem Zink haftet, wird sie ebenfalls vom Rakelmesser angegriffen, was zu einem relativ frühen Ausfall der Druckzylinder führt. Werden dagegen Kupferzylinder nach diesem Verfahren verchromt, so sind enorm hohe Auflagen möglich, da das Chrom fest auf der Kupferoberfläche haftet, so daß diese Kupferzylinder die verchromten Zinkzylinder bei weitem übertreffen.

Aus der Druckschrift EP-B-O 473 973, die ebenfalls das im vorangehenden beschriebene Verfahren betrifft, geht hervor, daß bei diesem Verfahren zum Ausheben eines Näpfchens mit einem Durchmesser von 120 µm und einer Tiefe von 30 µm bei Zink eine Energie von 6 mWsec erforderlich ist. Für Kupfer wird in dieser Druckschrift eine Energie von 165 mWsec angegeben, was einen Faktor von 27,5 bei der erforderlichen Laserleistung ausmacht. Damit werden Laser mit einer Dauerstrichleistung von einigen Kilowatt bei guter Strahlqualität erforderlich, um Näpfchen in Kupfer mit einer für die Druckindustrie annehmbaren Geschwindigkeit herzustellen. Eine solche Leistung kann aber mit der im vorangehend beschriebenen Laseranordnung nicht erzeugt werden. Aus diesem Grunde ist es auch nur möglich, in eine Zinkoberfläche zu gravieren.

Mit einer solchen Laseranordnung, die aus einem einzigen Festkörperlaser besteht, ist es zwar möglich, Tiefdruckzylinder mit einer Zinkoberfläche zu bearbeiten, will man aber die Vorteile der Kupferoberfläche nutzen und bei Kupferzylindern bleiben und diese mit einem Laser gravieren, ist es unabdingbar, die zum Eindringen in die Oberfläche des Kupfers erforderliche hohe Leistungsdichte und die zum Aufschmelzen des Kupfers erforderliche hohe Energie aufzubringen. Dies ist aber bisher mit einem Festkörperlaser nicht gelungen.

Es ist bekannt, daß bei Festkörperlasern die Strahlqualität, d.h. die Fokussierbarkeit, mit steigender Leistung abnimmt. Hierdurch wäre es, selbst wenn man die Leistung der Festkörperlaser in die Höhe treibt oder mehrere Festkörperlaser auf das gleiche Näpfchen oder Partien davon richtet, nicht möglich, Kupferzylinder für den Tiefdruck mit einem solchen Laser zufriedenstellend zu gravieren, weil die zur Erzeugung der feinen Strukturen erforderliche Präzision des Laserstrahls, wie sie der Elektronenstrahl bietet, nicht erreicht werden kann. Würde man bei dieser Einrichtung die Laserleistung höher treiben, so entstünde ein weiteres Problem: Das Fokussieren hoher Strahlungsleistung in Lichtleitfasern ist bekanntlich schwierig. Die Fasern verbrennen bei hoher Leistung infolge Dejustierung an der Einkoppelstelle. Will man dies vermeiden, müßte man den Faserdurchmesser vergrößern, was aber wieder den Nachteil hat, daß der Faserdurchmesser auf der Bearbeitungsseite noch stärker verkleinert abgebildet werden muß. Eine verkleinerte Abb. führt aber zu einer Vergrößerung der numerischen Apertur auf der Bearbeitungsseite und demzufolge zu einer reduzierten Schärfentiefe auf der Bearbeitungsfläche. Man könnte zwar, wie vorgeschlagen, den Abstand zu der Bearbeitungsfläche konstant halten. Dringt der Strahl aber in die Materialoberfläche ein, so ergibt sich automatisch eine Defokussierung, welche die erforderliche Leistungsdichte und die exakte Punktgröße nachteilig beeinflußt. Da aber der Durchmesser des Bearbeitungsflecks und die Energie des Strahls die Größe des Näpfchens bestimmen, wird es dann schwierig, die Näpfchengröße exakt so zu treffen, wie es der gewünschte Tonwert erfordert. Hierzu wäre es weiterhin erforderlich, daß die Laserleistung exakt konstant ist und auch über die gesamte Zeit, die für eine Zylindergravur erforderlich ist, konstant bleibt. Ist dies nicht der Fall, ändert sich die Näpfchengröße und der Zylinder wird unbrauchbar. Dies kann nicht durch Änderung der Größe des Bearbeitungsflecks kompensiert werden, da es nicht möglich ist, den Bearbeitungsfleck ausreichend in seiner Form zu variieren.

Weiterhin ist bei einer solchen Anordnung ein aufwendiger Modulator erforderlich. Modulatoren für sehr hohe Laserleistungen sind bekanntlich langsam, was zu einer Verringerung der Modulationsfrequenz und damit der Gravierfrequenz führt. Ist die Gravierfrequenz aber zu gering, diffundiert die Energie in die Umgebung des Bearbeitungsfleckes auf der Bearbeitungsfläche, ohne ein Näpfchen auszuheben. Daher ist es erforderlich, neben der hohen Energie zum Ausheben auch eine hohe Leistung aufzubringen.

In der Druckschrift "Der Laser in der Druckindustrie" von Werner Hülsbusch, Seite 540, Verlag W. Hülsbusch, Konstanz, ist beschrieben, dass es bei der Materialbearbeitung besonders auf eine hohe Leistungsdichte ankommt. Bei Leistungsdichten ab typisch 10⁷ bis 10⁸ W/cm² kommt es bei allen Materialien zu einer spontanen Verdampfung des Materials, die verbunden ist mit einem sprunghaften Absorptionsanstieg, was besonders vorteilhaft ist, da dann die Laserleistung nicht mehr von der Metalloberfläche reflektiert wird. Hat man bspw. eine Laserquelle von 100 W zur Verfügung, so darf der Bearbeitungsfleck nicht größer als 10 µm sein, um in den Bereich dieser Werte zu kommen, wie aus folgender Gleichung hervorgeht: 100 W: (0,001 cm x 0,001 cm) = 10⁸ W/cm².

Aus der EP-A-0 580 394 ist eine Laserstrahlungsquelle niedriger bis mäßiger Leistung mit einer optischen Einheit zur Formung des Laserstrahls auf einer Bearbeitungsfläche bekannt, die mehrere Gallium-Arsenid-Laser aufweist. Die Ausgänge der Laser können in mehreren Spuren nebeneinander angeordnet sein. Der aus jedem Laser austretende Laserstrahl wird durch ein Faseroptikkabel zu der optischen Einheit geleitet, die den Strahl formt und auf die Bearbeitungsoberfläche bündelt. Dabei können die aus der optischen Einheit austretenden Laserstrahlen nebeneinander in mehreren Spuren auf die Bearbeitungsfläche auftreffen.

Aus der US-A 5 396 506 A sind bereits phasengekoppelte Fiberlaser bekannt, die jedoch sehr aufwendig in der Herstellung und nicht für den industriellen Einsatz geeignet sind. Die aus den Fiberlasern austretenden Laserstrahlen können dort auf ein optisches Element, zum Beispiel eine Linse, einfallen, welche die Laserstrahlen als Strahlen bündelt, die sich an einer vorbestimmten Stelle schneiden.

Aus der US-A 5 694 408 A ist ein Lasersystem bekannt, bei dem ein Master-Oszillator Strahlungsenergie kleiner Leistung ein primäres Lasersignal bei einer bestimmten Wellenlänge erzeugt. Das primäre Lasersignal wird in einem Verstärker optisch verstärkt, der einen ähnlichen Aufbau wie ein Fiberlaser besitzt, und wird dann in eine Mehrzahl von sekundären Lasersignalen aufgeteilt, die ebenfalls mit Verstärkern verstärkt werden. Die verstärkten sekundären Lasersignale können mit einer optischen Einheit aus einer Mehrzahl von Linsenelementen zu einem einzigen Laserausgangsstrahl höherer Leistung zusammengeführt werden. Zur steuerbaren Einstellung der jeweiligen Phasen der sekundären Lasersignale ist eine Mehrzahl von elektrooptischen Phasenmodulatorelementen erforderlich.

Aus der US-A 5 084 882 A ist ein phasengekoppeltes Lasersystem bekannt, das mehrere diodengepumpte Fiberlaser offenbart, wobei ein Teil der Ausgänge der Fiberlaser in mehreren Spuren nebeneinander angeordnet ist.

Aufgabe der vorliegenden Erfindung ist es, eine Laserstrahlungsquelle zur Materialbearbeitung, sowie eine Anordnung zur Materialbearbeitung mit einer solchen Laserstrahlungsquelle derart zu verbessern, dass auf kostengünstige Weise eine sehr hohe Leistungsdichte und Energie erzielt wird, und dass sowohl die Strahlform bezüglich Flexibilität, Präzision und Strahlpositionierung als auch die Strahlleistung selbst bei wesentlich höheren Laserleistungen exakt steuerbar sind.

Diese Aufgabe wird durch eine Laserstrahlungsquelle gemäß Anspruch 1 bzw. eine Anordnung zur Materialbearbeitung gemäß Anspruch 18 gelöst.

Vorteilhafte Weiterbildungen und Ausgestaltungen der Erfindung sind in den abhängigen Ansprüchen angegeben.

Diese Laserstrahlungsquelle besteht aus mehreren diodengepumpten Fiberlasern, auch Faserlaser genannt, deren Ausgangsstrahlenbündel am Bearbeitungsort nebeneinander, und/oder übereinander oder in einem Punkt oder Bündel auftreffen und somit die Erzeugung eines in Form und Größe gezielt variablen Bearbeitungsflecks auch bei sehr hohen Laserleistungen und extrem hohen Leistungsdichten ermöglicht. Diese Fiberlaser können gemäß der Erfindung als Dauerstrichlaser oder als gütegeschaltete Laser, auch Q-Switch-Laser genannt, ausgeführt sein, wobei sie in vorteilhafter Weise intern oder extern moduliert werden und/oder einen zusätzlichen Modulator aufweisen. Q-Switch-Laser verfügen innerhalb des Laserresonators über einen optischen Modulator, beispielsweise einen akustooptischen Modulator, der im geöffneten Zustand den Lasereffekt bei weiterhin vorhandener Pumpstrahlung unterbricht. Dadurch wird innerhalb des Laserresonators Energie gespeichert, die beim Schließen des Modulators auf ein Steuersignal hin als kurzer Laserimpuls hoher Leistung abgegeben wird. Q-Switch Laser haben den Vorteil, daß sie kurze Pulse hoher Leistung aussenden, was kurzzeitig zu einer hohen Leistungsdichte führt. Es wird im gepulsten Betrieb durch die kurzzeitigen Unterbrechungen im Bearbeitungsvorgang eine vorteilhafte Abführung des geschmolzenen und verdampften Materials ermöglicht. Man kann statt der Schaltung der Güte auch mittels interner oder externer Modulation einen gepulsten Betrieb erzeugen.

Der Bearbeitungsfleck kann gezielt in Form und Größe verändert werden, indem von den vorgesehenen Lasern verschieden viele zur Formgebung des Bearbeitungsflecks eingeschaltet werden können. Hierbei ist besonders vorteilhaft, daß die Tiefe des ausgehobenen Näpfchens unabhängig von seiner Form und Größe durch die Laserenergie bestimmt werden kann. Weiterhin kann durch eine Steuerung der Energie der einzelnen Laser jedes beliebige Strahlprofil innerhalb des Bearbeitungsflecks und damit auch jedes beliebige Profil innerhalb des Näpfchens erzeugt werden.

Weitere Vorteile der vorliegenden Erfindung gegenüber den bekannten Laserstrahlungsquellen bestehen darin, daß das Einkoppeln der Strahlungsleistung von einem Festkörperlaser in eine Lichtleitfaser entfallen kann, aber der Ausgang des Fiberiasers beugungsbegrenzte Strahlung liefert, die gemäß der Erfindung auf unter 10 µm Fleckdurchmesser fokussiert werden kann, wodurch eine extrem hohe Leistungsdichte bei größtmöglicher Schärfentiefe erreicht wird.

Bei einer herkömmlichen Anordnung mit Festkörperlasern liegt die Größe des Bearbeitungsflecks im Bereich von etwa 100 µm. Es ergibt sich also bei der vorliegenden Erfindung eine um den Faktor 100 verbesserte Leistungsdichte und eine um den Faktor 100 verbesserte Gestaltungsmöglichkeit in der Fläche des Bearbeitungsflecks.

Durch die hohe Präzision und durch den sehr fein gestaltbaren Bearbeitungsfleck lassen sich sehr feine Raster, u. a. auch die stochastischen, auch frequenzmodulierte Raster (FM-Raster) genannt, erzeugen und damit sehr glatte Kanten in Linien und Schriftzeichen wirtschaftlich herstellen, so daß der Tiefdruck dem Offsetdruck in der Druckqualität nicht länger unterlegen sein wird.

Weiterhin ist es möglich, durch die Betriebsweise der erfindungsgemäßen Laserstrahlungsquelle beliebige Rasterweiten mit beliebigen Rasterwinkeln zu verknüpfen und auf dem gleichen Druckzylinder an beliebigen Orten beliebig unterschiedliche Rasterweiten und beliebig unterschiedliche Rasterwinkel aufzubringen. Auch können Linienmuster und Text unabhängig vom Druckraster aufgebracht werden, solange man für genügend Stützstellen für das Rakelmesser sorgt.

Ein Vorteil der Erfindung besteht darin, daß die Unterschiede in der Datenaufbereitung für die Erstellung der Druckform zwischen Tiefdruck und Offsetdruck auf ein Minimum zusammenschmelzen, was erhebliche Kosten- und Zeiterspamisse mit sich bringt. Bisher werden die Daten für den Tiefdruck aus den bereits für Offsetdruck vorliegend Daten durch Konversion gewonnen, weil für die Ansteuerung des Graviersystems ein Signal erforderlich ist, das das Volumen eines Näpfchens bestimmt, wobei im Offsetdruck die Fläche eines Rasterpunktes bestimmt wird. Mit Hilfe der erfindungsgemäßen Laserstrahlungsquelle ist es infolge der Mehrfachanordnung von Lasern möglich, bei konstanter Tiefe die Fläche eines Näpfchens zu variieren, weshalb es nicht mehr erforderlich ist, die Daten für Offsetdruck in Daten für den Tiefdruck zu konvertieren. Die Daten für den Offsetdruck können direkt zur Gravur der Tiefdruckformen verwendet werden.

Ein weiterer Vorteil der Erfindung besteht darin, daß mit dieser Laserstrahlungsquelle sowohl die Fläche eines Näpfchens als die Tiefe unabhängig voneinander gesteuert werden können, was dazu führt, daß eine größere Anzahl von Tonwertstufen reproduzierbar erzeugt kann, was zu einem stabileren Herstellungsprozeß für die Druckzylinder und zu einem besseren Druckergebnis führt.

Weiterhin ist es ein wesentlicher Vorteil, daß die Energie problemlos mittels der Faser, nämlich dem Fiberlaser selbst, oder einer angeschweißten bzw. auf andere Weise angekoppelten Faser, von der Pumpquelle an die Bearbeitungstelle transportiert werden kann, was eine besonders einfache und raumsparende Konstruktion mit sich bringt.

Ein weiterer Vorteil der Erfindung liegt darin, daß der Wirkungsgrad einer solchen Anordnung mit Fiberlasern wesentlich höher ist, als der Wirkungsgrad von Festkörperlasern, denn für Fiberlaser werden Absorptionswirkungsgrade von über 60 Prozent erreicht, die bei herkömmlichen diodengepumpten Festkörperlasern nur bei etwa bei der Hälfte liegen und bei lampengepumpten Festkörperlasern noch weit geringer sind. Bei der erforderlichen Leistung von mehreren Kilowatt für eine effiziente Gravur von Tiefdruckzylindern ist der Wirkungsgrad der Laser von enormer Bedeutung für die Anlagenkosten und die Betriebskosten.

Desweiteren ergibt sich bei einer Mehrfachanordnung von Lasern der Vorteil, daß der Ausfall eines Lasers weniger kritisch ist, als bei einer einkanaligen Anordnung. Fällt bei der einkanaligen Anordnung der einzig vorhandene Laser während der Gravur eines Druckzylinders aus, ist der gesamte Druckzylinder unbrauchbar. Fällt aber bei einer Mehrfachanordnung ein Laser aus, dann kann man die Leistung der verbleibenden Laser beispielsweise geringfügig erhöhen, um den Ausfall zu kompensieren. Nach dem Abschluß der Gravur kann dann der ausgefallenene Laser ersetzt werden.

In der Dissertation "Leistungsskalierung von Faserlasern", Fachbereich Physik der Universität Hannover, Dipl.- Phys. Holger Zellmer, 20.06.96, sind Fiberlaser als bekannt beschrieben worden. Diese Laser sind aber bereits 1963 von Snitzer und Köster vorgeschlagen worden, ohne daß man sie bisher für die Materialbearbeitung bei hohen Leistungen eingesetzt hat. Mit den in dieser Dissertation beschriebenen Lasern können zwar prinzipiell Leistungen bis zu 100 W erreicht werden, aber es sind keine brauchbaren Anordnungen bekannt, diese Laser für die Zwecke der vorliegenden Erfindung einzusetzen.

Aus der Druckschrift WO-A-95/16294 sind bereits phasengekoppelten Fiberlaser beschrieben worden, aber sie sind sehr aufwendig in der Herstellung und nicht für den industriellen Einsatz geeignet. Es ist bisher nicht erkannt worden, Laser dieses einfachen Typs auf die vorgeschlagene einfache Weise auf hohe Leistungsdichte und Energie zu bringen und zur abtragenden Materialbearbeitung einzusetzen.

Beispielsweise muß die Resonatorlänge der einzelnen Laser auf den Bruchteil eines Mikrometers genau konstant gehalten werden, wozu sogenannte "piezoelectric fiber stretchers" eingesetzt werden. Durch den komplexen Aufbau bedingt, ist es ebenfalls nicht möglich, die Lasereinheit modular, das heißt aus einfach zusammenzufügenden und vielfach zu verwendenden Komponenten aufzubauen oder einzelne Laserkomponenten bei Bedarf im Feld zu tauschen. Auch sind die optischen Verluste infolge der großen Anzahl der optischen Komponenten innerhalb eines phasengekoppelten Lasers sehr hoch und die Pumpstrahlungs-Absorption des laseraktiven Mediums ist gering, was einen geringen Wirkungsgrad der Anordnung zur Folge hat. Obwohl Fiberlaser an sich nicht sehr anfällig gegen Rückreflektionen sind, weisen phasengekoppelte Laser prinzipbedingt eine große Empfindlichkeit gegen Rückreflektionen auf, d.h. wenn Anteile der ausgesendeten Strahlung durch Reflexion oder Streuung zurück in den Laserresonator gelangen, wie es bei der Materialbearbeitung unvermeidbar ist. Diese Rückreflektionen führen zu unkontrollierten Ausgangsamplituden und können den Laser zum Aussetzen bringen. Es sind zwar sogenannte optische Isolatoren bekannt, die solche Rückreflexionen dämpfen sollen, in der Praxis aber eine ganze Reihe von Nachteilen mit sich bringen, wozu beispielsweise die optischen Verluste, der hohe Preis und die unzureichenden Dämpfungseigenschaften gehören. Die Laser für den erfindungsgemäßen Zweck der Materialbearbeitung müssen nicht nur eine hohe Leistungsdichte aufweisen, sondern auch die erforderliche Energie zum Ausheben der Näpfchen liefern können, in der ausgesendeten Strahlung sehr stabil sein und einen sehr guten Wirkungsgrad haben.

Weiterhin ist in der Druckschrift US-A-5,694,408 ein Lasersystem vorgeschlagen worden, bei dem ein Master-Oszillator Strahlungsenergie kleiner Leistung bei einer bestimmten Wellenlänge erzeugt, die optisch verstärkt wird und zur weiteren Nachverstärkung auf mehrere Nachverstärker verteilt wird, um dann wieder zu einem gemeinsamen Strahl vereinigt zu werden, wozu eine präzise Phasennachführung der einzelnen nachverstärkten Signale erforderlich ist, um Interferenzen im Ausgangssignal zu vermeiden. Das erfordert komplizierte Meß- und Regelvorgänge und aufwendige Stellglieder, wozu beispielsweise elektrooptische Phasenmodulatoren eingesetzt werden müssen, die sehr teuer sind und mit sehr hohen Spannungen betrieben werden müssen.

Weiterhin ist in der Druckschrift US-A-5,084,882 ein phasengekoppeltes Lasersystem angegeben, das mehrere Fasern bzw. Faserkerne in einem Bündel verwendet, deren Kern einerseits groß gegenüber ihrem Mantel bzw. ihrem Abstand sein muß, um die Phasenkopplung zu erreichen, andererseits aber nur einige Mikrometer im Durchmesser haben darf, da es sich um Single-Mode-Fibern handelt. Dieses System ist hauptsächlich als optischer Verstärker vorgesehen.

Ein weiteres, ebenfalls sehr komplex ausgeführtes, phasengekoppeltes Lasersystem, bestehend aus mehreren sogenannten "sub-oscillators", ist in der Druckschrift GB-A-21 54 364 unter der Bezeichnung "Laser assemblies" bereits im Jahre 1984 beschrieben worden, aber es sind bisher keine industriemäßigen Realisierungen mit solchen phasengekoppelten Lasersystemen bekannt geworden.

Es ist auch bisher nicht vorgeschlagen worden, mehrere der eingangs erwähnten Fiberlaser in einer einfachen Art, d.h. ohne eine komplexe Phasenkopplung oder dergleichen zu einer kompakten, robusten und servicefreundlichen Laserstrahlungsquelle für die Materialbearbeitung zusammenzufassen und beispielsweise zur mehrspurigen Aufzeichnung anzuwenden. Eine erfindungsgemäße Mehrfachanordnung solcher einfachen, in Mengen sehr kostengünstig herstellbarer Laser in mehreren Spuren und Ebenen bringt für die Zwecke der Erfindung enorme Vorteile, die man sich sicherlich nicht hätte entgehen lassen, wenn man die erfindungsgemäße Lösung gekannt hätte.

Ein weiterer Vorteil der Fiberlaser ist ihre deutlich geringere Neigung zu Oszillationen, wenn Energie zurück in den Laser gelangt. Gegenüber herkömmlichen Festkörperlasern weisen Fiberlaser in ihrer Übertragungsfunktion eine um eine Grö-βenordnung geringere Resonanzüberhöhung auf, was sich im Betrieb sehr positiv bewährt hat. Bei der Materialbearbeitung kann man nämlich nicht immer verhindern, daß Energie von der Bearbeitungsstelle zurück in den Laser reflektiert wird, weil das schmelzende Material explosionsartig in nicht vorhersagbare Richtungen geschleudert wird und dabei durch den Laserstrahl fliegt, bevor es durch besondere Maßnahmen, die in einer Ausführungsform der Erfindung dargelegt sind, entfernt und unschädlich gemacht werden kann.

Ein wesentlicher Vorteil der Mehrfachanordnung von Fiberlasern ohne Phasenkopplung besteht darin, daß im Fall einer Rückreflexion die einzelnen Laser sich unterschiedlich verhalten. Dies hängt damit zusammen, daß beispielsweise einige der Laser gar nicht von einer Rückreflexion betroffen sind, andere möglicherweise erst mit einer Verzögerung. Deshalb ist die Wahrscheinlichkeit groß, daß sich Oszillationen der einzelnen Laser, wenn sie überhaupt auftreten, so überlagern werden, daß sie keinen negativen Einfluß auf die Qualität des Ergebnisses der Gravur haben werden.

Die erfindungsgemäße Laserstrahlungsquelle kann mit Vorteil auch für alle anderen Arten der Materialbearbeitung oder Materialübertragung eingesetzt werden, bei denen es auf hohe Leistungsdichte, hohe Energie und große Präzision oder auch auf hohe optische Auflösung ankommt. Neben der Gravur von Tiefdruckzylindern mit einer Kupferoberfläche können andere Materialien wie z. B. alle Metalle, Keramik, Glas, Halbleitermaterialien, Gummi oder Kunststoffe bearbeitet werden und/oder Materialien von speziell präparierten Trägermaterialien abgelöst und auf andere Materialien mit hoher Geschwindigkeit und hoher Präzision übertragen werden. Außerdem können neben unbeschichteten auch mit Masken beschichtete Tiefdruckzylinder, Druckplatten oder Druckzylinder sowie alle Arten von Druckformen mit hoher Geschwindigkeit und mit hoher Auflösung für den Offset-, Hoch-, Sieb-, Flexodruck und alle anderen Druckverfahren hergestellt bzw. bearbeitet werden. Beispielsweise können ebenfalls die für den Druck sehr hoher Auflagen im Offsetdruck verwendeten Offsetdruckplatten mit Metallbeschichtung (Bimetallplatten) und ähnliche Materialien umweltfreundlich bebildert werden, was bisher nur mittels Ätzung möglich war.

Weiterhin können Materialien bearbeitet werden, die eine magnetisierbare Oberfläche enthalten, indem die durch einen Vormagnetisierungsprozeß großflächig magnetisierten Partien des Materials durch kurzzeitiges Erhitzen ausgewählter Bearbeitungspunkte auf Temperaturen, die über dem Curiepunkt liegen, mittels der erfindungsgemäßen Laserstrahlungsquelle entmagnetisiert werden. Für Anwendungen in der Drucktechnik kann das in solcher Weise bebilderte Material in Verbindung mit einem entsprechenden Toner als Druckvorlage dienen.

Durch die hohe Leistungsdichte der erfindungsgemäßen Laserstrahlungsquelle bedingt, ist es auch möglich, Chrom direkt zu bearbeiten. Damit können beispielsweise Druckzylinder aus Kupfer für den Tiefdruck bereits vor der Lasergravur verchromt werden, was nach der Gravur einen Arbeitsgang einspart und der Aktualität zugute kommt. Da auch das Ausdruckverhalten eines in Kupfer gravierten Näpfchens besser ist, als das eines verchromten Näpfchens, und sein Volumen präziser ist, ergibt dieses Verfahren neben der hohen Standzeit durch die verbleibende Chromschicht und der verbesserten Aktualität auch noch bessere Druckergebnisse.

Die Anwendung der erfindungsgemäßen Laserstrahlungsquelle ist aber nicht auf Anwendungen in der Drucktechnik beschränkt, sondern sie kann überall dort eingesetzt werden, wo es darauf ankommt, mit Lasern bei hoher Auflösung und hoher Geschwindigkeit durch Energieeinstrahlung Material abzutragen oder in seinen Eigenschaften zu verändern. So können zum Beispiel die bereits erwähnten Texturwalzen auch mit der erfindungsgemäßen Laserstrahlungsquelle hergestellt werden. Weiterhin können die Muster von Leiterbahnen für Leiterplatten inklusive der Bohrungen für die Bauelemente vorzugsweise für mehrlagige Leiterplatten durch Abtragen des Kupferlaminats und Stehenlassen der Leiterbahnen und durch Abtragen von Kupferlaminat und Träger an den Stellen der Bohrungen erzeugt werden. Auch können Materialoberflächen durch partielle Erhitzung partiell in ihrer Oberflächenstruktur verändert werden. Beispielsweise lassen sich auf diese Weise großflächig sehr feine Strukturen in der Härte von Materialoberflächen erzeugen, was besonders für Lagerflächen von Vorteil ist, da hierdurch die Lagereigenschaften gezielt beeinflußt werden können. Weiterhin gibt es nichtleitende keramikartige Materialien, an deren Oberfläche durch Energieeinstrahlung Metall auskristallisiert, was in Verbindung mit der erfindungsgemäßen Laserstrahlungsquelle für Anwendungen, die eine hohe Auflösung benötigen, beispielsweise zur Erzeugung von Leiterbahnen, nutzbar gemacht werden kann.

Dabei können die Laserstrahlen auf die verschiedensten Arten an den Bearbeitungsfleck geführt und über das Material gelenkt werden, zum Beispiel kann das zu bearbeitende Material sich auf einer rotierenden Trommel befinden, an der die Strahlungsquelle relativ vorbeigeführt wird. Es kann sich aber auch das Material in einer Ebene befinden, über die die Laserstrahlungsquelle oder ihre Ausgangsstrahlung relativ vorbeigeführt werden. Beispielsweise kann zu diesem Zweck in einer Flachbett-Anordnung, wie sie in der bereits erwähnten Druckschrift "Der Laser in der Druckindustrie" von W. Hülsbusch in Abb. 7- 28 auf Seite 431 dargestellt ist und ebenfalls in der Druckschrift EP-A-0 041 241 gezeigt ist, die dort als Argon- oder He Ne-Laser beschriebene bzw. in Fig. 3 der Druckschrift als. Laserlichtquelle (4) dargestellte Strahlungsquelle durch die erfindungsgemäße Laserstrahlungsquelle ausgetauscht werden, um die Vorteile der erfindungsgemäßen Laserstrahlungsquelle zu nutzen. Weiterhin kann sich das zu bearbeitende Material innerhalb eines Hohlzylinders befinden, über den die Laserstrahlungsquelle oder ihre Ausgangsstrahlung in einer Relativbewegung streicht.

Auch kann erfindungsgemäß der Ausgang der Laserstrahlungsquelle mit einer veränderbaren Anzahl von Spuren, deren gegenseitige Abstände variierbar sind, vorzugsweise ähnlich einem langen Kamm ausgeführt werden, der relativ zu dem zu bebilderndem Material bewegt wird. Eine solche Anordnung ist aus der Druckschrift US-A-5,430,816 bekannt. Dort wird vorgeschlagen, die Strahlung eines etwa 50 Watt starken Excimerlasers auf ein Bündel aus sogenannten Stufenindexfasern von 50 bis 800 Mikrometern im Durchmesser zu richten und jeweils einen Teil der Strahlung in die einzelnen Fasern einzukoppeln. Der Austritt jeder Faser wird dann über jeweils eine Sammellinse von 60 mm Durchmesser auf das Werkstück abgebildet, wobei der Abstand zwischen den einzelnen Bearbeitungspunkten mindestens 60 mm betragen muß und je Sammellinse eine Schutzvorrichtung gegen Verschmutzung erforderlich wird. Nachteilig ist, daß damit nur ein Bruchteil der Laserenergie in die jeweiligen Fasern gelangt, die Energieverteilung sehr unterschiedlich ausfällt und sich bei der Bewegung der Fasern Änderungen in der Austrittsleistung ergeben, weswegen zu deren Vermeidung sogenannte Scrambler eingesetzt werden müssen, die aber den Wirkungsgrad der Anlage nachteilig beeinflussen und die Kosten erhöhen. Mit einer solchen Anordnung lassen sich nur relativ ungenaue Bohrungen von etwa 130 Mikrometern Durchmesser in Kunststoffen herstellen. Die Pulsrate des Lasers ist für alle gleichzeitig angefertigten Bohrungen gleich, so daß alle Bohrungen gleich groß ausgeführt werden müssen. Außerdem ist die Anlage relativ langsam, denn ein Bohrvorgang liegt zwischen ein und zwei Sekunden. Eine Anordnung mit Fiberlasern bringt demgegenüber enorme Vorteile; die Geschwindigkeit läßt sich um mehrere Größenordnungen steigern und es lassen sich auch Metalle bearbeiten, die Präzision ist erheblich größer, da Fiberlaser auch bei Bewegung der Laserfiber eine stabile Ausgangsleistung zeigen, und es können problemlos Bohrungen unter 10 Mikrometer im Durchmesser ausgeführt werden. Da jeder Fiberlaser getrennt moduliert werden kann, sind unterschiedliche Bearbeitungsmuster möglich. Weiterhin lassen sich die Abschlußstücke der Fiberlaser problemlos keiner als 2,5 mm im Durchmesser ausführen, was einen deutlich geringeren Abstand zwischen den Bearbeitungsspuren ermöglicht. Dadurch ist es auch möglich, eine gemeinsame Schutzvorrichtung gegen die Verschmutzung der Optiken zu verwenden.

Ein weiteres Beispiel für die Anwendung der erfindungsgemäßen Laserstrahlungsquelle, bei der das Material vorzugsweise in einer Ebene angeordnet ist, ergibt sich in der Halbleiterindustrie bei der Bearbeitung von sogenannten "Wafem", das sind meist kreisförmige Scheiben aus geeignetem Halbleitermaterial, die beispielsweise geritzt oder geschnitten oder mit allen erdenklichen Mustern in der Oberfläche versehen werden können, wie sie sich bisher nur durch zeitraubende und nicht umweltfreundliche chemische Ätzprozesse herstellen lassen.

Für das mehrkanalige Schneiden und Ritzen von Materialien ist erfindungsgemäß eine vereinfachte Ausführungsform der Laserstrahlungsquelle möglich, wie sie in der deutschen Patentanmeldung P 198 40 936.2 des Anmelders "Anordnung zum mehrkanaligen Schneiden und Ritzen von Materialien mittels Laserstrahlen" beschrieben ist.

Eine weitere erfindungsgemäße Anwendung der Laserstrahlungsquelle ist bei der Herstellung von Monitoren und Displays gegeben. Beispielsweise lassen sich die Lochmasken für Farbbildschirme, sowie die Masken der sogenannten Flachbildschirme oder LCD-Displays umweltfreundlicher mit Laserbearbeitung, als durch die bisher praktizierten chemischen Ätzverfahren herstellen, indem die erfindungsgemäße Laserstrahlungsquelle angewendet wird.

Ein erheblicher Vorteil der erfindungsgemäßen Laserstrahlungsquelle ist, daß sie ein geringes Volumen hat und über eine flexible Verbindung, nämlich die Laserfibern oder daran angeschlossene Fasern zwischen der Pumpquelle und dem Austritt der Strahlung am Bearbeitungsort verfügt und dadurch alle denkbaren Betriebslagen der Laserstrahlungsquelle oder ihres Strahlungsaustritts zuläßt. Deshalb gibt es auch für die räumliche Anordnung der Bearbeitungsfläche keine Einschränkungen, da sie in einer beliebigen Lage im Raum angeordnet werden können.

Ein weiterer Vorteil der Erfindung liegt darin, daß die Strahlenbündel der einzelnen Laser mit definierten Werten in Strahldurchmesser, Strahldivergenz, Zentrierung und Winkelrichtung genau und dauerhaft in einem Abschlußstück (Terminator) gefaßt werden können, wodurch eine fertigungs- und servicegerechte Anordnung zur Weiterleitung der Laserstrahlung auf die Bearbeitungsfläche geschaffen werden kann. Die Strahlenbündel können dabei erfindungsgemäß je nach Anwendungsfall z. B. als Pumpfleck in die Fiber eingekoppelt und/oder als paralleler Laserstrahl ausgekoppelt werden, an der Austrittsstelle divergieren oder z.B. in einem gewissen Abstand von der Austrittsstelle fokussiert sein. Dabei besteht der Wunsch, das Abschlußstück möglichst klein auszubilden und mit einer oder mehreren Passungen als Referenzfläche oder Referenzflächen für die Ausrichtung des Laserstrahls zu versehen.

Dies wird gemäß der Erfindung dadurch erreicht, daß die Lichtleitfaser in dem Abschlußstück gefaßt und die Lage der Lichtleitfaser und/oder die Lage des austretenden Strahlenbündels genau justiert wird. Mittels der genauen Justierung und einer erfindungsgemäßen entsprechend räumlich kleinen Ausführung der Abschlußstücke, die infolge einer besonderen Formgebung zudem noch besonders einfach aneinander gereiht werden können, wird es möglich, die Strahlenbündel mehrerer Fiberlaser so zusammenzufassen und zu bündeln, daß die jeweils gestellte Aufgabe gelöst wird und gleichzeitig eine wirtschaftliche Fertigung sowie eine kostengünstige Wartung der Laserstrahlungsquelle ermöglicht wird.

Die Erfindung wird im folgenden anhand der Figuren 1 bis 44a näher erläutert.

Es zeigen:
- Fig. 1: eine Prinzipdarstellung der Laserstrahlungsquelle,
- Fig. 2: eine Prinzipdarstellung eines Fiberlasers (Stand der Technik),
- Fig. 2a: eine verkürzte Darstellung der Fiber des Fiberlasers (Stand der Technik),
- Fig. 3: einen Querschnitt durch eine Anordnung zur Materialbearbeitung mit einer erfindungsgemäßen Laserstrahlungsquelle,
- Fig. 4: eine Darstellung einer Laserkanone zu der erfindungsgemäßen Laserstrahlungsquelle mit einer Mehrfachanordnung von Fiberlasern,
- Fig. 4a: eine perspektivische Darstellung zu der Fig. 4,
- Fig. 4b: eine Variante zur Fig. 4,
- Fig. 4c: eine weitere Variante zu Fig. 4 und 4b,
- Fig. 5: ein Beispiel für ein Abschlußstück (Terminator) für die Auskopplung der Strahlung aus einer Faser bzw. der Fiber eines Fiberlasers,
- Fig. 5a: ein Beispiel einer Mehrfachanordnung für mehrere Abschlußstücke,
- Fig. 5b: ein Beispiel für ein Abschlußstück mit Justierschrauben,
- Fig. 5c: einen Querschnitt durch das Abschlußstück gemäß Fig. 5b im Bereich der Justierschrauben,
- Fig. 6: ein Beispiel eines Abschlußstücks mit kugelförmigen Justierelementen,
- Fig. 6a: einen Querschnitt durch das Abschlußstück gemäß Fig. 6 im Bereich der kugelförmigen Justierelemente,
- Fig. 7: ein Beispiel einer Ausführung eines Abschlußstücks mit einer konischen Passung zum Einsatz in eine Fassung,
- Fig. 8: ein Beispiel für eine Mehrfachfassung für mehrere Abschlußstücke,
- Fig. 8a: die rückwärtige Befestigung der Abchlußstücke gemäß Fig. 8,
- Fig. 9: ein Beispiel für eine Ausführungsform mit quadratischem Querschnitt,
- Fig. 9a: ein Querschnitt durch das Abschlußstück gemäß Fig. 9,
- Fig. 10: ein Beispiel für ein Abschlußstück mit rechteckförmigem Querschnitt und einer trapezförmigen Draufsicht,
- Fig. 10a: einen Längsschnitt durch das Abschlußstück gemäß Fig. 10,
- Fig. 10b: einen Querschnitt durch das Abschlußstück gemäß Fig. 10,
- Fig. 11: ein Beispiel für ein Abschlußstück mit trapezförmigem Querschnitt,
- Fig. 11a: ein Beispiel für ein Abschlußstück mit dreieckigem Querschnitt,
- Fig. 12: ein Beispiel für ein Abschlußstück mit wabenförmigem Querschnitt,
- Fig. 13: eine modulare Ausführung der Fiber des Fiberlasers gemäß Fig. 1,
- Fig. 14: ein Beispiel für die Einkopplung der Pumpenergie in die Fiber des Fiberlasers gemäß Fig. 13,
- Fig. 15: ein Beispiel für einen Fiberlaser mit zwei Ausgängen,
- Fig. 16: ein Beispiel zum Zusammenführen zweier Fiberlaser,
- Fig. 17: eine schematische Darstellung des Strahlengangs durch einen akustooptischen Ablenker bzw. Modulator,
- Fig. 18: das Ausblenden von nicht gewünschten Teilstrahlen eines akustooptischen Ablenkers bzw. Modulators,
- Fig. 18a: eine Anordnung mit einem elektrooptischen Modulator,
- Fig. 19: eine Draufsicht auf einen vierkanaligen akustooptischen Modulator,
- Fig. 19a: einen Schnitt durch den Modulator nach Fig. 19,
- Fig. 20: einen prinzipiellen Strahlengang für eine Draufsicht zu Fig. 4,
- Fig. 21: einen prinzipiellen Strahlengang für eine Draufsicht zu Fig. 4b,
- Fig. 22: einen prinzipiellen Strahlengang für eine Draufsicht zu Fig. 4c,
- Fig. 23: einen Strahlengang für Abschlußstücke, die unter einem Winkel zueinander angeordnet sind,
- Fig. 24: eine Variante der Fig. 23, die einen mehrkanaligen akustooptischen Modulator enthält,
- Fig. 24a: eine Variante zu Fig. 24,
- Fig. 25: eine Zwischenabbildung zur Anpassung der Fiberlaser bzw. ihrer Abschlußstücke beispielsweise an den Modulator,
- Fig. 26: das Zusammenführen von zweimal vier Spuren der Strahlenbündel aus Abschlußstücken mittels einer Streifenspiegelanordnung,
- Fig. 26a: eine Draufsicht zur Fig. 26,
- Fig. 27: eine Ansicht eines Streifenspiegels,
- Fig. 27a: eine Schnittzeichnung durch den Streifenspiegel nach Fig. 27,
- Fig. 27b: ein weiteres Beispiel für einen Streifenspiegel,
- Fig. 28: das Zusammenführen von zweimal vier Spuren der Strahlenbündel aus Abschlußstücken mittels eines wellenlängenabhängigen Spiegels,
- Fig. 28a: eine Draufsicht zur Fig. 28,
- Fig. 29: eine Anordnung von mehreren Abschlußstücken in mehreren Spuren und in mehreren Ebenen,
- Fig. 30: eine Anordnung von mehreren Abschlußstücken in einem Bündel,
- Fig. 31: eine Schnittzeichnung durch die Strahlenbündel aus den Abschlußstükken der Fiberlaser F1 bis F3 gemäß Fig. 29 oder Fig. 30,Fig. 32 eine Anordnung mit mehreren Abschlußstücken in mehreren Spuren und mehreren Ebenen mit einer Zylinderoptik zur Anpassung beispielsweise an den Modulator,
- Fig. 33: eine Variante der Fig. 32,
- Fig. 34: ein Mundstück für die Laserkanone mit Anschlüssen für Druckluft und zur Absaugung des vom Strahl freigesetzten Materials,
- Fig. 35: eine Verdrehung der Laserkanone zur Einstellung des Spurabstandes,
- Fig. 36: eine Darstellung zur Erzeugung von vier Spuren mit einem akustooptischen Mehrfachablenker bzw. Mehrfachmodulator,
- Fig. 36a: eine räumliche Darstellung eines akustooptischen Mehrfachablenkers bzw. Mehrfachmodulators,
- Fig. 36b: eine erweiterte Ausführungsform zu Fig. 36a,
- Fig. 36c: eine Draufsicht zu Fig. 36b
- Fig. 37: eine Darstellung zur Erzeugung von Mehrfachspuren mit Hilfe eines akustooptischen Mehrfachablenkers bzw. Mehrfachmodulators,
- Fig. 38: eine vorteilhafte Anordnung zur Vermeidung von Rückreflexionen in die Laser,
- Fig. 39: eine Linse, die von einem Kühlmittel umflossen wird,
- Fig. 39a: einen Schnitt durch eine Fassung für die Objektivlinse,
- Fig. 40: einen Fiberlaser oder eine Faser, die an ihrem Austrittsende in ihrem Querschnitt deutlich reduziert worden sind,
- Fig. 40a: eine Draufsicht auf das Ende des Fiberlasers oder der Faser nach Fig. 40,
- Fig. 40b: eine Seitenansicht des Faserendes, in der die Achsen der austretenden Strahlenbündel nahezu parallel verlaufen,
- Fig. 40c: eine Seitenansicht des Faserendes, in der sich die Achsen der austretenden Strahlenbündel außerhalb des Faserbündels überschneiden,
- Fig. 40d: eine Seitenansicht des Faserendes, in der sich die Achsen der austretenden Strahlenbündel innerhalb des Faserbündels überschneiden,
- Fig. 41: eine Anordnung von Fiberlasern oder Fasern gemäß Fig. 40 in mehreren Spuren und Ebenen,
- Fig. 42: eine weitere Ausführungsform der Laserstrahlungsquelle,
- Fig. 42a: eine weiterführende Ausführungsform nach Fig. 42,
- Fig. 42b: ein Schnittzeichnung der Fig. 42a,
- Fig. 42c: eine Darstellung eines Roboters,
- Fig. 43: eine Flachbett-Anordnung mit der erfindungsgemäßen Laserstrahlungsquelle,
- Fig. 43a: eine Ergänzung zu Fig. 43,
- Fig. 43b: eine Schnittzeichnung durch eine Anordnung zur Entfernung des bei der Bearbeitung freigesetzten Materials,
- Fig. 44: eine Hohlbett- Anordnung mit der erfindungsgemäßen Laserstrahlungsquelle und
- Fig. 44a: eine Ergänzung zu Fig. 44.

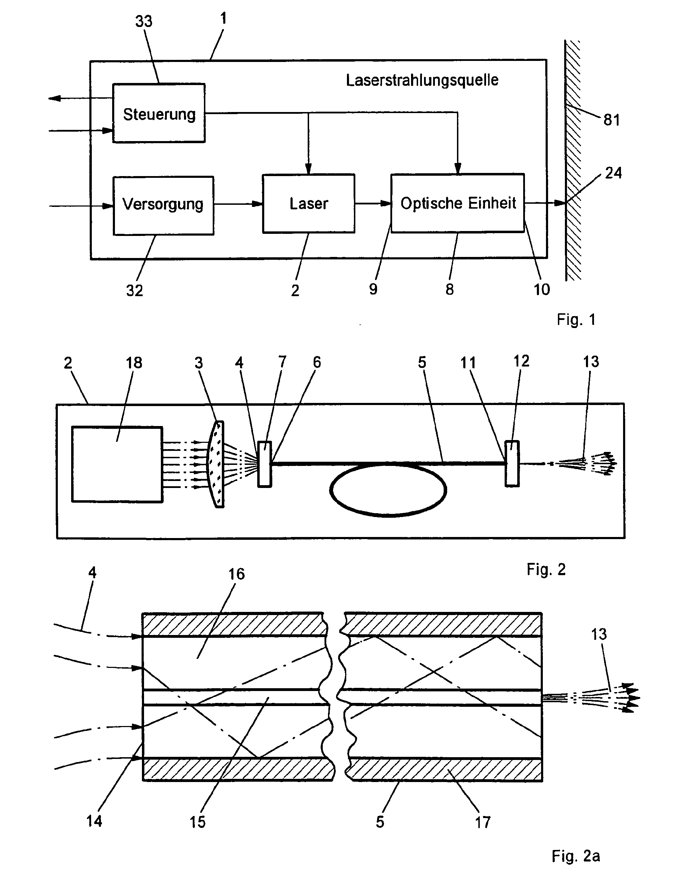

In Fig. 1 ist eine Laserstrahlungsquelle 1 dargestellt, die aus mehreren, erfindungsgemäß vorzugsweise als Module ausgeführten, diodengepumpten Fiberlasern (2), auch Faserlaser genannt, besteht, die von einer vorzugsweise modularen Versorgung 32 mit elektrischer Energie beaufschlagt werden, die größtenteils in Laserstrahlung umgesetzt wird. Weiterhin ist eine Steuerung 33 vorgesehen, über die die Modulation der Strahlung vorgenommen wird und die für das Zusammenwirken der Laserstrahlungsquelle mit ihrer Peripherie sorgt. Die Ausgangsstrahlen der Laser treten am Strahlungseingang 9 in eine optische Einheit 8 ein und am Strahlungsausgang 10 aus der optischen Einheit aus. Die Aufgabe der optischen Einheit 8 ist die Formung der Laserstrahlung zu einem Bearbeitungsfleck 24 auf einer Bearbeitungsfläche 81, es kann aber auch die Laserstrahlung ohne optische Einheit direkt auf die Bearbeitungsfläche gerichtet werden.

In den Fig. 2 und 2a wird der prinzipielle Aufbau einer Fiberlaser-Anordnung (2), auch Faserlaser-Anordnung genannt, gezeigt. In Fig. 2 wird die Energie einer Pumpquelle wie z. B. einer Laserdiode, hier Pumpquelle 18 genannt, über eine Einkoppeloptik 3 zu einem geeigneten Pumpfleck 4 geformt und in die Laserfiber 5 eingekoppelt. Solche Pumpquellen sind z.B. in der deutschen Patentanmeldung P 196 03 704 des Anmelders beschrieben. Typische Pumpquerschnitte der Laserfibern liegen etwa zwischen 100 µm und 600 µm Durchmesser bei einer numerischen Apertur von etwa 0,4. Die Laserfiber 5 ist auf der Einkoppelseite 6 mit einem Einkoppelspiegel 7 versehen, der die Pumpstrahlung ungehindert durchläßt, für die Laserstrahlung aber eine 100 %ige Reflexion aufweist. Der Einkoppelspiegel 7 kann mit einer geeigneten Halterung oder durch Kleben an dem Faserende befestigt sein, er kann aber auch durch direktes Aufdampfen einer geeigneten Schicht, wie sie bei Einkoppelspiegeln für Laser verwendet wird, auf das Faserende realisiert werden. Auf der Auskoppelseite 11 der Laserfiber 5 ist ein für die Laserstrahlung teildurchlässiger Auskoppelspiegel 12 angebracht, durch den die Laserstrahlung 13 ausgekoppelt wird. In vorteilhafter Weise weist der Auskoppelspiegel für die Pumpstrahlung eine 100%ige Reflexion auf. Hierdurch wird die restliche Pumpstrahlung wieder zurück in die Lichtleitfaser reflektiert, was vorteilhaft ist, da die Pumpenergie besser ausgenutzt wird und außerdem nicht bei der Anwendung der Laserstrahlung stört. Der Auskoppelspiegel kann wie beim Einkoppelspiegel, ebenfalls durch Aufdampfen hergestellt werden.

In Fig. 2a ist der Einkoppelvorgang der Pumpstrahlung in den Pumpquerschnitt 14 der Laserfiber 5 näher dargestellt. Die Energie im Pumpfleck 4 regt auf ihrem Weg durch die Faser die Laserstrahlung im Kern 15 der Laserfiber 5 an. Der Pumpkern 16 ist von einem Mantel 17 umgeben. Der etwa 5 µm bis 10 µm starke Kern der Laserfiber ist vorwiegend mit Seltenen Erden dotiert.

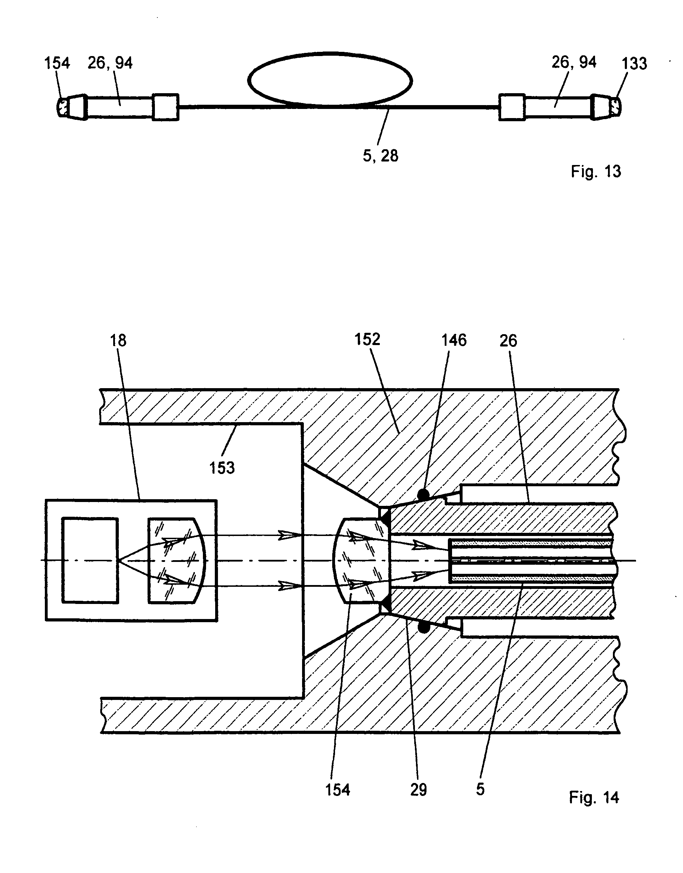

Der relativ große Pumpquerschnitt 14 vereinfacht das Einkoppeln der Pumpenergie und ermöglicht den Einsatz einer einfach lösbaren Verbindung zwischen Pumpquelle und Laserfiber, wie in den Fig. 13 und 14 gezeigt wird. Dabei kann das pumpquellenseitige Abschlußstück der Laserfiber in vorteilhafter Weise baugleich sein mit dem Abschlußstück auf der Auskoppelseite, es muß es aber nicht. Eine präzise Steckverbindung zwischen Pumpquelle und Laserfiber bietet erhebliche Vorteile bei der Fertigung der Fiberlaser und im Servicefall. Die Laserfiber kann aber auch fest mit der Pumpquelle zu einem Lasermodul verbunden sein. Infolge des gezielt hergestellten, sehr geringen Faserkerndurchmessers liefert der Fiberlaser am Austritt eine praktisch beugungsbegrenzte Laserstrahlung 13.

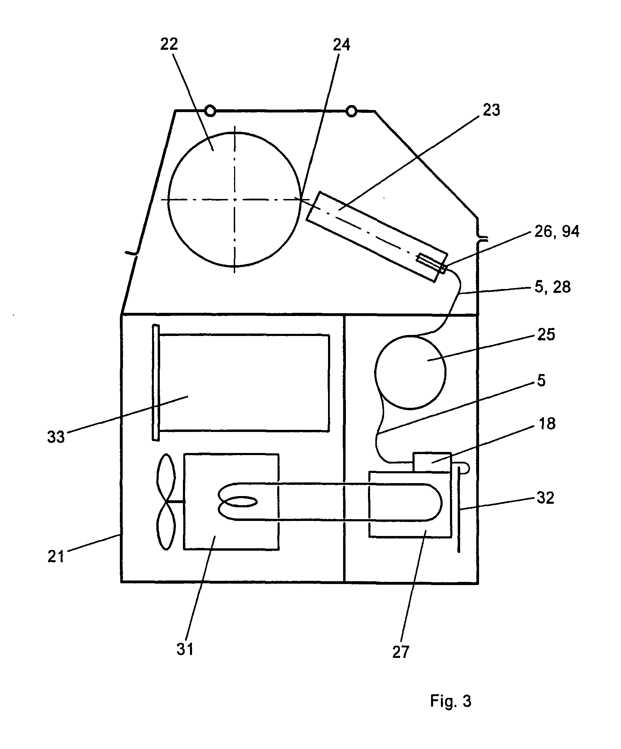

In Fig. 3 ist ein Querschnitt durch eine der erfindungsgemäßen Ausführungen einer Anordnung zur Materialbearbeitung mit der erfindungsgemäßen Laserstrahlungsquelle (1) dargestellt. In einem Gehäuse 21 ist eine Trommel 22 drehbar gelagert und wird von einem nicht dargestellten Antrieb in Rotation versetzt. Auf einem ebenfalls nicht dargestellten Prisma befindet sich eine Laserkanone 23, die in axialer Richtung mittels eines nicht dargestellten Schlittens an der Trommel entlang geführt wird.

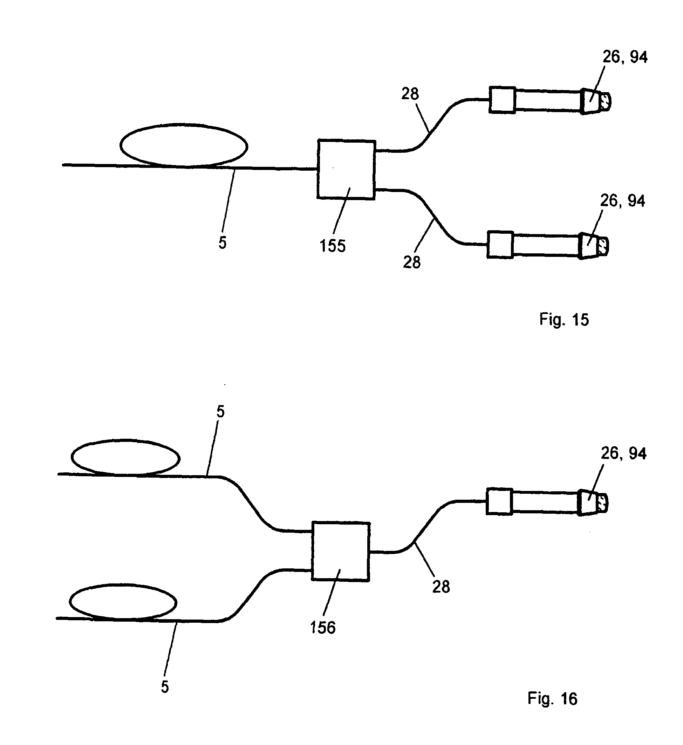

Die aus der Laserkanone 23 austretende Laserstrahlung trifft am Bearbeitungsort im Bearbeitungsfleck 24 auf die Oberfläche der Trommel. Es kann sowohl die Oberfläche der Trommel bearbeitet werden, als auch ein auf die Trommeloberfläche aufgespanntes Material. In die Laserkanone 23 werden die Fiberlaser, deren Laserfibern 5 jeweils beispielsweise zu einer luftdurchströmten Spule 25 aufgewikkelt sind, mittels der erfindungsgemäßen Abschlußstücke 26, 94 eingespeist. Es können in vorteilhafter Weise aber auch an die Fiberlaser passive Singlemodefasern oder andere passive Lichtleitfasern, kurz Fasern 28 genannt, angeschweißt oder auf eine andere Weise angekoppelt sein, bevor die Abschlußstücke 26, 94 angebracht werden, wie in den Fig. 15 und 16 beschrieben wird.

Die Pumpquellen 18 der Fiberlaser sind auf einem Kühlkörper 27 angebracht, der die Verlustwärme über ein Kühlsystem 31 ableitet. Bei dem Kühlsystem 31 kann es sich um einen Wärmeaustauscher handeln, der die Verlustwärme an die umgebende Luft abgibt, es kann sich aber auch um ein Kühlaggregat handeln. Auch die Laserkanone 23 kann an das Kühlsystem angeschlossen sein, was aber nicht dargestellt ist. Auf dem Kühlkörper befindet sich vorzugsweise die Treiberelektronik für die der Pumpquellen 18, die zu der nicht weiter dargestellten Versorgung 32 gehören. Eine Maschinensteuerung ist für die Antriebe vorgesehen, aber in Fig. 3 nicht dargestellt. Der Aufbau der Pumpquellen, Fiberlaser und zugehöriger Leistungselektronik ist vorzugsweise modular ausgeführt, so daß zu den einzelnen Fiberlasern entsprechende Pumpquellen und getrennte oder gruppenweise zusammengefaßte Leistungsmodule der Treiberelektronik gehören, die über ein Bussystem miteinander verbunden sein können. Wie in Fig 13 und Fig. 14 näher erläutert, können die Laserfibern 5 und die Pumpquellen 18 über eine lösbare Verbindung miteinander verbunden sein. Es ist auch möglich, einen geringen Anteil der Pumpstrahlung beispielsweise durch eine geringfügige Verletzung des Mantels 14 aus der Laserfiber 5 auszukoppeln und vorzugsweise über eine Lichtleitfaser auf eine Meßzelle zu leiten, um daraus ein Signal zu bereiten, das zur Steuerung bzw. Regelung der Pumpstrahlung verwendet werden kann.

In der Steuerung 33 werden die Modulationssignale für die Laserstrahlung erzeugt und für das Zusammenwirken der Laserstrahlungsquelle mit der Maschinensteuerung und mit der Versorgung 32 sowie für den Ablauf der Kalibriervorgänge sowie der Steuer- und Regelvorgänge gesorgt. Eine nicht dargestellte Sicherheitsschaltung schaltet beispielsweise die Pumpquellen dauerhaft ab, wenn Gefahr droht.

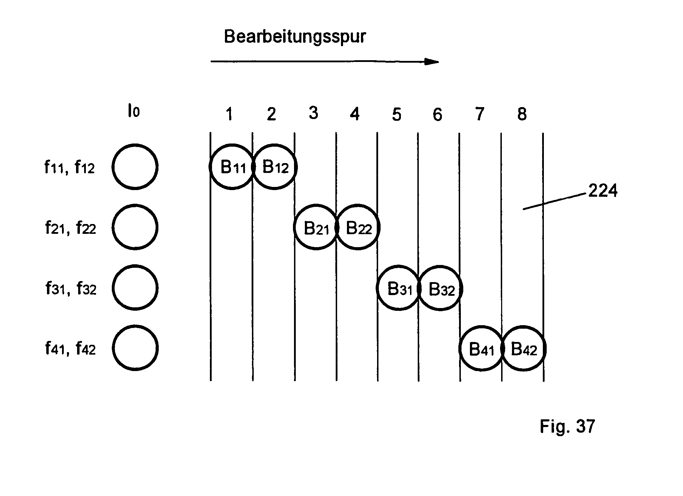

Es ist zwar in Fig. 3 eine horizontal gelagerte Trommel dargestellt, da aber die erfindungsgemäße Laserstrahlungsquelle in ihrer Lage völlig richtungsunempfindlich und vom Aufbau her sehr kompakt ist und zudem die Laserfibern 5 der Fiberlasers oder an die Laserfiber angekoppelte Fasern 28 beliebig verlegt werden können, kann die Trommel in jeder beliebigen Lage angeordnet sein, zum Beispiel kann die Achse der Trommel auch vertikal oder gegen die Senkrechte geneigt gelagert sein, was eine besonders kleine Standfläche ergibt. Außerdem ist hierdurch der Betrieb mehrer Anordnungen oder eine Anlage mit mehren Trommeln auf der gleichen Standfläche möglich, wie sie eine Anordnung mit horizontal gelagerter Trommel benötigen würde. Dadurch können die Druckformen schneller hergestellt werden, insbesondere können alle Druckformen für einen Farbsatz in einem einzigen parallelen Durchgang erstellt werden, was besonders bezüglich der Gleichförmigkeit des Endresultats von Vorteil ist. Auch läßt sich bei einer auf kleiner Standfläche aufgebauten Anlage besser eine automatische Beschickung mit Druckformen zur Bebilderung realisieren, als bei einer räumlich größeren Anlage. Es können eine oder mehrere Laserstrahlungsquellen und zusätzlich ein oder mehrere weitere Laser auf die gleiche Druckform gerichtet werden, um deren Erstellung zu beschleunigen. Dabei ist ein Vorteil der mehrspurigen Anordnung mit den sehr feinen und präzisen Spuren, daß sich eventuelle Nahtstellen deutlich weniger störend bemerkbar werden, als wenn mit gröberen Spuren aufgezeichnet wird. Weiterhin kann, wie unter Fig. 37 beschrieben, die Lage der Spuren präzise nachgestellt werden, so daß Restfehler deutlich kleiner werden als eine Spurbreite. Dabei können die erfindungsgemäßen Laserstrahlungsquellen vorzugsweise zur Bearbeitung der feineren Konturen und der oder die weiteren Laser zur Bearbeitung gröberer Konturen eingesetzt werden, was insbesondere bei Druckformen, die beispielsweise aus Kunststoff oder Gummi bestehen zur Anwendung kommt.

Es ist denkbar, in die Laserstrahlungsquelle anstelle eines oder jeden der vorgesehenen Fiberlaser 2 ein Lasersystem mit einem Abschlußstück zu versehen und alternativ der Laserkanone 23 zuführen, wobei aber der unter Fig. 2 ausführlich beschriebene Fiberlaser die kostengünstigere Lösung darstellt. Wenn man nämlich bei der Materialbearbeitung die Strahlungsleistung mehrerer nicht miteinander gekoppelter, naturgemäß mit geringer Wellenlängendifferenz strahlender Laser auf einen Bearbeitungsfleck richtet, kann man auf eine Phasen-gleichheit der einzelnen Laser verzichten und eine teure und störanfällige Steuerungs- und Regelungstechnik für eine Phasenkopplung vermeiden.

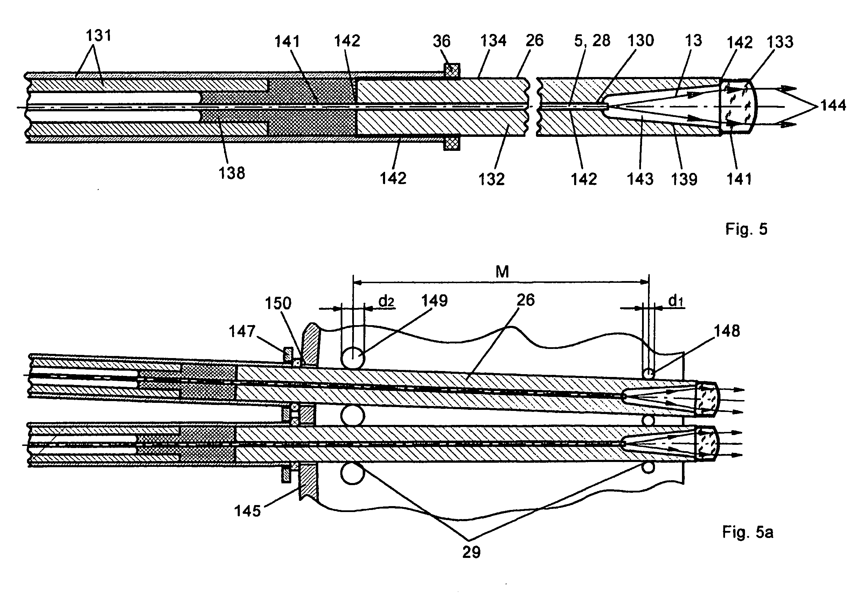

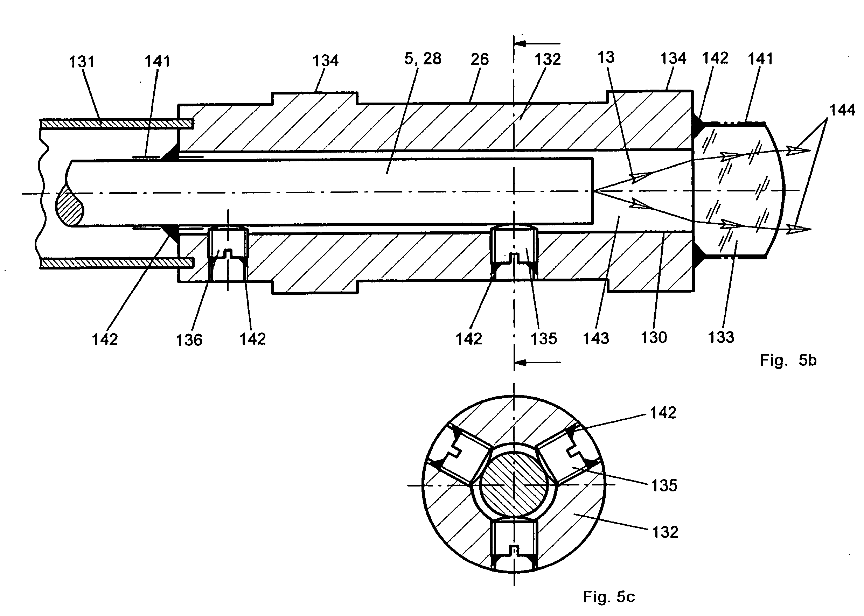

Ein solches Lasersystem, das beispielsweise in der Druckschrift US-A-5,694,408 beschrieben wird, enthält eine optische Nachverstärkung und weist einen aus einer Fiber bestehenden Strahlungsausgang auf. Ein Abschlußstück wird später in einer der Fig. 5, 5a, 5b, 5c, 6, 6a, 7, 9, 9a, 10, 10a, 10b, 11, 11 a oder 12 näher beschrieben.

Es ist ferner denkbar, anstelle des aus der Druckschrift US-A-5,694,408 bekannten Lasersystems ein phasengekoppeltes Lasersystem nach der Druckschrift US-A-5,084,882 zu verwenden. Auf der Bearbeitungsfläche ergibt sich dann als jeweiliger Bearbeitungsfleck ein Abbild des Faserbündels. Alternativ könnte man an jede Faser am Austritt des Bündels eine Single-Mode-Faser anschweißen, diese mit den jeweiligen Abschlußstücken versehen und der Laserkanone zuführen. Allerdings es ist sehr schwierig und aufwendig solche phasengekoppelten Lasersysteme herzustellen und sie würden dementsprechend teuer. Bisher sind solche phasengekoppelten Lasersysteme auch nicht auf dem Markt verfügbar.

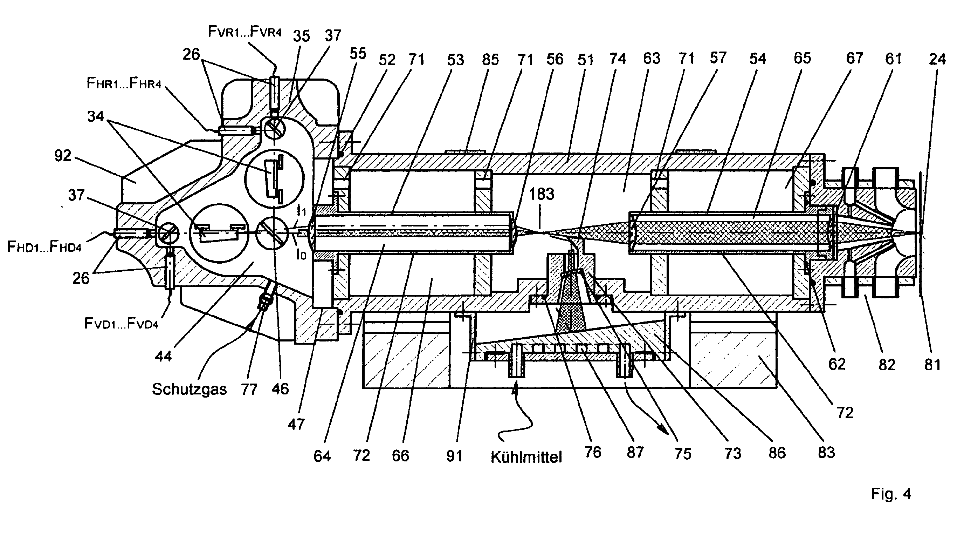

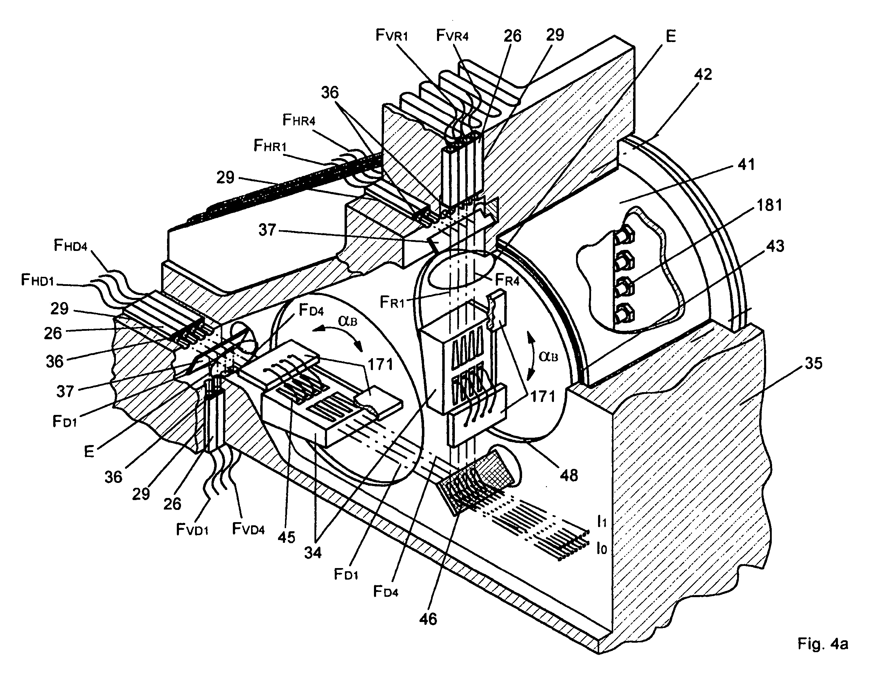

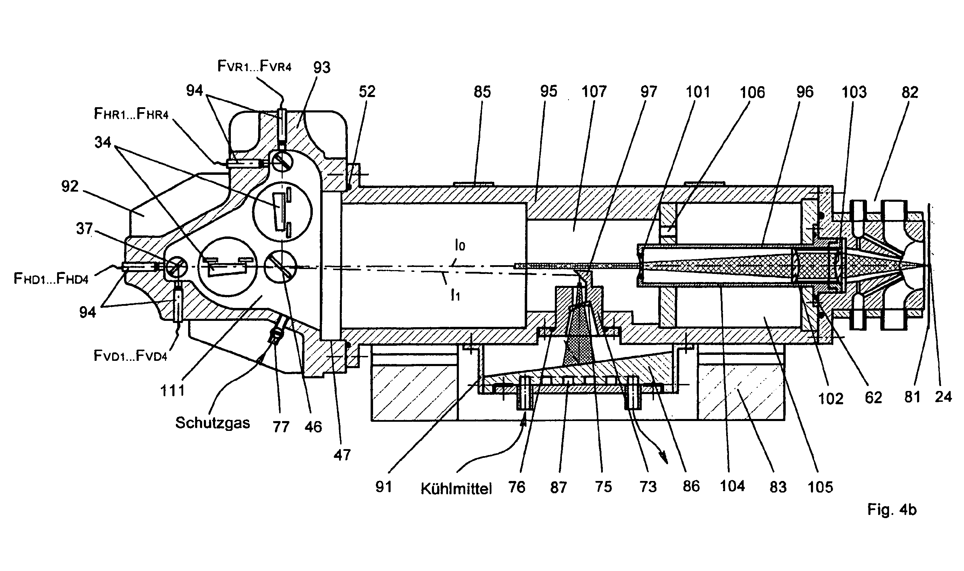

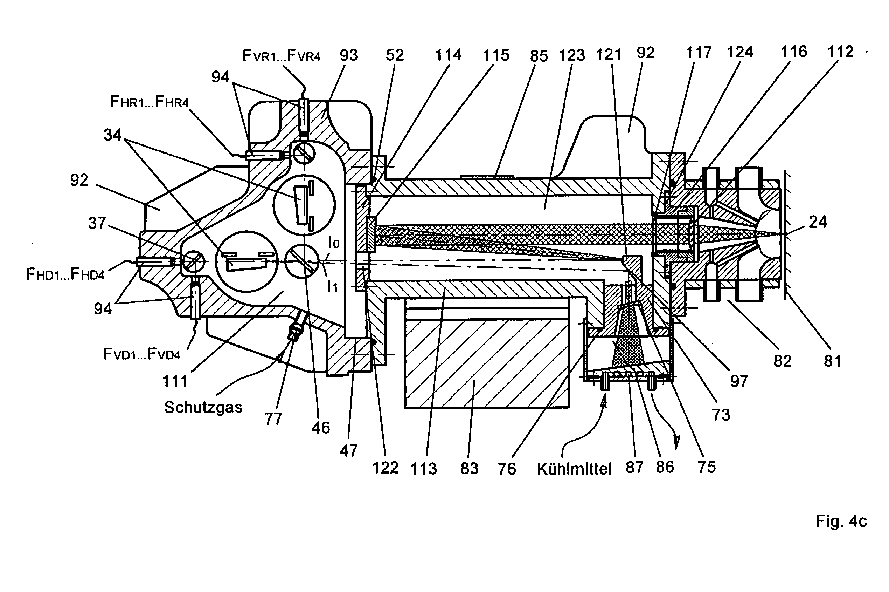

In Fig. 4 ist ein Schnitt durch ein Anwendungsbeispiel für eine Laserkanone mit sechzehn Fiberlasern, die über Abschlußstücke 26 angekoppelt sind, und mit einer Modulationseinheit, bestehend aus zwei mehrkanaligen akustooptischen Modulatoren 34 gezeigt. Die Laserkanone ist eine mehrteilige Aufnahme zur Adaption der optischen Einheit und enthält Fassungen 29 (Fig. 4a) mit Paßflächen für die Passungen der Abschlußstücke 26, Mittel zum Zusammenführen der einzelnen Laserstrahlen, die Modulationseinheit, eine Übertragungseinheit zum Übertragen der Laserstrahlung, die einen Bearbeitungseffekt hervorrufen soll, auf die Bearbeitungsfläche und eine Anordnung zum Unschädlichmachen der Laserstrahlung, die keinen Bearbeitungseffekt hervorrufen soll. An der Laserkanone kann eine Anordnung zum Entfernen des von der Bearbeitungsfläche abgetragenen Materials angeordnet sein, die aber auch auf andere Weise in der Nähe der Bearbeitungsfläche angeordnet sein kann.

Fig. 4a ist eine perspektivische Darstellung zu Fig. 4.

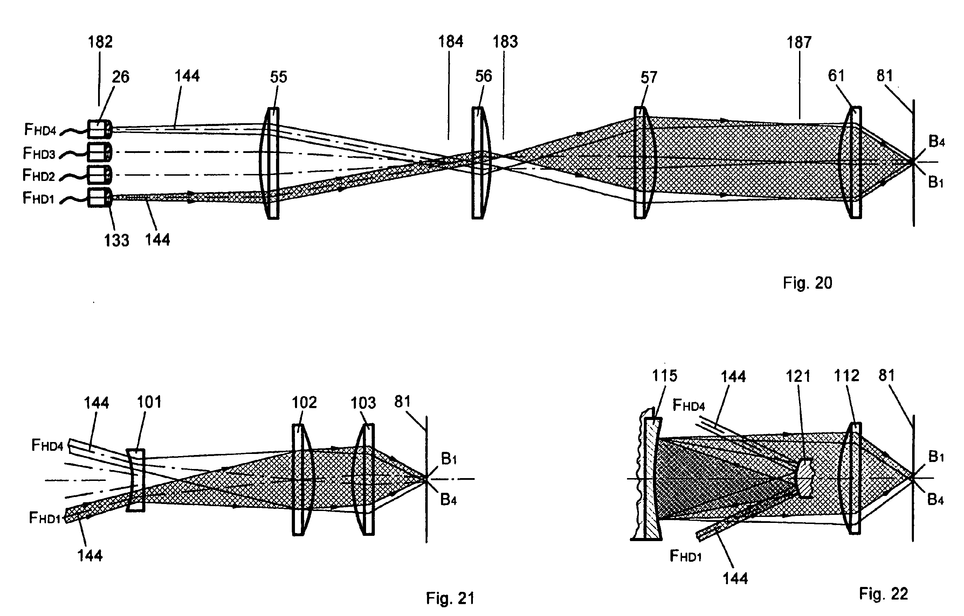

In Fig. 4b ist eine Variante zu Fig 4 gezeigt, bei der die Strahlenbündel der einzelnen Fiberlaser nicht wie in Fig. 4 parallel verlaufen, sondern unter einem Winkel zueinander, was aber aus der Schnittzeichnung in Fig. 4b nicht ersichtlich ist und deshalb in den Fig. 21, 22 und 24 näher erläutert wird.

In Fig. 4c ist eine Variante zu Fig. 4b gezeigt, die infolge einer anders ausgeführten Übertragungseinheit eine vorteilhafte, wesentlich kompaktere Bauform ermöglicht.

Es wird zunächst die Fig 4 unter Zuhilfenahme der Fig. 4a ausführlich erläutert. Diese Erläuterungen gelten sinngemäß auch für die Fig. 4b und 4c.

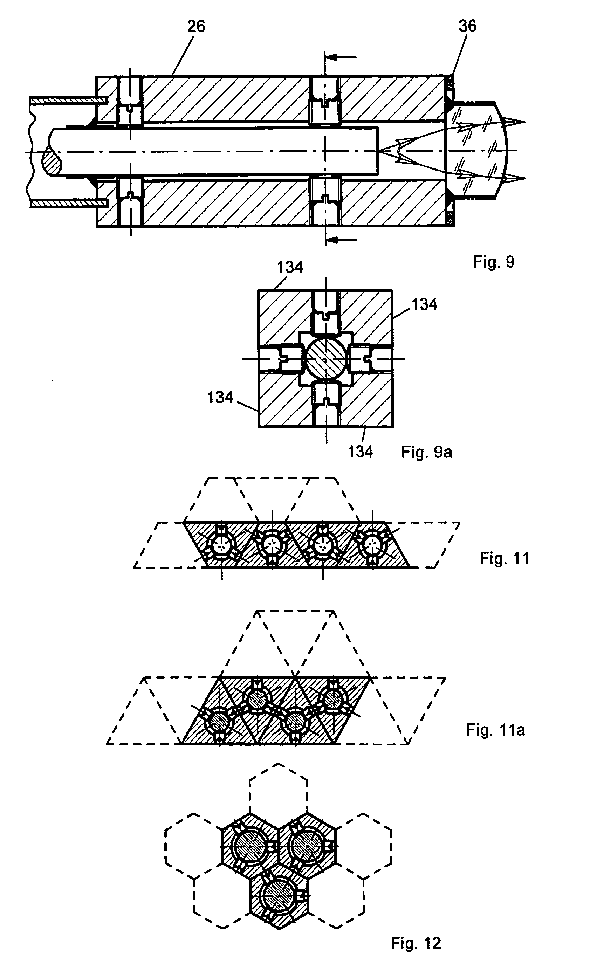

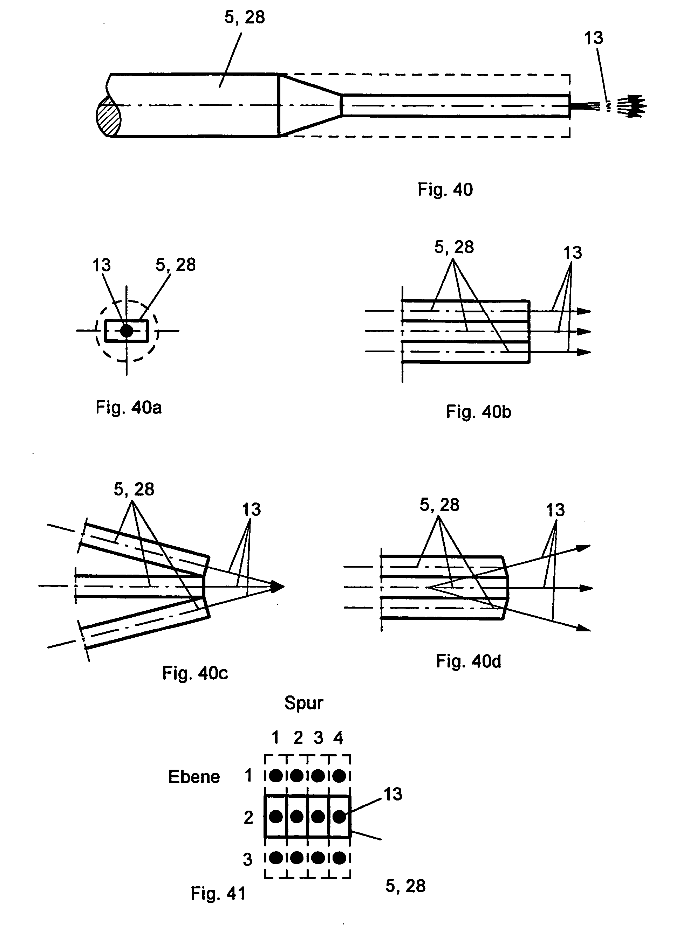

In einem Gehäuse 35 sind am Strahlungseintritt 9 (Fig. 1) jeweils 4 Fiberlaser F_{HD1} bis F_{HD4} , F_{VD}, bis F_{VD4}, F_{HR1} bis F_{HR4}, F_{VR1} bis F_{VR4} über die Abschlußstücke 26 mittels der Fassungen 29 (Fig. 4a) in jeweils vier Spuren zu je einem Strahlenpaket nebeneinander in einer Ebene angeordnet. Die Ausführungsform der in Fig. 4 verwendeten Abschlußstücke 26 ist in Fig. 9 näher beschrieben. Die Abschlußstücke sollen vorzugsweise gasdicht in das Gehäuse 35 eingesetzt werden, wozu Dichtungen 36 (Fig. 4a) verwendet werden können. Es können anstelle der in den Fig. 4 und 4a dargestellten Abschlußstücke auch anders geformte Abschlußstücke verwendet werden, wie sie in den Fig.5, 5a, 5b, 5c, 6, 6a, 7, 9, 9a, 10, 10a,10b, 11, 11a, und 12 beschrieben sind, wenn entsprechende Fassungen 29 im Gehäuse 35 vorgesehen sind. Es können aber auch wie unter Fig. 3 beschrieben, Singlemodefasern oder andere Fasern 28 an die Fiberlaser angebracht sein, bevor die Abschlußstücke 26 angebracht werden. Es kann aber auch eine Anordnung der Laserfibern 5 oder Fasern 28 gemäß Fig. 40, 40a, 40b, 40c, 40d und 41 Anwendung finden. Die Fiberlaser F_{HD1} bis F_{HD4} bzw. F_{VR1} bis F_{VR4} sollen beispielsweise eine andere Wellenlänge haben, als die Fiberlaser F_{VD1} bis F_{VD4} bzw. F_{HR1} bis F_{HR4}, Zum Beispiel sollen F_{HD1} bis F_{HD4} und F_{VR1} bis F_{VR4} eine Wellenlänge von 1100 nm haben, während F_{VD1} bis F_{VD4} bzw. F_{HR1} bis F_{HR4} eine Wellenlänge von 1060 nm haben sollen, was durch eine entsprechend Dotierung des laseraktiven Kemmaterials der Laserfiber 5 erreicht werden kann. Es können aber auch alle Fiberlaser unterschiedliche Wellenlängen aufweisen, wenn sie entsprechend zusammengestellt werden.

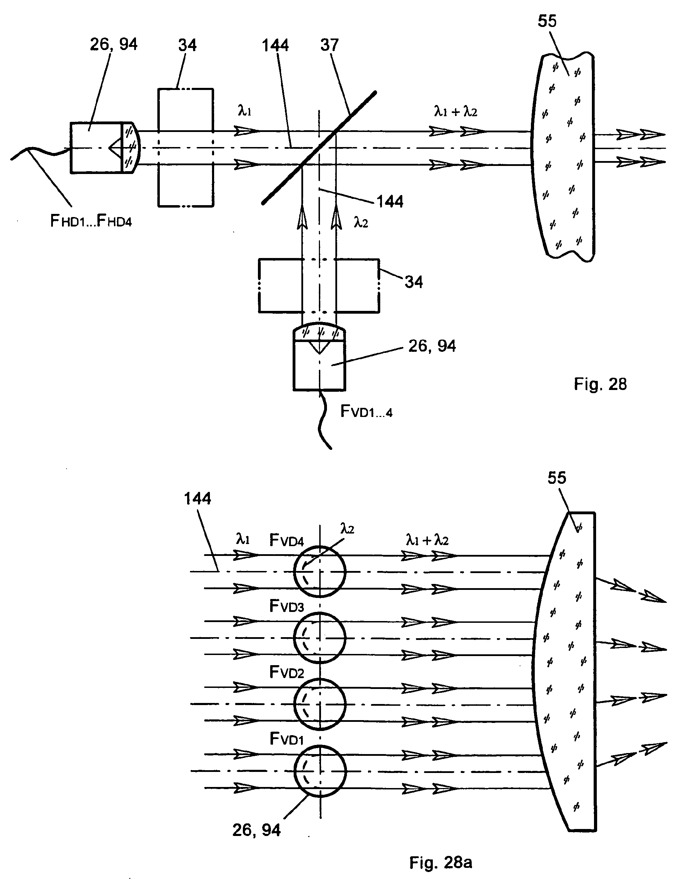

Wie in Fig. 28 und 28a näher erläutert, werden über wellenlängenabhängige Spiegel 37 als Mittel zum Zusammenführen die Strahlenpakete der Fiberlaser F_{HD1} bis F_{HD4} mit denen der Fiberlaser F_{VD1} bis F_{VD4} sowie die Strahlenpakete der Fiberlaser F_{VR1} bis F_{VR4} mit denen der Fiberlaser F_{HR1} bis F_{HR4} zu jeweils einem Strahlenpaket F_{D1} bis F_{D4} sowie F_{R1} bis F_{R4} (Fig. 4a) vereinigt. Es gibt auch andere Möglichkeiten, die Wellenlänge der Fiberlaser zu beeinflussen, zum Beispiel können im Bereich der Laserfiber zwischen Einkoppelspiegel 7 und Auskoppelspiegel 12 wellenlängenselektierende Elemente wie Brewsterplatten, Beugungsgitter oder Schmalbandfilter eingebracht werden. Auch ist es möglich, mindestens einen der beiden Laserspiegel 7 oder 12 mit einer solchen Spiegelschicht zu versehen, die nur für die gewünschte Wellenlänge ausreichend hoch reflektierend ist. Die erfindungsgemäße Ausführung der Strahlzusammenführung ist aber nicht auf die Verwendung von Fiberlasern unterschiedlicher Wellenlänge beschränkt. Neben Fiberlasern, die keine Vorzugsrichtung in der Polarisation der abgegebenen Laserstrahlung haben, können auch Fiberlaser verwendet werden, die polarisierte Laserstrahlung abgeben. Wenn man den wellenlängenabhängignen Spiegel durch einen solchen ersetzt, der so polarisationsabhängig ist, daß er eine Polarisationsrichtung durchläßt, während er die andere Polarisationsrichtung reflektiert, müssen nur zwei unterschiedlich polarisierte Lasertypen verwendet werden, um beide mittels des polarisationsabhängigen Spiegels zu vereinigen. In diesem Fall ist die Verwendung des Abschlußstückes 26 nach Fig. 9 mit quadratischem Querschnitt besonders geeignet, da man durch Wenden des Abschlußstücks um 90° vor der Montage in das Gehäuse 35 jeweils die eine oder die andere Polarisationsrichtung mit dem gleichen Fiberlaser erzeugen kann.

Ein besonderer Vorteil der Zusammenführung mehrerer Laser zu einem einzigen Fleck, nämlich zu jedem der einzelnen Bearbeitungspunkte B₁ bis Bₙ (zum Beispiel B₁ bis B₄ in Fig. 20-22) ist die Erzielung einer höheren Leistungsdichte bei vorgegebener Fleckgröße auf der Bearbeitungsfläche 81.

Es kann auch die Laserstrahlung eines einzelnen Fiberlasers auf mehrere Abschlußstücke verteilt werden, was in Fig. 15 beschrieben ist. Dies ist besonders dann von Nutzen, wenn solche Materialien bearbeitet werden sollen, die mit einer geringen Laserleistung auskommen oder wenn die Leistung eines einzelnen Fiberlasers ausreichend hoch ist. In einem solchen Fall ist es denkbar, daß eine Laserkanone 23 zu diesem Zweck nur mit 4 Abschlußstücken z. B. F_{HD1} bis F_{HD4} bestückt wird, von denen beispielsweise F_{HD1} und F_{HD2} nach Fig. 15 von einem Fiberlaser und F_{HD3} und F_{HD4} von einem weiteren Fiberlaser gespeist werden. Wenn das in Fig. 15 beschriebene Prinzip zweimal angewendet wird, lassen sich alle vier Spuren F_{HD1} bis F_{HD4} von einem Fiberlaser speisen, was zu einer sehr kostengünstigen Anordnung führt, zumal weitere Bauteile wie wellenlängenabhängige Spiegel und Streifenspiegel entfallen können und damit eine besonders preiswerte Ausführung der Laserstrahlungsquelle geschaffen werden kann.

Weiterhin kann man durch Weglassen von Fiberlasem bzw. Spuren je nach Bedarf die Anschaffungskosten für eine solche Anordnung senken und später je nach Bedarf Fiberlaser nachrüsten. Man kann zum Beispiel mit einem Fiberlaser und einer Spur beginnen. Die fehlenden Abschlußstücke der nicht eingesetzten Fiberlaser werden dazu durch baugleiche Abschlußstücke, die aber keine durchgehende Öffnung und keine Laserfiber enthalten und nur zum Verschluß dienen, ersetzt, um das Gehäuse 35 so zu verschließen, als ob es mit allen Abschlußstücken bestückt wäre.

Es kann aber auch die Laserstrahlung mehrerer Fiberlaser zusammengefaßt und in ein einzelnes Abschlußstück geleitet werden, was in Fig. 16 beschrieben ist. Man kann zum Beispiel mit mehreren so zusammengefaßten Fiberlasern und einer Spur arbeiten, wenn man wie beschrieben die fehlenden Abschlußstücke durch baugleiche Abschlußstücke, die aber keine durchgehende Öffnung und keine Laserfiber enthalten und nur zum Verschluß dienen, ersetzt, um das Gehäuse 35 so zu verschließen, als ob es mit allen Abschlußstücken bestückt wäre.

Gleich nachdem das Strahlenbündel das jeweilige Abschlußstück verlassen hat, kann über einen Strahlteiler, der aber nicht gezeigt ist, ein Teil der Laserstrahlung ausgekoppelt und auf eine in den Figuren nicht dargestellte Meßzelle geleitet werden, um daraus eine Meßgröße zu erzeugen, die als Vergleichswert für eine Regelung der Ausgangsleistung jedes Fiberlasers benutzt werden kann. Es kann aber auch bereits vor dem Abschlußstück Laserstrahlung aus der Laserfiber zum Gewinnen einer Meßgröße ausgekoppelt werden, was auch nicht dargestellt ist.

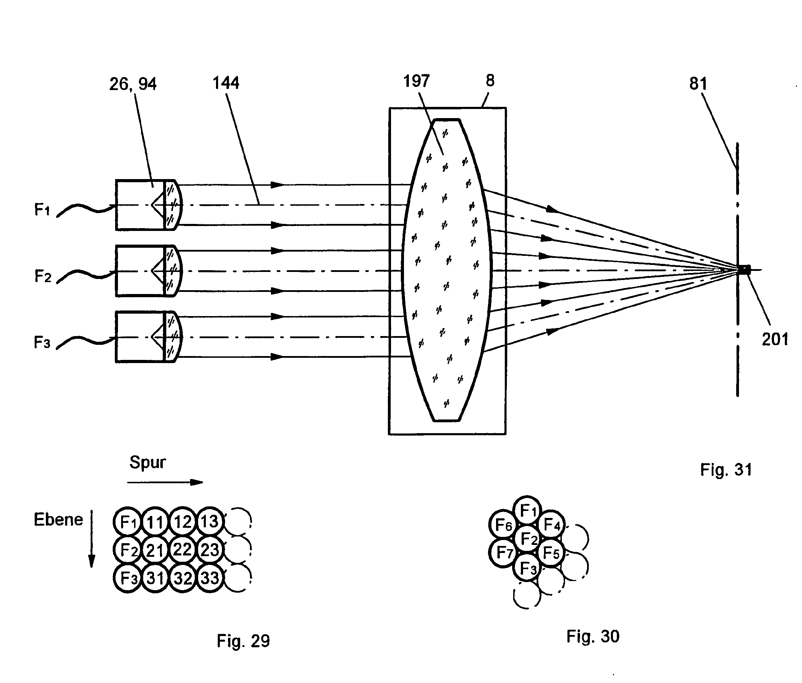

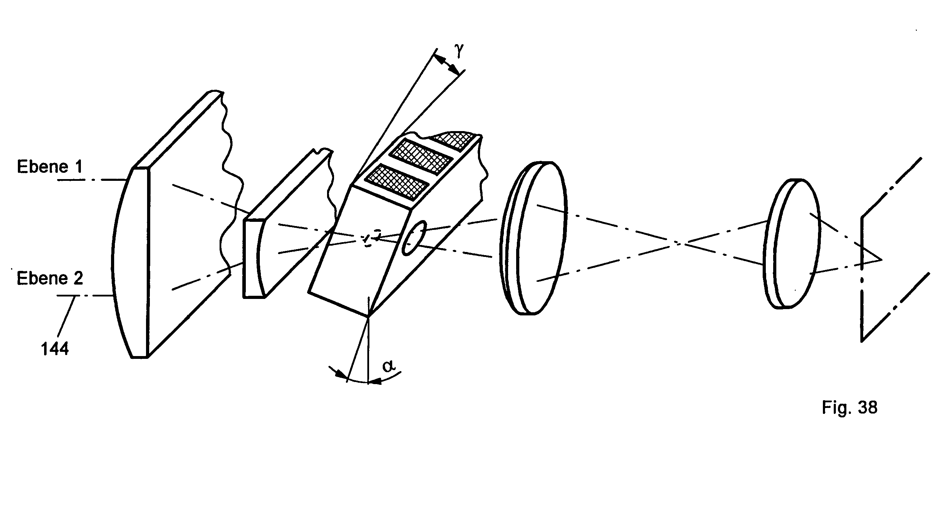

Die Anzahl der Ebenen, in denen die Abschlußstücke angeordnet sind, ist nicht auf die beschriebene eine Ebene beschränkt. In den Fig. 29, 32, 33 und 41 sind z. B. Anordnungen mit 3 Ebenen angegeben. In Fig. 38 ist eine Anordnung mit 2 Ebenen dargestellt.

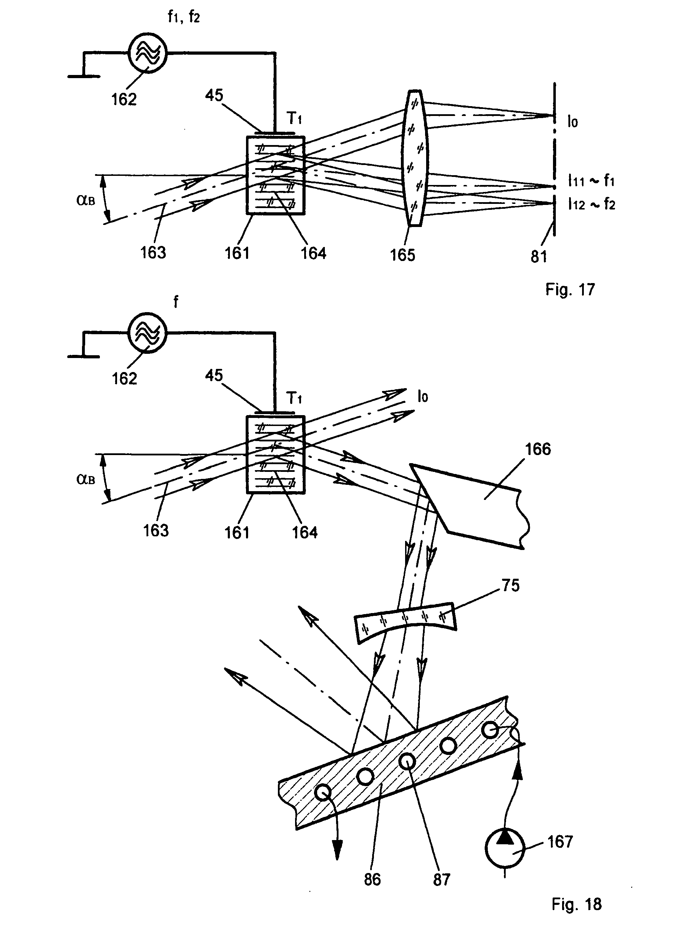

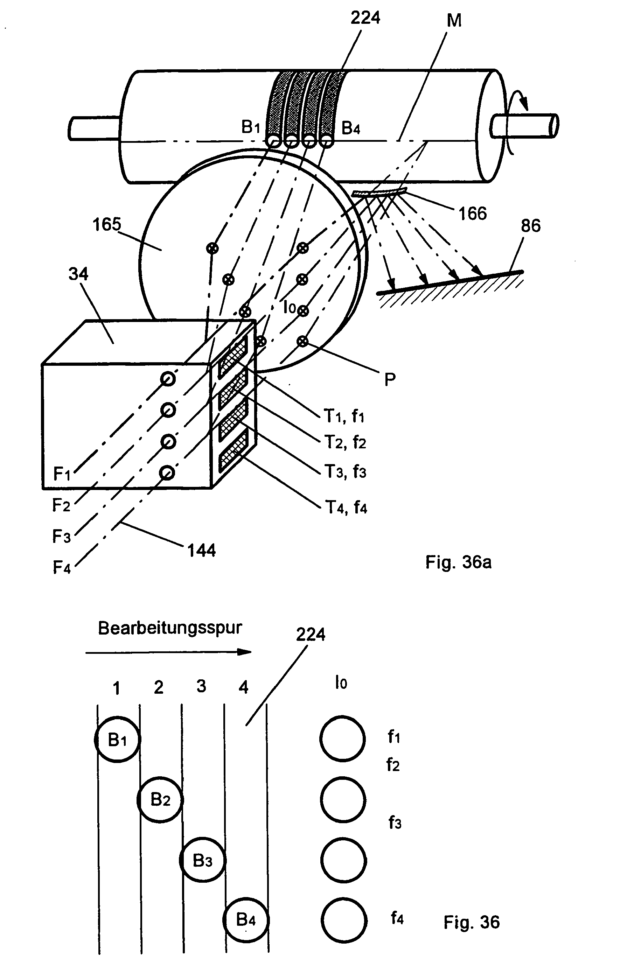

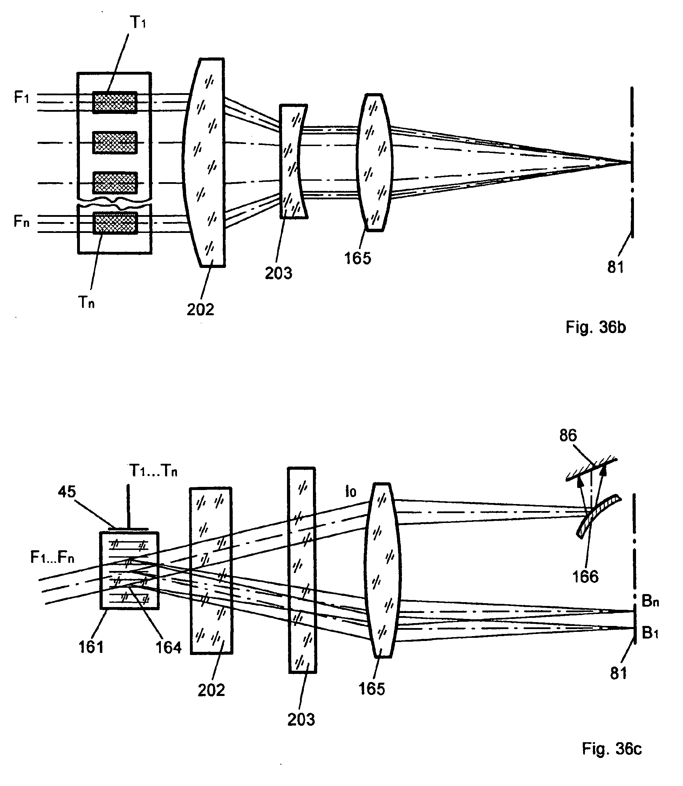

Über je einen vierkanaligen akustooptischen Modulator 34, dessen Wirkungsweise und Ausführungsform in den Fig. 17, 18, 19 und 19a näher erläutert wird, werden die jeweiligen Strahlenpakete der Fiberlaser moduliert. Durch den akustooptischen Modulator 34, der vom Prinzip her ein Ablenker ist, wird in dem dargestellten Fall die nicht erwünschte Energie aus der ursprünglichen Strahlrichtung I₀ in die Strahlrichtung I₁ abgelenkt (Fig. 4a), so daß sie später im Strahlengang einfach abgefangen und unschädlich gemacht werden kann. Die Modulation kann vorzugsweise digital erfolgen, d. h. es wird in den einzelnen Modulatorkanälen nur zwischen zwei Zuständen, nämlich "EIN" und "AUS" unterschieden, was besonders einfach zu steuern ist; sie kann aber auch analog erfolgen, indem die Laserleistung in jedem Modulatorkanal auf beliebige Werte eingestellt werden kann. Die Modulation ist nicht darauf beschränkt, daß die Energie aus der Strahlrichtung I₀ für die Bearbeitung verwendet wird und die Energie aus der Richtung I₁ unschädlich gemacht wird. In den Fig. 36, 36a, 36b, 36c und 37 sind Beispiele angegeben, in denen die abgebeugte Strahlrichtung I₁ zur Bearbeitung verwendet wird und die Energie aus der Richtung I₀ unschädlich gemacht wird. Auch kann eine geringer Teil der modulierten Strahlungsleistung der einzelnen Modulatorkanäle über einen nicht dargestellten Strahlteiler auf jeweils eine Meßzelle gegeben werden, um eine Meßgröße zu erzeugen, die als Vergleichswert in einem Regelkreis für die genaue Regelung der Laserenergie jeder Spur auf der Bearbeitungsfläche benutzt wird.

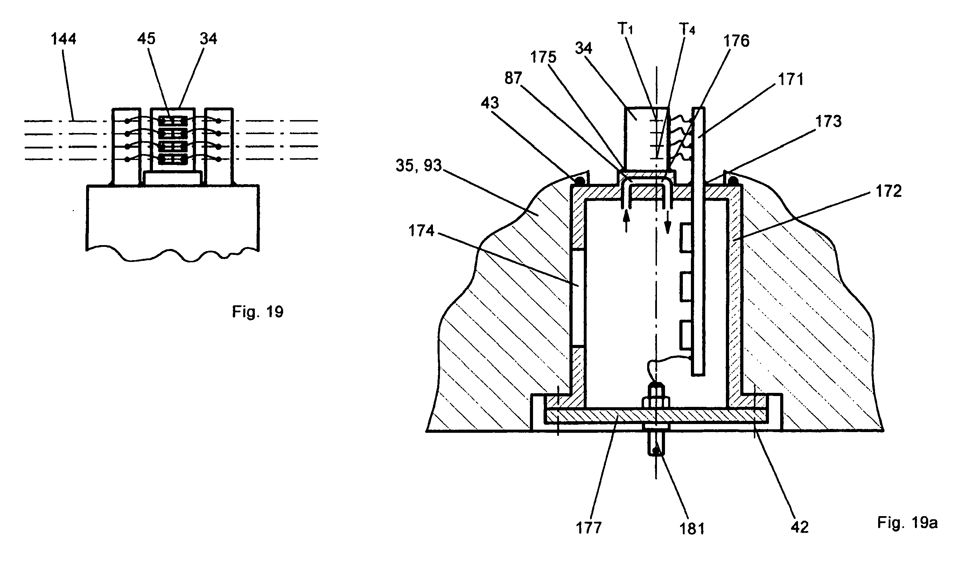

Der mehrkanalige akustooptische Modulator 34 ist vorzugsweise auf einem zylindrischen Modulatorgehäuse 41 befestigt, das verdrehbar in einer Öffnung 48 in dem Gehäuse 35 gelagert ist. Nach dem Einjustieren des Modulatorgehäuses auf den erforderlichen Bragg-Winkel α_{B} wird das Modulatorgehäuse mittels einer Verbindung 42 fixiert. Mittels einer Dichtung 43 ist dafür gesorgt, daß jedes Modulatorgehäuse gasdicht zum Gehäuse 35 abschließt. Aus dem Modulatorgehäuse 41 ragt eine speziell präparierte Leiterplatte 171 in den inneren Raum 44 des Gehäuses 35, über welche die elektrischen Verbindungen zu den piezoelektrischen Wandlern 45 hergestellt werden. Die vorzugsweise Ausführung der Modulatoren wird in den Fig. 19 und 19a ausführlicher beschrieben.

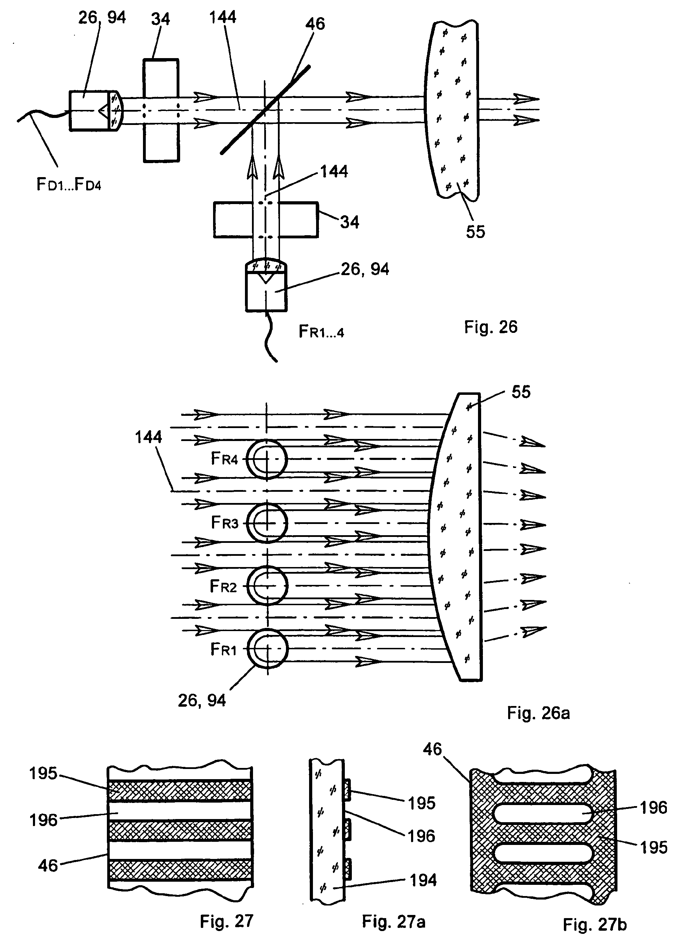

Nach dem Durchlaufen der akustooptischen Modulatoren werden die Strahlenpakete F_{D1} bis F_{D4} und F_{R1} bis F_{R4} zu einem Streifenspiegel 46 geführt, der in den Fig. 26, 26a, 27, 27a, und 27b näher beschrieben ist. Das Strahlenpaket F_{D1} bis F_{D4} ist bezüglich des Streifenspiegels 46 so angeordnet, daß es den Streifenspiegel unbehindert durchlaufen kann. Die Laserstrahlenbündel des Strahlenpaketes F_{R1} bis F_{R4} sind aber gegenüber dem Strahlenpaket F_{D1} bis F_{D4} um einen halben Spurabstand versetzt und treffen auf die streifenförmig angeordneten Streifen des Streifenspiegels. Dadurch werden sie in ihrer Richtung umgelenkt und liegen nun in einer Ebene mit den Laserstrahlbündeln F_{D1} bis F_{D4}. Damit ergibt sich nunmehr eine achtspurige Anordnung, bei der in jeder Spur außerdem noch zwei Laser verschiedener Wellenlänge überlagert sind, so daß insgesamt 16 Laser zusammengeführt worden sind und zur Wirkung kommen. Oberhalb dieser Ebene I₀ befinden sich die im akustooptischen Modulator 34 abgebeugten Strahlen I₁. Bei einer anderen Justierung des akustooptischen Modulators 34 können die abgebeugten Strahlen auch unterhalb der Ebene von I₀ liegen, wie in den Fig. 4b und 4c gezeigt wird.

Ein bedeutender Vorteil der erfindungsgemäßen Anordnung ist, daß die Symmetrieachse der Strahlenpakete F_{HD1} bis F_{HD4} und F_{D1} bis F_{D4} auf der Achse des Gehäuses 35 liegen, die durch die Bohrung 47 definiert ist und die Strahlachsen der zugehörigen Strahlenpakete jeweils parallel oder rechtwinklig zu dieser Achse liegen, was eine einfache und präzise Herstellung erlaubt. Es ist aber auch möglich, die Strahlenpakete unsymmetrisch und unter anderen Winkeln anzuordnen. Weiterhin ist es möglich, kleine Differenzen in der Lage der Strahlenpakete durch Verstellung der wellenlängenabhängigen Spiegel 37 und des Streifenspiegels 46 zu korrigieren. Es ist möglich, die Abschlußstücke nach der Montage in ihrer Lage und ihrer Winkelzuordnung beispielsweise zur individuellen Optimierung der Bragg-Winkel in den einzelnen Kanälen noch nachzujustieren, was aber in den Figuren nicht gezeigt ist.

Es liegt im Rahmen der Erfindung, daß die Anzahl der Spuren reduziert, aber auch weiter erhöht werden kann, z. B. kann durch Aneinanderreihen von jeweils acht statt vier Abschlußstücken, die mit Fiberlasern verbunden sind, zu einem Strahlenpaket eine Verdopplung der Spurenzahl vorgenommen werden. Dazu müßten zwei 8-kanalige akustooptische Modulatoren eingesetzt werden. Es sind akustooptische Modulatoren mit 128 getrennten Kanälen auf einem Kristall erhältlich.

Ebenfalls ist es im Rahmen der Erfindung möglich, zur Erhöhung der Leistung je Spur, die Fiberlaser in verschiedenen Ebenen anzuordnen und ihre Leistung auf der Bearbeitungsfläche zu überlagern, was in den Fig. 29, 31, 32, 33 und 41 näher erläutert wird und /oder mehrere Fiberlaser in Bündeln anzuordnen, um ihre Energie auf der Bearbeitungsfläche zu überlagern, was in den Fig. 30 und 31 beschrieben ist.

Eine weitere Möglichkeit zur Erhöhung der Zahl der Spuren ist in Fig. 37 beschrieben.

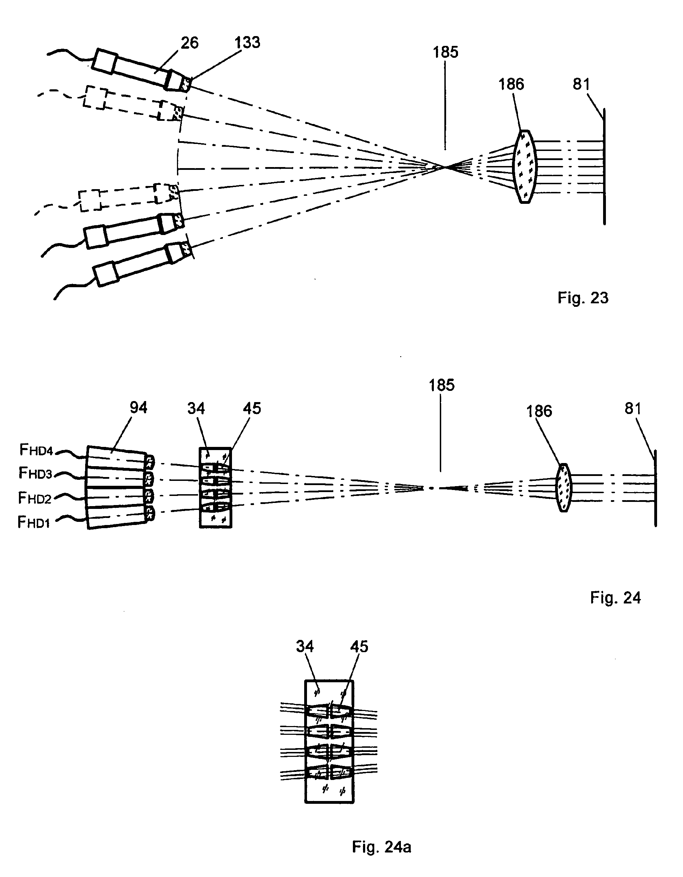

Es können auch direkt modulierbare Fiberlaser eingesetzt werden, was in Fig. 23 näher beschrieben wird. In diesem Fall entfallen die akustooptischen Modulatoren und es ergibt sich ein besonders einfacher Aufbau.

Der Betrieb mit mehreren Spuren von Lasern und mehreren Lasern in einer Spur ermöglicht hohe Bearbeitungsgeschwindigkeiten bei geringer Relativgeschwindigkeit zwischen der Laserkanone und dem Werkstück. Auch kann hiermit die Bearbeitungsgeschwindigkeit optimal an die Zeitkonstante der Wärmeableitung des Materials angepaßt werden. Bei längerer Bearbeitungszeit fließt nämlich zuviel Energie nutzlos in die Umgebung ab.

Das Gehäuse 35 ist mit einem Deckel und einer Dichtung, die beide nicht in den Figuren gezeigt sind, gasdicht verschlossen. An das Gehäuse 35 ist im Bereich der Bohrung 47 ein zylindrisches Rohr 51 angeflanscht und über eine Dichtung 52 abgedichtet. Das zylindrische Rohr enthält als Übertragungseinheit eine Optik, nämlich zwei Tuben 53 und 54 mit je einem optischen Abbildungssystem, die die acht Laserstrahlenbündel F_{D1} bis F_{D4} und F_{R1} bis F_{R4} am Strahlungsaustritt 10 (Fig. 1) auf die Bearbeitungsfläche im richtigen Maßstab abbilden. Es sind vorzugsweise zwei optische Abbildungssysteme hintereinander angeordnet, da sich sonst insgesamt eine sehr große Baulänge oder ein sehr geringer Abstand zwischen der Objektivlinse und der Bearbeitungsfläche ergeben würden, was beides nachteilig ist, da ein langer Strahlengang mittels Spiegel gefaltet werden müßte und ein zu geringer Abstand zwischen Objektivlinse und Bearbeitungsfläche zu einer zu gro-βen Gefahr für die Verunreinigung der Objektivlinse führen könnte.

Der Strahlengang ist in Fig. 4 als Seitenansicht dargestellt. In Fig. 20 ist der prinzipielle Strahlengang als Draufsicht für das Strahlenpaket F_{HD1} bis F_{HD4} gezeigt. Die wellenlängenabhängigen Spiegel, die Modulatoren und der Streifenspiegel sind dort nicht gezeigt. In den Figuren sind vorwiegend Plankonvexlinsen dargestellt, es ist jedoch auch möglich, in allen Figuren andere Linsenformen wie z. B. bikonvexe oder konkavkonvexe Linsen oder solche mit asphärischer Form einzusetzen. Es können auch Linsensysteme, die jeweils aus mehreren Linsenkombinationen bestehen, zur Verwendung kommen.

Um die Laserenergie so effizient wie möglich zu übertragen und die Erwärmung der optischen Bauelemente in Grenzen zu halten, sind alle in den verschiedenen Ausführungen der Laserstrahlungsquelle vorkommenden optischen Flächen für den in Frage kommenden Wellenlängenbereich mit höchster Qualität entspiegelt. Die optischen Abbildungssysteme können vorzugsweise telezentrisch ausgeführt werden.

Es gibt noch weitere vorteilhafte Lösungen für die Übertragungseinheit, um die Baulänge der Übertragungseinheit zu verkürzen und dabei trotzdem einen ausreichend großen Abstand zwischen der Objektivlinse und der Bearbeitungsfläche zu erzielen, wie unter anderem in den Fig. 4b und 4c noch näher dargestellt wird. Die Linsen 55 und 56 können durch Verschraubungen oder durch Verklebungen mit dem Tubus 53 verbunden sein, sie können aber vorzugsweise an ihren Rändern metallisiert und an den Tubus 53 gelötet sein. Das gleiche gilt für die Linsen 57 und 61 in dem Tubus 54. Damit ergibt sich eine gasdichte Abdichtung der Linsen und eine gute Wärmeübertragung von den Linsen zu den Tuben. Der Tubus 54 ist vorzugsweise mit einer Dichtung 62 gegenüber dem zylindrischen Rohr 51 gasdicht abgeschlossen. Für den Raum 63 gelten bezüglich der Dichtheit und Sauberkeit die gleichen Bedingungen, wie für den Raum 44 und ebenso für die Räume 64 und 65 innerhalb der Tuben 53 und 54. Die Kammern 66 und 67 sind vorzugsweise über Bohrungen 71 mit den Räumen 44 und 63 verbunden. Die Tuben 53 und 54 können vorzugsweise Öffnungen 72 aufweisen.

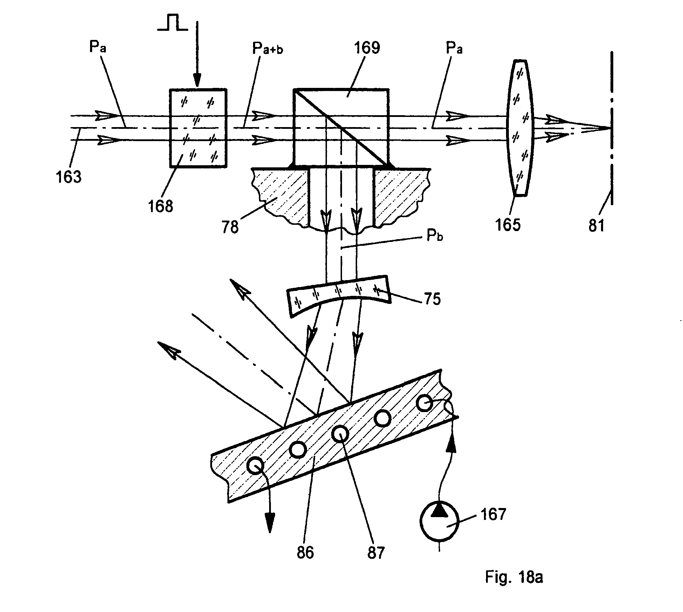

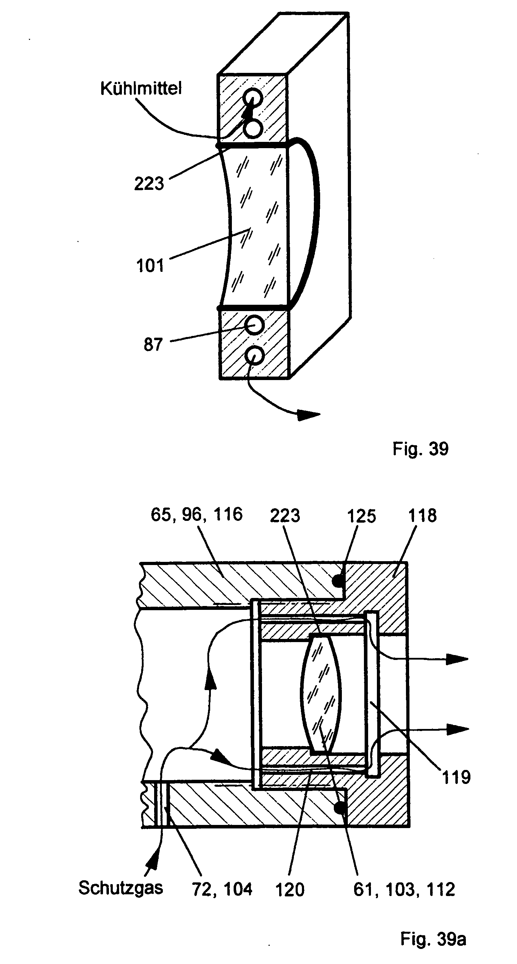

Eine Abfanganordnung 73 zum Unschädlichmachen der Laserstrahlung, die auf der Bearbeitungsfläche keinen Bearbeitungseffekt hervorrufen soll und die einen hoch reflektierenden Spiegel 74 und eine Zerstreuungslinse (Konkavlinse) 75 aufweist, ragt in den Raum 63 hinein. Das Prinzip der Abfanganordnung 73 ist in Fig. 18 näher beschrieben. Die Abfanganordnung 73 ist mit einer Dichtung 76 eingesetzt, und die Konkavlinse 75, die auch durch ein anderes optisches Element, beispielsweise eine Glasplatte ersetzt werden kann, in die Abfanganordnung eingeklebt oder vorzugsweise in ihrer Randzone metallisiert und zur besseren Wärmeableitung an die Abfanganordnung angelötet. Damit ist der Raum 63 gasdicht von der Umgebung abgeschlossen. Durch die beschriebenen Maßnahmen ergibt sich, daß der gesamte Innenraum der Laserkanone gasdicht von der Umgebung abgeschlossen ist. Die Räume 44, 63, 64 und 65 und die Kammern 66 und 67, also der gesamte Innenraum der Laserkanone, können vorzugsweise evakuiert oder mit einem Schutzgas gefüllt werden. Die Räume und Kammern sollen möglichst frei von solchen Komponenten sein, die Gase oder Partikel absondern, weil sich damit Schmutz auf den hochbelasteten optischen Flächen absetzen könnte, was zum frühzeitigen Ausfall der Anordnung führen würde. Deshalb wird auch an die zu verwendenden Dichtungen die Forderung gestellt, daß sie keine Partikel oder Gase absondern. Bei der Montage wird auf größte Reinheit der zu montierenden Teile und der Umgebung Wert gelegt, bis die Laserkanone verschlossen ist. Nach dem Verschließen der Laserkanone 23 kann über das Ventil 77 eine Evakuierung des gesamten Innenraumes vorgenommen werden oder ein Schutzgas eingefüllt werden. Der Vorteil einer Füllung des Innenraumes mit Schutzgas ist, daß sie einfacher erneuert werden kann, indem man im Betrieb an das Ventil 77 eine nicht gezeigte Gasflasche über ein Druckminderventil anschließt, aus der bei Bedarf Gas in das Gehäuse nachgefüllt werden kann. Ein weiterer Vorteil ist, daß, wenn zum Tausch eines Fiberlasers ein Abschlußstück aus dem Gehäuse entfernt und durch ein anderes ersetzt werden soll oder wenn das Gehäuse bzw. das zylindrische Rohr aus irgend einem Grund beim Anwender geöffnet werden muß, man während des Vorgangs ständig eine geringe Menge des Schutzgases durch das Gehäuse strömen lassen kann, um so das Eindringen von Schmutzpartikeln in den geschützten Raum zu verhindern. Man kann auch ständig eine geringe Menge des Gases durch das Gehäuse strömen lassen und durch Öffnungen, vorzugsweise in der Nähe der Objektivlinse, so entweichen lassen, so daß diese Strömung auch eine Verunreinigung der Objektivlinse durch solche Schmutzpartikel verhindert, die bei dem Bearbeitungsvorgang freigesetzt werden (Fig. 39a). Man kann auch auf die Evakuierung oder die Schutzgasfüllung verzichten, wenn man eine kürzere Lebensdauer der Laserstrahlungsquelle in Kauf nimmt.

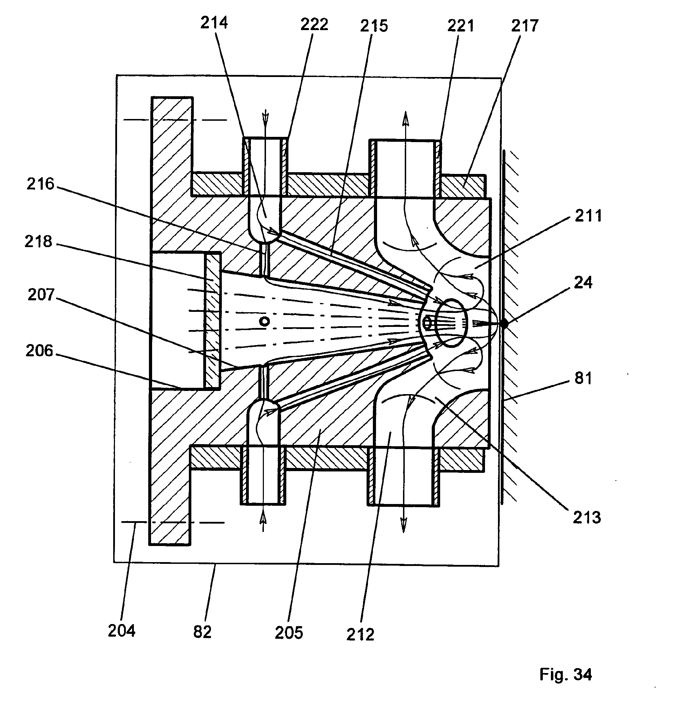

Vorteilhaft in der Anordnung nach Fig. 4 ist, daß der Winkel zwischen den Strahlenpaketen der ursprünglichen Strahlrichtung I₀ des akustooptischen Modulators und der abgebeugten Strahlrichtung I₁ durch das Abbildungssystem aus den Linsen 55 und 56 deutlich vergrößert wird, so daß es einfach ist, mittels des hochreflektierenden Spiegels 74 an der Abfanganordnung 73 das unerwünschte Strahlenpaket der abgelenkten Strahlrichtung abzufangen. Der Spiegel 74 ist vorzugsweise aus Metall gefertigt und mit einer hoch reflektierenden Schicht versehen, um die Erwärmung infolge absorbierter Laserenergie gering zu halten. Er ist zur besseren Wärmeableitung über einen kräftigen Flansch der Abfanganordnung 73 mit dem Rohr 51 verbunden. Man kann aber auch auf die Abfanganordnung verzichten, wenn man anstelle des hoch reflektierenden Spiegels ein optisches Bauelement wie z. B. eine Linse einfügt, das die abzufangende Laserstrahlung geringfügig so in ihren optischen Eigenschaften verändert, daß der Fokus der abgebeugten Strahlung von dem Fokus der zur Materialbearbeitung verwendeten Strahlung verschieden ist. Würde man nun die abzufangende Strahlung mit auf die Bearbeitungsfläche leiten, würde die abzufangende Strahlung nicht die erforderliche Leistungsdichte haben, um Material abzutragen, sondern nutzlos absorbiert und reflektiert werden. Der Vorteil der Anordnung nach Fig. 4 besteht darin, daß an die optischen Bauelemente in den beiden Tuben geringe Anforderungen gestellt werden. Man könnte sogar beide Tuben völlig gleich ausführen. Ein weiterer Vorteil besteht darin, daß die Achsen der Abschlußstücke 26 parallel zueinander liegen. Der Abstand zwischen der Objektivlinse 61 und der Bearbeitungsfläche 81 darf nicht zu klein sein, damit wegfliegende Partikel aus der Materialoberfläche nicht auf die Objektivlinse gelangen. Verschmutzt sie nämlich, dann absorbiert sie hindurchtretende Laserenergie und wird zerstört und damit unbrauchbar. Um die Verschmutzung zu verhindern, ist zwischen der Objektivlinse 61 und der Bearbeitungsfläche 81 ein besonderes Mundstück 82 angeordnet, das unter Fig. 34 näher beschrieben ist.

Die Laserkanone 23 der Laserstrahlungsquelle ist innerhalb der Anordnung zur Materialbearbeitung (Fig. 3) beispielsweise auf einem Prisma 83 um die optische Achse, die mit der Achse des zylindrischen Rohres 51, 95 identisch ist, drehbar und in Richtung der optischen Achse verschiebbar gelagert und mit einem Spannband 85 oder mit mehreren Spannbändern in ihrer Lage fixiert. Dadurch ist eine genaue Zustellung der Laserkanone zu der Bearbeitungsfläche 81 möglich. Au-βerhalb des Prismas 83 befindet sich eine Platte 86, die Öffnungen 87 aufweist, durch die ein Kühlmittel gepumpt werden kann. Die Aufgabe dieser Platte 86 ist es, die aus dem Strahlengang der Übertragungseinheit abgefangene Laserenergie aufzufangen und abzuleiten, was in Fig. 18 näher dargestellt ist. Zwischen der Platte 86 und dem Rohr 51, 95, 113 befindet sich eine Wärmedämmung, die aber nicht in den Figuren dargestellt ist. Die Platte ist über isolierende Flansche 91 mit dem Rohr 51, 95, 113 verbunden. Die Flansche 91 verhindern auch das Austreten von Laserstrahlung.

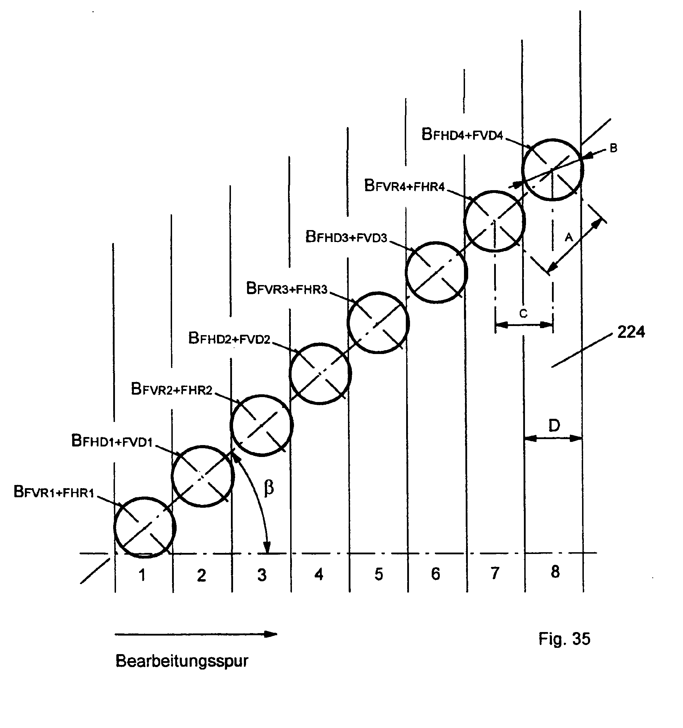

Durch eine Verdrehung der Laserkanone 23 um ihre optische Achse kann der Spurabstand der Laserspuren auf der Bearbeitungsfläche 81 verändert werden, was in Fig. 35 näher dargestellt ist. Es liegt im Rahmen der Erfindung, daß die Verdrehung der Laserkanone zur Einstellung des Spurabstandes sowie die Einstellung ihres Abstands zur Bearbeitungsfläche nicht ausschließlich manuell, sondern mit Hilfe einer geeigneten, vorzugsweise elektronischen Steuerung und/oder Regelung durchgeführt werden kann. Dazu können erfindungsgemäß auch geeignete, nicht gezeigte Meßeinrichtungen vorgesehen sein, die sich in der Nähe der Bearbeitungsfläche befinden und bei Bedarf von der Laserkanone angefahren werden können. Eine weitere Möglichkeit zur Verstellung des Spurabstandes ist in den Fig. 36 , 36a, 36b, 36c und 37beschrieben. Auch kann zur Einstellung des Spurabstandes und des besten Fokus eine manuell oder motorisch verstellbare Vario-Fokussieroptik eingesetzt werden. Eine solche Vario-Fokussieroptik hat vorzugsweise neben fest angeordneten Linsen zwei bewegliche Linsensysteme, wobei eine Verstellung des ersten Linsensystems vorwiegend eine Verstellung des Abbildungsmaßstabes bewirkt, womit der Spurabstand beeinflußt werden kann und wobei eine Verstellung des zweiten Linsensystems vorwiegend eine Verstellung der Fokussierung bewirkt. Es kann eine iterative Einstellung zur Optimierung von Spurabstand und bestem Fokus vorgenommen werden. Weiterhin ist es möglich, vorzugsweise zwischen den Linsen 57 und 61 eine nicht dargestellte, verschiebbare, langbrennweitige Linse anzuordnen, mit der die Fokussierung der Bearbeitungspunkte auf der Bearbeitungsfläche fein nachgestellt werden kann, ohne die Strahlungsquelle zu verschieben, weil die resultierende Brennweite zweier Linsen von ihrem Abstand abhängt.

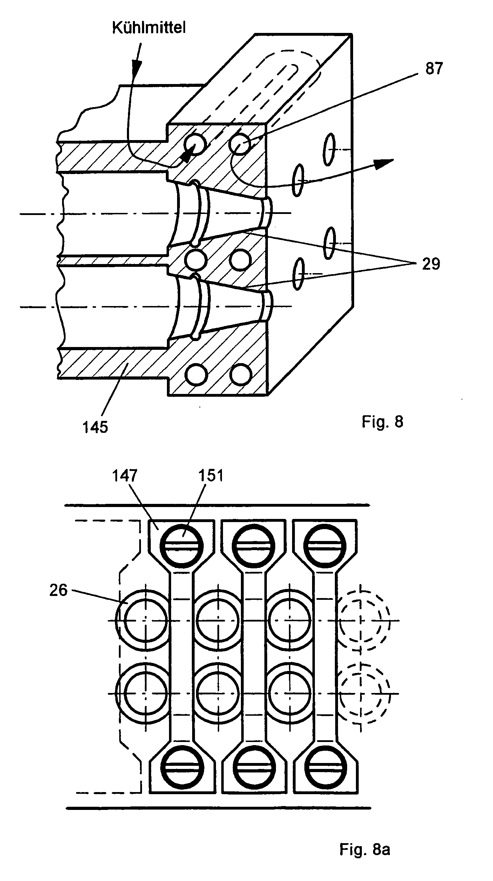

Infolge der hohen Laserleistung werden sich die optischen Elemente im Strahlengang erwärmen, da sie einen, wenn auch sehr geringen, Teil der Laserenergie absorbieren. Vorzugsweise werden daher die kritischen optischen Bauelemente statt aus Glas aus einem Material mit besserer Wärmeleitfähigkeit, zum Beispiel aus Saphir hergestellt. Die Verlustwärme wird bei Metallisierung der Verbindungsflächen der optischen Bauelemente durch die Lötverbindungen zu den Fassungen und an das Gehäuse abgeleitet. Das Gehäuse wird zur besseren Wärmeabgabe mit Kühlrippen 92 ausgeführt, die durch einen nicht dargestellten Lüfter gekühlt werden können. Ebenfalls ist eine Durchsetzung des Gehäuses 35 sowie der übrigen Bauteile der Laserstrahlungsquelle mit Bohrungen, insbesondere in den kritischen Bereichen an den Linsenfassungen und Fassungen für die Abschlußstücke 26, möglich, durch die ein Kühlmittel gepumpt werden kann, was in den Fig. 8 und 39 dargestellt ist.

Da bei der Materialbearbeitung, wie im Vorangehenden dargelegt, sehr hohe Laserleistungen erforderlich sind, ist es erfindungswesentlich, die Anzahl der optischen Elemente, insbesondere der Linsen, im Strahlengang so gering wie möglich zu halten, um die optischen Verluste und die Gefahr der Verschmutzung der Optik, die immer zu einem frühzeitigen Ausfall führen würde, so gering wie möglich zu halten. Es liegt auch im Rahmen der Erfindung, daß die Objektivlinse (61, 103 und 112) mit einer Wechselfassung ausgestattet ist, damit sie vom Benutzer der Laserstrahlungsquelle bei Bedarf rasch getauscht werden kann, sei es, daß sie im Betrieb verschmutzt worden ist oder daß ein anderer Abbildungsmaßstab gewünscht wird. In diesem Fall ist es vorteilhaft, daß die Bohrung 72 bei dem Tubus 54 nicht ausgeführt wird.

Es liegt weiterhin im Rahmen der Erfindung, daß im optischen Strahlengang Maßnahmen getroffen werden, daß keine Laserenergie zurück in die Laser gelangen kann. In Fig. 3 ist gezeigt, daß die Laserstrahlung nicht senkrecht, sondern unter einem Winkel auf das zu bearbeitende Material auftrifft, so daß die an der Materialoberfläche reflektierte Strahlung nicht in die Laserstrahlungsquelle zurück gelangen kann. Weiterhin ist in den Fig. 4, 4b, 4c und Fig. 18 gezeigt, daß die zu vernichtende Laserstrahlung durch eine schräg gestellte Konkavlinse 75 in einen Sumpf, bestehend aus einer schräg gestellte Platte 86, die gekühlt werden kann, geleitet wird. Erfindungsgemäß kann statt der Konkavlinse 75 auch ein anderes optisches Bauelement, beispielsweise eine Platte oder eine Blende verwendet werden. Dabei ist dieses optische Bauelement in seinem wirksamen Durchmesser so bemessen, daß die in den Sumpf geleitete Laserstrahlung gerade passieren kann, während solche Strahlung, die vom dem Sumpf zurück reflektiert oder zurück gestreut wird, weitgehend zurückgehalten wird, so daß keine Energie zurück in die Laser gelangen kann. Erfindungsgemäß kann die Oberfläche der Platte 86 , die in den Figuren als ebene Oberfläche dargestellt ist, auch ballig oder hohl ausgeführt werden und vorzugsweise aufgerauht werden, um ein Höchstmaß an Strahlung zu absorbieren und ein Minimum an Strahlung zu reflektieren bzw. zu streuen.

Weiterhin ist in Fig. 38 für zwei Ebenen gezeigt, daß durch geringe parallele Versetzung der Strahlachsen der aus dem Abschlußstück austretenden Strahlenbündel ein schräges Auftreffen auf alle betroffenen Linsenflächen erzielt werden kann. Dies gilt auch für die Anordnung mit einer oder mehreren Ebenen. Der akustooptische Modulator 34 ist ohnehin bereits um den Winkel α_{B} gegenüber der Achse der Strahlenbündel verdreht, er kann aber zusätzlich noch um den Winkel γ gegenüber der Symmetrieachse der Strahlenbündel verdreht werden, oder es kann eine Anordnung gemäß Fig. 24 verwendet werden, in der die Achsen der aus den Abschlußstücken austretenden Strahlenbündel unter einem Winkel zueinander verlaufen. Es hat sich in der Praxis gezeigt, daß bereits Winkeldifferenzen von 1 bis 2 Grad zwischen dem Lot auf optischen Oberfläche und der Achse des Strahlenbündels ausreichend sind, um Sicherheit gegen in die Laser zurück reflektierte Strahlung zu erlangen.

Es liegt im Rahmen der Erfindung, von der beschriebenen Ausführung abweichende Ausführungen der optischen, mechanischen und elektrischen Anordnung zur Fig. 4 zu wählen. Beispielsweise könnte man alle Strahlenpakete F_{D1} bis F_{D4} und F_{R1} bis F_{R4} durch eine gemeinsame Linse ähnlich wie in Fig. 31 gezeigt, auf die Bearbeitungsfläche fokussieren, was zwar eine sehr hohe Leistungsdichte ergibt, aber nicht so gut die Form des Bearbeitungsflecks darstellen kann, da alle Bearbeitungspunkte aufeinander liegen und zu einem gemeinsamen Fleck vereinigt sind.

In Fig. 4b wird eine weitere erfindungsgemäße Laserkanone für eine Laserstrahlungsquelle gezeigt, die sich von der in Fig. 4 dargestellten Laserkanone durch ein Gehäuse 93, ein Abschlußstücke 94, ein zylindrische Rohr 95, einen Tubus 96 und durch einen hoch reflektierender Spiegel 97 unterscheidet.

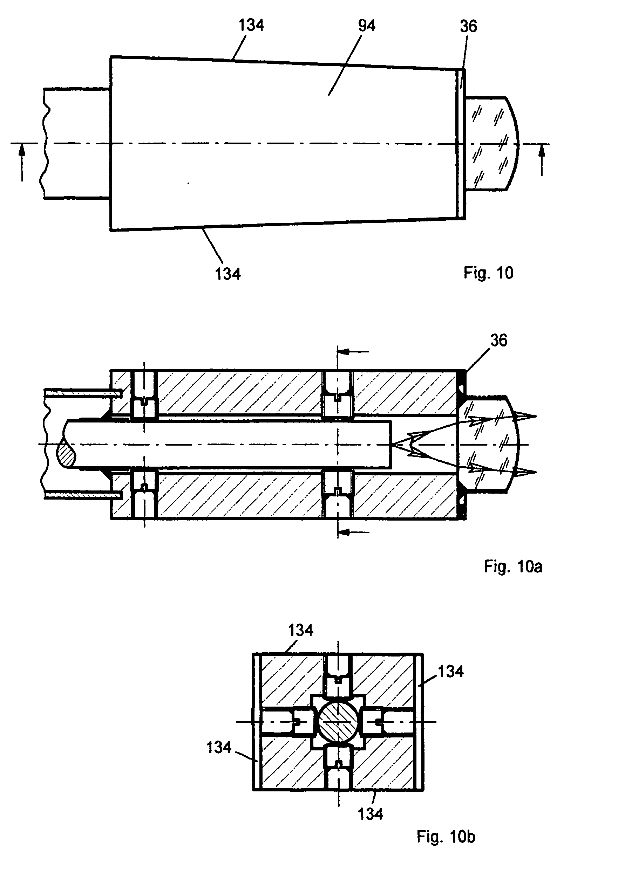

Das Gehäuse 93 hat zu den Abschlußstücken 94 passende Fassungen 29. Die Abschlußstücke 94 entsprechen vorzugsweise denen der Fig. 10, 10a und 10b, die Achsen Strahlenbündel laufen in den betreffenden Strahlenpaketen nicht parallel. sondern etwa auf das Zentrum der Konkavlinse 101 zu, was in der Draufsicht Fig. 21 gezeigt ist. Es können aber auch alle anderen Abschlußstücke gemäß den Fig. 5, 5a, 5b, 5c; 6, 6a; 7, 9, 9a; 11, 11a und 12 verwendet werden, wenn dafür gesorgt ist, daß die Fassungen 29 dafür unter einem entsprechenden Winkel angeordnet sind. In dem Tubus 96 befindet sich die Übertragungseinheit, die aus 3 Linsen besteht, nämlich eine Zerstreuungslinse, also eine Konkavlinse 101 und zwei Sammellinsen, also Konvexlinsen 102 und 103, wobei die Konvexlinse 103 vorzugsweise als auswechselbare Objektivlinse ausgeführt ist. Für die Montage der Linsen bezüglich Dichtheit und Wärmeableitung gilt das unter Fig. 4 und Fig. 4a Gesagte, ebenso für die Materialwahl bezüglich der Wärmeleitung.

Der Tubus 96 kann in dem Raum zwischen den Linsen 101 und 102 evakuiert sein oder mit einem Schutzgas gefüllt sein oder vorzugsweise über eine Bohrung 104 mit dem Raum 105 verbunden sein, der seinerseits über eine Bohrung 106 mit dem Raum 107 verbunden ist. Der Raum 107 ist mit dem Raum 111 über die Bohrung 47 verbunden, der seinerseits gasdicht abgeschlossen ist, wie unter Fig. 4 und Fig. 4a beschrieben. Der Raum zwischen den Linsen 102 und 103 kann über eine nicht dargestellte Bohrung mit dem Raum 105 verbunden sein, insbesondere wenn die Fassung des Objektives gasdicht abgeschlossen ist oder wie unter Fig. 4 beschrieben ständig eine geringe Menge des Schutzgases durch die Laserkanone fließt und in der Nähe der Objektivlinse austritt, was aber nicht in Fig. 4b gezeigt ist. Der gesamte Innenraum der Laserkanone, bestehend aus den Räumen 111, 105, 107, ist vorzugsweise evakuiert oder mit einem Schutzgas gefüllt bzw. von einem Schutzgas durchströmt, wie unter Fig. 4 und Fig. 4a detailliert beschrieben wurde. Die nicht gewünschten Strahlenbündel werden mit einem hoch reflektierenden Spiegel 97 abgefangen, allerdings ist im Gegensatz zu Fig 4 kein Linsensystem vorhanden, das winkelvergrößernd wirkt, so daß der Abstand zwischen dem hochreflektierenden Spiegel und den Modulatoren hier entsprechend groß gehalten wird, um eine ausreichende räumliche Trennung der Strahlenpakete I₀ und I₁ zu erzielen. Trotzdem ist die gesamte Baulänge der Laserkanone hier ähnlich zu der Anordnung der Fig. 4. Der optische Strahlengang der Übertragungseinheit in Fig. 4b stellt eine Seitenansicht dar. In Fig. 21 ist ein prinzipieller Strahlengang für eine Draufsicht zu Fig. 4b angegeben. Der Strahlengang der Linsen 101 und 102 entspricht dem eines umgekehrten Galiläi-Teleskops, er läßt sich aber auch als ein umgekehrtes Kepler-Teleskop ausführen, wenn man die kurzbrennweitige Konkavlinse 101 gegen eine Konvexlinse austauscht. Solche Teleskope sind in dem Lehrbuch "Optik" von Klein und Furtak, Springer 1988, S. 140 bis 141 beschrieben. Der Vorteil der Anordnung nach Fig. 4b ist, daß für die Übertragungseinheit nur 3 Linsen erforderlich sind. Der Nachteil, daß die Strahlenbündel der einzelnen Abschlußstücke nicht parallel verlaufen, wird durch Abschlußstücke gemäß den Fig. 10, 10a und 10b behoben.

Man könnte auch eine Linse 55 verwenden, um die Strahlenbündel in die gewünschte Richtung umzulenken, wie in Fig 20 dargestellt wurde. Dann würden die einzelnen Laserstrahlenbündel zwischen den Abschlußstücken 26 und der Linse 55, die wie in Fig. 4 angeordnet wird, parallel zueinander verlaufen, und es ergibt sich bezüglich des Gehäuses und der Abschlußstücke bzw. ihrer Anordnung kein Unterschied zu Fig. 4. Da aber die Linse 55 neben der ablenkenden Wirkung auch eine sammelnde Wirkung auf die einzelnen Strahlenbündel ausübt, würden am Ort der Konkavlinse 101 nicht die gleichen Verhältnisse entstehen wie in Fig. 21. Dies kann aber durch eine andere Justierung des Abstands der Faser 28 bzw. der Laserfiber 5 zu der Linse 133 oder eine Modifikation der Linse 133 in den Abschlußstücken 26 ausgeglichen werden, d. h. der Strahlenkegel der Laserstrahlenbündel aus den einzelnen Abschlußstücken würde jeweils so eingestellt, daß sich auf der Bearbeitungsfläche am Ort der Punkte B₁ bis Bₙ jeweils ein scharfes Bild ergibt.

Es ist gemäß der Erfindung auch möglich, die Linsen 102 und 103 zu einer einzigen, gemeinsamen Linse zusammenzufassen. Dann ergibt sich eine Übertragungseinheit mit nur 2 Linsen. Weiterhin ist es möglich, vorzugsweise zwischen den Linsen 101 und 102 eine nicht dargestellte, verschiebbare, langbrennweitige Linse anzuordnen, mit der die Fokussierung der Bearbeitungspunkte auf der Bearbeitungsfläche fein nachgestellt werden kann, ohne die Strahlungsquelle zu verschieben. Es kann auch eine Vario-Fokussieroptik verwendet werden, wie unter Fig. 4 erwähnt wurde.

An der Laserkanone 23 ist ein besonderes Mundstück 82 vorgesehen, das eine Verschmutzung der Objektivlinse 112 verhindern soll und unter Fig. 34 näher beschrieben wird.

Fig. 4c zeigt eine Laserkanone, die noch wesentlich kompakter ausgeführt ist, als die der Fig. 4 und Fig. 4a. Als Übertragungseinheit wird in Verbindung mit einer Spiegelanordnung eine Objektivlinse 112 verwendet, die zum Erzielen verschiedener Abbildungsmaßstäbe ausgetauscht werden kann. Wie bereits unter Fig. 4 beschrieben, kann auch eine Vario-Fokussieroptik verwendet werden. Erfindungsgemäß kann aber auch eine Abbildung mit der Spiegelanordnung allein, ohne zusätzliche Objektivlinse 112 erfolgen.

Fig. 4c unterscheidet sich von Fig. 4b in folgenden Punkten:
Das zylindrische Rohr 95 wird ersetzt durch ein exzentrisches Rohr 113. Der Tubus 96 wird vorzugsweise ersetzt durch eine Platte 114 mit einem Hohlspiegel 115 und eine Fassung 116 mit einer Objektivlinse 112 und einer hoch vergüteten Platte 117. Die Abfangeinheit 73 erhält oberhalb des hochreflektierenden Spiegels 97 einen gewölbten (konvexen) Spiegel 121. Das exzentrische Rohr ist auf einer Seite mit dem Gehäuse 93 verbunden. Eine Dichtung 52 sorgt für die erforderliche Dichtheit. In das exzentrische Rohr 113 ist die Platte 114 eingesetzt, die einen Durchlaß für die Strahlenpakete I₀ und I₁ enthält und den Hohlspiegel 115 trägt, dessen Verlustwärme damit gut an das exzentrische Rohr abgeleitet wird. Das exzentrische Rohr hat zwei zueinander vorzugsweise parallele Achsen, nämlich erstens die Symmetrieachse der eintretenden Strahlenpakete mit der Richtung I₀, die auf den gewölbte Spiegel gerichtet sind und zweitens die Achse zwischen Hohlspiegel und Objektivlinse 112, die als optische Symmetrieachse für die austretende Laserstrahlung betrachtet werden kann.

Erfindungsgemäß ist der Strahlengang mittels der beiden Spiegel 121 und 115 gefaltet. Der gewölbte Spiegel 121 ist vorzugsweise aus Metall gefertigt. Er ist eng mit dem hoch reflektierenden Spiegel 97 verbunden und vorzugsweise mit ihm zusammen aus einem Stück gefertigt. Die konvexe Fläche des gewölbten Spiegels kann sphärisch oder asphärisch geformt sein. Der Spiegel 115 ist konkav geformt, also ein Hohlspiegel. Seine Fläche kann sphärisch geformt sein, ist aber vorzugsweise asphärisch geformt. Er besteht vorzugsweise aus Metall. Metall hat den Vorteil der guten Abführung der Verlustwärme. Weiterhin ergibt sich bei der Herstellung aus Metall ein erheblicher Vorteil bei der Erzeugung asphärischer Flächen, die in diesem Fall nämlich, wie auch sphärische und plane Flächen, durch bekannte Diamant-Polierdrehverfahren erzeugt werden können. Dadurch können der hoch reflektierende Spiegel 97 und der gewölbte Spiegel 121 aus einem Stück und vorzugsweise in einem Arbeitsgang mit der gleichen Form der Oberfläche hergestellt und gemeinsam verspiegelt werden, was besonders einfach in der Herstellung und sehr vorteilhaft für die Positionsstabilität des gewölbten Spiegels ist. Bei der Modulation der Laserenergie mittels des akustooptischen Modulators trifft sie entweder auf den gewölbten Spiegel 121 oder auf den hochreflektierenden Spiegel 97. Die erzeugte Verlustwärme bleibt in jedem Fall gleich und der gewölbte Spiegel behält seine Temperatur und damit seine Position bei, was sehr wichtig ist, da er vorzugsweise mit einer kurzen Brennweite ausgeführt ist und deshalb die Abbildungsgüte der Anordnung sehr von seiner exakten Position abhängig ist. In diesem Fall hat der gewölbte Spiegel 121 die Funktion des hochreflektierenden Spiegels 97 in vorteilhafter Weise mit übernommen. Der hoch reflektierende Spiegel kann 97 aber auch eine andere Form der Oberfläche haben als der gewölbte Spiegel 121 und beispielsweise ein Planspiegel sein.

Der Strahlengang ähnelt dem eines umgekehrten Spiegelteleskops nach Herschel, das statt des gewölbten Spiegels aber eine Konvexlinse enthält, und ist in Fig. 22 näher beschrieben. Spiegelteleskope sind in dem "Lehrbuch der Experimentalphysik Band III, Optik" von Bergmann-Schäfer, 7. Auflage, De Gruyter 1978, auf der Seite 152 beschrieben. Man kann auch den gewölbten Spiegel durch einen kurzbrennweitigen Hohlspiegel ersetzen. Dadurch würde die Baulänge geringfügig vergrößert und es wären andere Strahlenkegel der aus dem Abschlußstück austretenden Strahlenbündel einzustellen, um in der Bildebene ein scharfes Bild zu erhalten. Man könnte den gewölbten Spiegel auch durch eine kurzbrennweitige Konvexlinse ersetzen. Dann müßte ein weiterer Faltspiegel eingesetzt werden, um die kompakte Bauweise zu erhalten. An dem exzentrische Rohr ist die Abfanganordnung 73 über eine Dichtung 76 gasdicht angebracht, über welche die nicht erwünschte Laserenergie, wie unter den Fig. 4, 4b und 18 beschrieben, zu einer Kühlplatte 86 mit Bohrungen 87 abgeleitet und unschädlich gemacht wird. Es ist auch möglich, bereits am Ort der Platte 114 die nicht erwünschte Laserstrahlung aus dem Strahlenpaket I₁ abzufangen und unschädlich zu machen.

Der Raum 111 in dem Gehäuse 93 ist über die Bohrung 122 mit dem Hohlraum 123 verbunden. Beide Räume können evakuiert oder vorzugsweise mit einem Schutzgas gefüllt bzw. von einem Schutzgas durchströmt werden, wie bereits beschrieben. An dem Ende des exzentrischen Rohres 113, das dem Gehäuse 93 gegenüberliegt, ist die Fassung 116 angebracht, welche die auswechselbare Objektivlinse 112 aufnimmt. Eine Dichung124 schließt den Hohlraum 123 gasdicht ab. Weiterhin kann die Fassung eine vergütete Platte 117 aufnehmen, deren Rand vorzugsweise metallisiert ist, und die mit der Fassung vorzugsweise gasdicht verlötet ist. Ihre Aufgabe es ist, den Hohlraum 123 gasdicht zu halten, wenn die Objektivlinse zum Reinigen entfernt wurde oder wenn eine Objektivlinse mit anderer Brennweite eingesetzt werden soll, um einen anderen Abbildungsmaßstab zu erzeugen. Der Raum zwischen der Objektivlinse 112 und der hoch vergüteten Platte 117 kann auch über eine nicht dargestellte Bohrung mit dem Raum 123 verbunden sein, insbesondere dann, wenn die gesamte Laserkanone wie unter Fig 4 beschrieben, ständig von einem Schutzgas durchströmt wird, das in der Nähe der Objektivlinse 112 austritt, was in Fig. 39a gezeigt ist. Die hoch vergütete Platte 117 kann aber auch optische Korrekturfunktionen enthalten, wie sie von der aus der Literatur bekannten Schmidt-Optik bekannt sind, um damit die optische Abbildungsqualität der Anordnung zu verbessern. Es ist aber auch möglich, die hoch vergütete Platte wegzulassen, insbesondere, wenn sie keine optische Korrekturfunktion enthält und die Objektivlinse gasdicht eingesetzt wurde oder durch ein hindurch strömendes Schutzgas dafür gesorgt ist, daß beim Wechseln der Objektivlinse kein Schmutz in den Raum 123 eintreten kann. An der Laserkanone 23 ist ein besonderes Mundstück 82 vorgesehen, das eine Verschmutzung der Objektivlinse 112 verhindern soll und unter Fig. 34 näher beschrieben ist.

Das exzentrische Rohr kann mit Kühlrippen 92 versehen sein, die von einem nicht dargestellten Lüfter angeblasen werden können, um die Verlustwärme besser an die Umgebung abzugeben. Die Laserkanone ist in einem Prisma um die Achse zwischen Hohlspiegel und Objektivlinse drehbar gelagert, um den Spurabstand wie unter Fig. 4 beschrieben einstellbar zu machen und den richtigen Abstand zu der Bearbeitungsfläche 81 einzustellen. Die Laserkanone kann mit einem Spannband 85 fixiert werden.

Es ist möglich, vorzugsweise zwischen dem Hohlspiegel 115 und der Objektivlinse 112 eine nicht dargestellte, verschiebbare langbrennweitige Linse anzuordnen, mit der die Fokussierung der Bearbeitungspunkte auf der Bearbeitungsfläche fein nachgestellt werden kann, ohne die Laserkanone zu verschieben. Es kann aber auch eine Vario-Fokussieroptik eingesetzt werden, wie unter Fig. 4 beschrieben wurde. Weiterhin gelten alle Beschreibungen, die zu den Fig. 4, 4a und 4b gegeben wurden, sinngemäß.

In Fig. 5 ist eine bevorzugte Ausführungsform eines Abschlußstücks 26 (Terminator) für eine Faser 28 oder Laserfiber 5, die auch eine Faser ist, gezeigt. In der optischen Nachrichtentechnik, Sensorik und Meßtechnik sind Steckverbindungen für Lichtleitfasern für niedrige Leistungen bekannt, die aber für hohe Leistungen nicht geeignet sind, weil eine zu hohe Erwärmung auftritt, die zu einer Zerstörung führt. Beispielsweise sind in dem Katalog 1/97 der Firma Schäfter & Kirchhoff, Celsiusweg 15, 22761 Hamburg auf den Seiten A1 bis A6 solche Laserdioden-Kollimatorsysteme, Strahlformungs- und Koppeloptiken beschrieben. Allerdings ist die Leistung dieser Systeme auf 1000 mW begrenzt und liegt damit um den Faktor 100 unterhalb der Anforderungen für die angestrebten Anwendungen in der Materialbearbeitung, weil eine ausreichende Wärmeabfuhr nicht gewährleistet ist. Weiterhin sind diese Systeme relativ groß im Durchmesser, so daß sich keine hohe Packungsdichte der Laserausgänge erzielen läßt. Ein weiterer großer Nachteil besteht darin, daß diese Systeme nicht ausreichend gedichtet sind; sie würden sehr schnell verschmutzen und durch eine erhöhte Absorption der Laserstrahlung verbrennen. Zuletzt soll auch noch erwähnt werden, daß die Präzision der Fassung für Faser und der Linse nicht für die angestrebte Anwendung ausreichend sind. Deshalb sind Abschlußstücke gemäß dieser Patentanmeldung wesentlich vorteilhafter. Solche Abschlußstücke können mit Vorteil für die Auskopplung von Laserstrahlung aus einer Faser 5, 28 verwendet werden, wie es in der deutschen Patentanmeldung P 198 40 935.4 des Anmelders "Abschlußstück für Lichtleitfasern" beschrieben ist.

Dieses Abschlußstück 26 kann grundsätzlich für alle Anwendungsfälle benutzt werden, bei denen es darauf ankommt, das aus einer Faser 5, 28 austretende Strahlenbündel mit einer lösbaren Verbindung präzise anzukoppeln. Ebenso ist es mit Hilfe dieses Abschlußstücks möglich, eine präzise lösbare Verbindung der Faser 5, 28 mit der übrigen Optik zu erzeugen. Das Abschlußstück besteht aus einem länglichem Gehäuse 132, das eine durchgehende, sich in axialer Richtung erstreckende, zylindrische Öffnung 130 aufweist. Das Gehäuse ist vorzugsweise aus vorgefertigtem, beispielsweise gezogenem Material, das vorzugsweise aus Glas bestehen kann, hergestellt. Die Laserfiber 5 des Fiberlasers ist vorzugsweise auf ihrem letzten Ende von ihrem Mantel befreit und vorzugsweise an ihrer Außenfläche aufgerauht, wie es in der deutschen Patentanmeldung P 197 23 267 beschrieben ist, so daß die restliche Pumpstrahlung vor dem Eintritt der Laserfiber in das Abschlußstück die Laserfiber verläßt. Die Faser 5, 28 kann zusätzlich noch mit einer ein- oder mehrlagigen Schutzhülle 131 umgeben sein, die mit dem Gehäuse 132 des Abschlußstücks beispielsweise mittels einer Klebung 142 verbunden sein kann. Das Gehäuse 132 weist Passungen 134 auf, mit denen das Gehäuse in einer Fassung 29 (Fig. 5a, Fig. 7, Fig. 8, Fig. 14) genau eingesetzt werden kann. Dabei können sich die Passungen über die gesamte Länge des Gehäuses erstrecken (Fig. 5b, 9, 10), sie können aber auch in begrenzten Bereichen des Gehäuses angebracht sein (Fig. 5, 6, 7). Es können eine oder mehrere Dichtungen 36 vorgesehen sein, die beispielsweise mittels Klebungen 142 mit dem Gehäuse 132 verbunden sind. Die Aufgabe der Dichtungen ist es, eine gasdichte Verbindung der Abschlußstücke mit den Fassungen 29 zu ermöglichen. Das Gehäuse kann im Bereich des Schutzmantels 131 und der Dichtung 36 einen anderen, beispielsweise geringeren Durchmesser haben, als im Bereich der Passungen. An einem Ende des Gehäuses 132 wird das Ende der Faser 28 bzw. der Laserfiber 5 aufgenommen und innerhalb des Gehäuses in der Öffnung 130 geführt. Am anderen Ende des Gehäuses 132 ist eine kurzbrennweitige Linse 133 befestigt, wobei das Gehäuse eine konische Erweiterung 139 aufweisen kann, um die Laserstrahlung 13 nicht zu behindern. Es können Mittel zum Justieren der Lage der Faser 5, 28 innerhalb des Abschlußstückes vorgesehen sein, um die Lage der Faser zu der Linse 133 innerhalb des Abschlußstückes und in Bezug auf die Passungen 134 zu justieren, wie in den Fig. 5b, 5c, 6, 6a, 7, 9, 9a, 10a, 10b, 11, 11a und 12 gezeigt wird. Es kann auch die radiale Lage der Faser 5, 28 durch die zylindrische Öffnung 130 bestimmt werden, wobei die Faser axial innerhalb der Öffnung verschiebbar ist. Die Lage der Linse 133 kann entweder bei der Montage ausreichend präzise montiert oder durch nicht dargestellte geeignete Mittel in Bezug auf die Faser 5, 28 und auf die Passungen 134 axial und/oder radial justiert und fixiert werden, wobei auch die Faser axial verschoben werden kann (Fig. 5b). Die Justierungen werden vorteilhaft mit einer Meß- und Justiervorrichtung vorgenommen. Durch die Justierung soll erreicht werden, daß das aus der Linse 133 austretende Strahlenbündel 144 zu den Passungen 134 in eine vorgegebene Achs- und Fokuslage mit einem definierten Kegel gebracht wird. Nach einer Fixierung der Faser 5, 28 innerhalb des Gehäuses 132 und der Linse 133 an dem Gehäuse wird die Meß- und Justiervorrichtung entfernt. Erfindungsgemäß ist es auch möglich, das Ende der Faser 5, 28 im Bereich des Abschlußstücks vor der Montage mit einem geeigneten Überzug, beispielsweise einer entsprechend dick aufgebrachten Metallisierung 141 zu versehen, um die Dauerhaftigkeit der Justierung noch zu verbessern. Die Fixierung der Faser 5, 28 innerhalb des Gehäuses 132 kann mit geeigneten Mitteln wie Kleben, Löten oder Schweißen erfolgen. An der Übergangsstelle zwischen dem Gehäuse 132 und der Schutzhülle 131 ist vorzugsweise eine elastische Masse 138 vorgesehen, die einen zusätzlichen Schutz für die Faser darstellt. Es ist gemäß der Erfindung auch möglich, die Linse 133 vorzugsweise auf ihrer dem Faserende zugewendeten Seite durch entsprechende Formgebung und Aufdampfen einer entsprechenden Schicht so auszuführen und auszurichten, daß sie die Funktion des Auskoppelspiegels 12 für den Fiberlaser mit übernimmt.

Fig. 5a zeigt eine Mehrfachanordnung von Fiberlaserausgängen mittels der Abschlußstücke aus Fig. 5. In einem Gehäuse 145 sind Bohrungen 150 zum Aufnehmen von zwei Abschlußstücken 26 für zwei Spuren vorgesehen. Weiterhin sind in Verlängerung der Bohrungen innerhalb des Gehäuses 145 je drei Stifte 148 und 149 in Reihen so angebracht, daß sie eine seitliche Begrenzung als Fassung 29 für die Abschlußstücke darstellen und für eine präzise Führung und Ausrichtung der Abschlußstücke sorgen. Die Durchmesser der Stifte 148 sind mit d₁ bezeichnet und vorzugsweise untereinander gleich. Die Durchmesser der Stifte 149 sind mit d₂ bezeichnet und ebenfalls vorzugsweise untereinander gleich. Wenn die Durchmesser der Stifte 148 gleich den Durchmessern der Stifte 149 wären, würden die Achsen der Strahlenbündel beider Spuren in der Zeichenebene parallel zu einander liegen, da die Abschlußstücke 26 zylindrische Passungen 134 aufweisen. Es sind aber in Fig. 5a die Durchmesser der Stifte 149 größer als die Durchmesser der Stifte 148 dargestellt, was dazu führt, daß die Achsen der beiden Strahlenbündel in der Zeichenebene unter einem Winkel zueinander verlaufen. Der Winkel zwischen den Strahlenbündeln ist abhängig vom Durchmesserunterschied d₂ - d₁ und vom Mittenabstand M der beiden Stiftreihen. Die Abschlußstücke sind auf der Unterseite in einer Ebene durch das Gehäuse 145 geführt und werden von oben durch einen nicht dargestellten Deckel des Gehäuses geführt, der an dem Gehäuse befestigt ist und es mittels einer nicht dargestellten Dichtung gasdicht abschließen kann. Das Gehäuse 145 kann Teil einer Aufnahme für eine optische Einheit zur Formung der Laserstrahlung sein. Die Abschlußstücke sind mittels Laschen 147 und nicht dargestellten Schrauben an dem Gehäuse 145 befestigt, wobei die Dichtungen 36 für einen gasdichten Abschluß sorgen. Die Anordnung ist nicht auf zwei Spuren beschränkt, es können weitere Bohrungen 150 vorgesehen werden und weitere Stifte 148 und 149 eingesetzt werden, um weitere Abschlußstücke für weitere Spuren einzufügen. Die Anordnung ist auch nicht auf die beschriebene eine Ebene beschränkt, es können weitere Bohrungen 150 in das Gehäuse 145 in weiteren Spuren und in einer oder mehreren weiteren Ebenen eingefügt werden, die über oder unter der Zeichenebene liegen und dabei die Stifte 148 und 149 soweit verlängert werden, daß sie Fassungen 29 für alle Spuren und alle Ebenen darstellen. Erfindungsgemäß werden zum Erzeugen eines definierten Abstands zwischen den Ebenen ebenfalls Stifte 148 und 149 verwendet. In diesem Fall verlaufen die Stifte horizontal zwischen den Abschlußstücken. Beispielsweise verlaufen die horizontal angeordneten Stifte 149 zwischen der Wand des Gehäuses 145, in der die Bohrungen 150 liegen und der Reihe der gezeigten vertikal angeordneten Stifte 149. Die horizontal angeordneten Stifte 148 verlaufen vorzugsweise in einem Abstand M parallel zu den horizontal angeordneten Stiften 149. Horizontal angeordnete Stifte sind in Fig. 2a nicht dargestellt. Die Stifte 148, 149 werden vorzugsweise aus gezogenem Stahldraht gefertigt, sie können aber auch aus anderen Materialien, beispielsweise aus gezogenem Glas bestehen. Ein Vorteil bei der Anordnung mit mehren Spuren und/oder mehreren Ebenen in der gezeigten Weise ist, daß die Stäbe 148, 149 eine gewisse Flexibilität aufweisen. Dadurch ist es möglich, das gesamte Paket aus den Abschlußstücken in Richtung der Spuren und in Richtung der Ebenen so zusammenzupressen, daß die Abschlußstücke 26 mir ihren Passungen 134 ohne Abstand an den Stiften anliegen, was für die Erzielung höchster Präzision erwünscht ist.

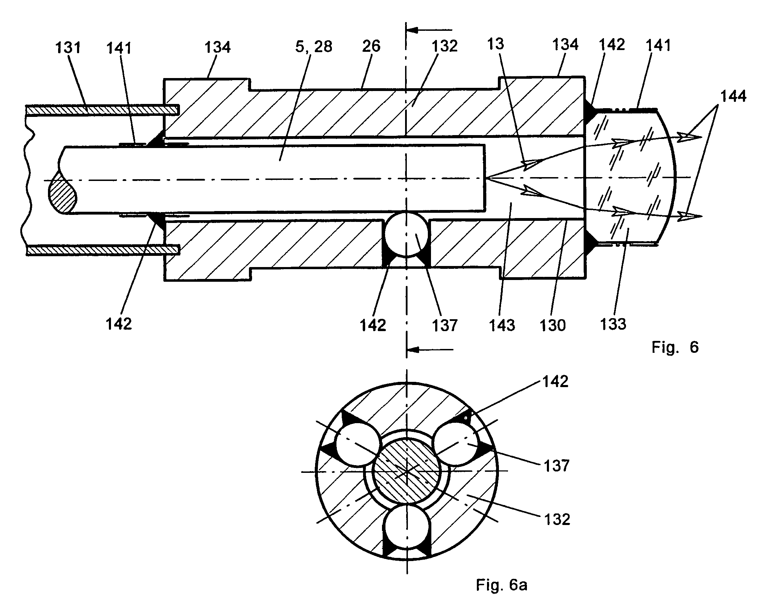

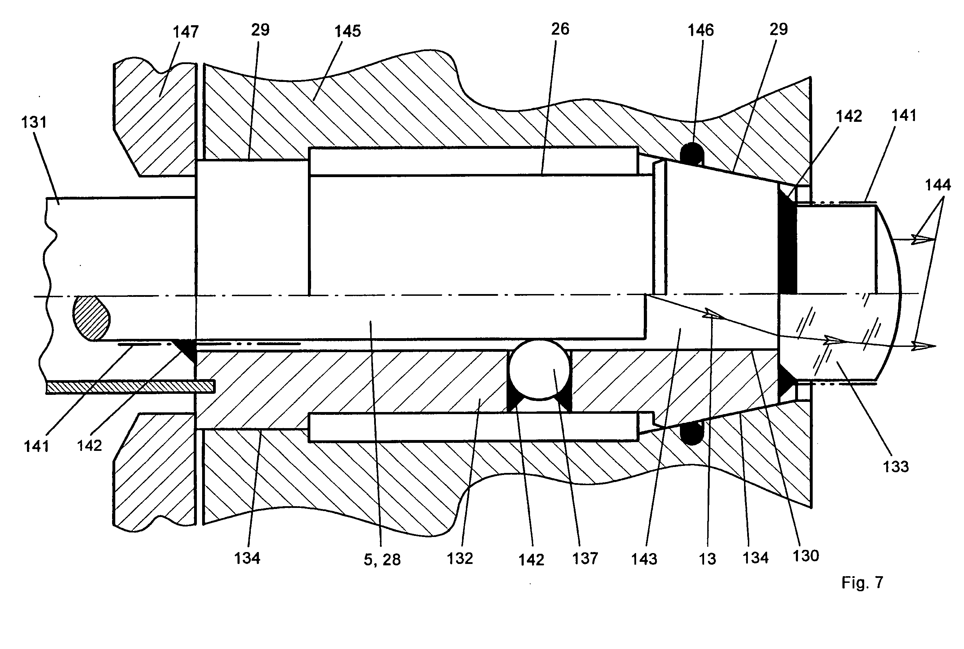

In Fig. 5b ist ein Abschlußstück 26 gezeigt, bei dem Mittel zum Justieren der Lage der Faser 5, 28 innerhalb des Abschlußstückes vorgesehen sind, um die Lage der Faser 5, 28 zu der Linse 133 innerhalb des Abschlußstückes und in Bezug auf die Passungen 134 zu justieren. Es kann auch die Lage der Linse justiert werden. Die Justierungen werden vorteilhaft mit einer Justiervorrichtung vorgenommen. Dabei können für die Justierung der Lage der Faser 5, 28 im Gehäuse 132 Justierschrauben 135, 136 (Fig, 5b, 5c, 9, 9a, 10a, 10b, 11, 11a, 12) und/oder oder Kugeln 137 (Fig. 6, 6a, 7) vorgesehen sein. Innerhalb der Justierschrauben 135, 136 oder Kugeln 137 kann die Faser 28 bzw. Laserfiber 5 auch axial verschoben werden. Die Lage der Linse 133 kann entweder bei der Montage ausreichend präzise montiert oder durch nicht dargestellte Mittel in Bezug auf die Faser 5, 28 und auf die Passungen 134 axial und/oder radial justiert und fixiert werden, wobei auch die Faser axial verschoben werden kann. Die Justierungen werden vorteilhaft mit einer Meß- und Justiervorrichtung vorgenommen. Durch die Justierung soll erreicht werden, daß das aus der Linse 133 austretende Strahlenbündel 144 mittels einer relativen Zustellung von Linse 133 und Fiber 5, 28 zu den Passungen 134 in eine vorgegebene Achs- und Fokuslage mit einem definierten Kegel gebracht wird. Nach einer Fixierung der Faser 5, 28 innerhalb des Gehäuses 132 und der Linse 133 an dem Gehäuse wird die Meß- und Justiervorrichtung entfernt. Weiterhin gilt für diese und die weiteren Ausführungsformen das unter Fig. 5 Gesagte, beispielsweise für die Metallisierung 141, die elastische Masse 138 und die Verwendung der Linse 133 als Laserspiegel.

In Fig. 5c ist ein Querschnitt durch das Abschlußstück 26 im Bereich der Justierschrauben gezeigt, aus dem zu ersehen ist, daß am Umfang verteilt, vorzugsweise 3 Justierschrauben 135 vorgesehen sind, mit denen die Faser 28 bzw. die Laserfiber 5 im Gehäuse fein justierbar ist. Weiterhin können an dem Ende des Abschlußstücks 26, an dem die Faser 28 bzw. die Laserfiber 5 eintritt, innerhalb des Abschlußstücks weitere Justierschrauben 136 vorgesehen sein, wie sie in Fig. 5b gezeigt sind. Diese Justierschrauben sind wie die Justierschrauben 135 ausgebildet. Wird nur ein Satz von Justierschrauben 135 verwendet, kann man die Faser 28 bzw. die Laserfiber 5 nur bezüglich des Winkels justieren. Werden zwei Sätze von Justierschrauben verwendet, kann man sie auch parallel zu ihrer Achse verschieben. Die Fixierung der Faser 5, 28 innerhalb des Gehäuses 132 kann mit geeigneten Mitteln wie Kleben, Löten oder Schweißen erfolgen.

Fig. 6 zeigt eine Ausführungsform des Abschlußstücks 26, bei dem anstelle von Justierschrauben kleine Kugeln 137 aus Metall oder vorzugsweise metallisiertem Glas verwendet werden, die in dem Gehäuse in ihre Position gebracht und anschließend verklebt oder verlötet werden. Es können auch mehrere Sätze von Kugeln angebracht werden.

Fig. 6a zeigt einen Querschnitt durch das Abschlußstück im Bereich der Kugeln 137.

Um zu verhindern, daß die optischen Flächen auf der Lichtleitfaser und der Seite der Linse 133, die der Lichtleitfaser zugewendet ist, durch Partikel in der umgebenden Luft verschmutzen, können die Verbindungen in den Fig. 5, 5b, 5c, 6, 6a, 7, 9, 10, 11, 11a und 12 zwischen der Linse 133 und dem Gehäuse 132 sowie zwischen den Justierschrauben 135 und 136 bzw. den Kugeln 137 und dem Gehäuse 132 hermetisch verschlossen werden. Dies kann durch geeignete Klebe- oder Lötverbindungen 142 erfolgen. Im Falle, daß eine Lötverbindung bevorzugt wird, werden die Glasteile an den entsprechenden Stellen 141 vorher metallisiert. Zur Erzielung einer größeren Festigkeit können die Klebe- oder Lötverbindungen auch den verbleibenden Spalt zwischen der Fiber 28 bzw. der Laserfber 5 und dem Gehäuse 132 bzw. der Schutzhülle 131 in der Nähe des Abschlußstückes ganz oder teilweise ausfüllen, was beispielsweise in Fig. 5 dargestellt ist. Weiterhin ist es möglich, den Innenraum 143 des Gehäuses dauerhaft zu evakuieren oder mit einem Schutzgas zu füllen.

Fig. 7 zeigt eine weitere Ausführungsform eines Abschlußstücks 26, das in einem Gehäuse 145 mit einer Fassung 29 eingesetzt ist. Bei dieser Ausführungsform ist die vordere äußere Passung 134 im Bereich der Linse 133 zur besseren Abdichtung und zur besseren Wärmeableitung konisch ausgeführt. Zusätzlich kann eine Dichtung 146 vorgesehen sein, die statt wie dargestellt auf dem linsenseitigen Ende des Abschlußstücks, auch an seinem faserseitigen Ende angebracht sein kann.

In Fig. 8 sind Fassungen 29 in einem Gehäuse 145 für mehrere konisch ausgeführte Abschlußstücke 26 gemäß Fig. 7 gezeigt. Solche Fassungen sind vorteilhaft, wenn mehrere Ausgänge von Fasern bzw. Fiberlasern nebeneinander oder neben- und übereinander angeordnet werden sollen. Dabei können die Achsen der Fassungen so angeordnet werden, daß die Achsen der aus den Abschlußstücken austretenden Strahlenbündel der nebeneinander und/oder übereinander liegenden Abschlußstücke zu einander parallel oder unter einem Winkel verlaufen. Um die Verlustwärme abzuführen, kann das Gehäuse 145 erfindungsgemäß mit Bohrungen versehen sein, durch die ein Kühlmittel geleitet wird.

Fig. 8a zeigt die rückwärtige Befestigung der Abschlußstücke 26 in dem Gehäuse 145. Zur Fixierung der Abschlußstücke 26, 94 sind Laschen 147 vorgesehen, die die Enden der Abschlußstücke an den Stellen, an denen die Fasern jeweils in das Gehäuse der Abschlußstücke 26, 94 eintreten, mittels Schrauben 151 in dem Gehäuse festsetzen.

Die Fig. 9 zeigt eine Ausführungsform eines Abschlußstücks 26 mit quadratischem oder rechteckigem Querschnitt, bei dem alle gegenüberliegenden Außenflächen parallel verlaufen und Passungen 134 sein können. Fig. 9a zeigt einen Querschnitt durch das Endstück 26 nach Fig. 9 mit quadratischem Querschnitt.

Fig. 10 zeigt eine Ausführungsform des Abschlußstücks 94 mit rechteckigem Querschnitt, wobei zwei gegenüberliegende Außenflächen trapezförmig und zwei gegenüberliegende Außenflächen parallel zueinander verlaufen. Es können auch alle gegenüberliegenden Außenflächen trapezförmig zueinander verlaufen. Die Außenflächen können Passungen 134 sein.

In Fig. 10a ist ein Längsschnitt und in Fig. 10b ist ein Querschnitt durch das Abschlußstück gemäß Fig. 10 gezeigt.

In Fig. 11 sind Abschlußstücke 26 mit trapezförmigen Querschnitten gezeigt, so daß bei einer Aneinanderreihung mehrerer Abschlußstücke durch aufeinanderfolgendes Verdrehen der Abschlußstücke um 180 ° eine Reihe von Abschlußstücken entsteht, bei der die Mittelpunkte der Abschlußstücke auf einer zentralen Linie liegen. Es können, falls erwünscht, mehrere solcher Reihen übereinander angeordnet werden, was in Fig.11 gestrichelt angedeutet ist.

In Fig. 11a sind Abschlußstücke 26 mit dreieckigem Querschnitt gezeigt, die ebenfalls in mehreren Reihen übereinander angeordnet sein können, was gestrichelt angedeutet ist.

Fig. 12 zeigt Abschlußstücke 26 mit sechseckigem Querschnitt, die zur Erhöhung der Packungsdichte wabenförmig angeordnet werden können.

Die erfindungsgemäßen Abschlußstücke ermöglichen vorteilhaft einen Aufbau der Laserstrahlungsquelle aus einzelnen Modulen.

Fig. 13 zeigt ein Anwendungsbeispiel für das Abschlußstück 26 bzw. 94 bei einer Faser 28 bzw. einer Laserfiber 5, die an beiden Enden mit je einem erfindungsgemäßen Abschlußstück versehen sind.

Es ist gemäß der Erfindung möglich, die Linse 133 vorzugsweise auf ihrer dem Faserende zugewendeten Seite durch entsprechende Formgebung und Aufdampfen einer entsprechenden Schicht so auszuführen, daß sie die Funktion des Auskoppelspiegels 12 mit übernimmt. Es ist gemäß der Erfindung auch möglich, die Linse 3, 154 durch entsprechende Formgebung und Aufdampfen einer entsprechenden Schicht so auszuführen, daß sie die Funktion des Einkoppelspiegels 7 mit übernimmt.

Es ist grundsätzlich möglich, mehrere der im vorangehenden beschriebenen Abschlußstücke in mehreren Spuren nebeneinander und in mehreren Ebenen übereinander zu einem Paket zusammenzufassen.

Es ist weiterhin möglich, die Form der Abschlußstücke anders als in den Figuren dargestellt auszuführen, z. B. daß eine zylindrische Form nach Fig. 6 trapezförmige oder rechteckförmige Passungen nach Fig. 9 oder Fig. 10 erhält.

Fig. 14 zeigt eine Ankopplung der Laserfiber 5 an eine Pumpquelle mittels des Abschlußstückes 26 über das Gehäuse 152, in dem die Pumpquelle 18 in einer Ausnehmung 153 vorzugsweise gasdicht untergebracht ist. Durch eine Dichtung 146 ist sichergestellt, daß das Abschlußstück 26 ebenfalls gasdicht abschließt, so daß in die Ausnehmung von außerhalb keine Schmutzpartikel eindringen können und sie bei Bedarf evakuiert oder mit einem Schutzgas gefüllt werden kann. Es kann auch ein ständiger Strom eines Schutzgases durch die Ausnehmung 153 fließen, insbesondere bei vorübergehender Entfernung des Abschlußstücks 26. Über eine Linse 154 wird die Strahlung der Pumpquelle18 auf den Pumpquerschnitt der Laserfiber 5 fokussiert. Die Pumpquelle kann aus einer oder mehreren Laserdioden bestehen, sie kann aber auch aus einer Anordnung von einem oder mehreren Lasem, insbesondere auch Fiberlasern bestehen, deren Ausgangsstrahlung mit geeigneten Mitteln so vereinigt wurde, daß ein geeigneter Pumpfleck entsteht.

Fig. 15 zeigt das Verzweigen der Ausgangsstrahlung aus der Laserfiber 5 eines Fiberlasers mittels eines Faserschmelzkopplers 155. Solche Faserschmelzkoppler sind in dem unter Fig. 20 näher bezeichneten Katalog der Firma Spindler und Hoyer auf der Seite G16 für Singlemodefasern beschrieben und lassen sich nach entsprechend präziser Ausrichtung direkt an den Ausgang der Laserfiber 5 anschmelzen. Das Abschlußstück 26, 94 ist in diesem Fall also an eine passive Singlemodefaser bzw. an eine andere Faser 28 und nicht direkt an einen Fiberlaser mit der aktiven Laserfiber 5 angeschlossen. Es gibt auch andere Möglichkeiten, den Laserstrahl in mehrere Teilstrahlen aufzusplitten, wie beispielsweise Strahlteilerspiegel oder holografische Strahlteiler. Der Vorteil der beschriebenen Faserschmelzkoppler ist aber, daß die Laserstrahlung soweit wie möglich innerhalb von Fasem geführt an den Bearbeitungspunkt herangeführt werden kann, was zu einer erheblichen Vereinfachung der Anordnung führt. Fig. 16 zeigt das Vereinigen der Strahlung aus den Laserfibern 5 zweier Fiberlaser über einen Faserschmelzkoppler 156. In dem Faserschmelzkoppler 156 werden die Querschnitte der beiden Eingangsfasern zu einer Faser vereinigt. Zum Beispiel beträgt der Durchmesser der Fasem an den beiden Eingängen des Faserschmelzkopplers 6 µm und der Kemdurchmesser der beiden anzuschmelzenden Laserfibern ebenfalls 6 µm. Damit wird der Kemdurchmesser der Singlemodefaser am Ausgang des Faserschmelzkopplers 9 µm, was für die betreffende Wellenlänge noch eine einwandfreie Führung eines Singlemode erlaubt. Der Durchmesser am Ausgang des Faserschmelzkopplers kann aber auch größer als 9 µm sein und es können mehr als zwei Ausgänge von Fiberlasern bzw. Fasem vereinigt werden. Das Abschlußstück 26, 94 ist in diesem Fall also an eine passive Singlemodefaser oder andere passive Faser 28 und nicht an einen Fiberlaser mit der aktiven Laserfiber 5 angeschlossen.

Es können aber auch alle anderen Arten von Lichtwellenleitern an die Fiberlaser angeschweißt oder auf andere Weise, beispielsweise über Optiken, angekoppelt werden.

Man kann auch an einen einzelnen Fiberlaser eine oder mehrere passive Singlemodefasern bzw. eine oder mehrere andere passive Fasern 28 anstatt eines Verzweigers nach Fig. 15 oder eines Vereinigers nach Fig. 16 über Optiken ankoppeln, um an diese Singlemodefaser bzw. andere Faser dann an das Abschlußstück anzuschließen.

Es ist aber auch möglich, die Ausgänge mehrerer Fiberlaser oder Singlemodefasern oder anderer geeigneter Fasern, in die Laserstrahlung eingekoppelt werden kann, über wellenlängenabhängige oder polararisierte Strahlvereiniger oder andere geeignete Maßnahmen zu vereinigen und wiederum in Singlemodefasern oder andere Fasern einzukoppeln, die an einem oder beiden Enden mit je einem entsprechendem Abschlußstück versehen sein können.

Die beschriebenen Möglichkeiten der Verzweigung und Vereinigung von Fasern lassen sich besonders vorteilhaft anwenden, wenn die erfindungsgemäße Modulbauweise auf die Laserstrahlungsquelle angewendet wird.

Fig. 17 zeigt das Prinzip eines akustooptischen Ablenkers. Auf einem Substrat 161, das auch als Kristall bezeichnet wird, ist ein piezoelektrischer Wandler 45 aufgebracht, der aus einer Hochfrequenzquelle 162 mit elektrischer Energie versorgt wird. Ein unter dem Bragg-Winkel α_{B} einfallender Laserstrahl 163 wird durch Interaktion mit dem Ultraschallfeld 164 innerhalb des Kristalls proportional zu der Frequenz der Hochfrequenzquelle aus seiner Richtung abgelenkt. Durch eine nachfolgende Linse 165 werden die Strahlen auf die Bearbeitungsfläche 81 fokussiert. Bezeichnet man den nicht abgelenkten Strahl, der gerade durch den Modulator hindurch geht, mit lₒ (Strahl nullter Ordnung), so ergibt die Frequenz f₁ eine Richtung I₁₁ (erster Strahl erster Ordnung) und die Frequenz f₂ eine Richtung I₁₂ (zweiter Strahl erster Ordnung). Beide Frequenzen können auch gleichzeitig anliegen und es entstehen gleichzeitig die Strahlen I₁₁ und I₁₂, die durch Verändern der Amplituden der Hochfrequenzquellen moduliert werden können. Ein optimaler Übertragungswirkungsgrad für die eingekoppelte Strahlung ergibt sich jeweils dann, wenn der Bragg-Winkel die Hälfte des Winkels zwischen der Richtung des Strahlenbündels I₀ und der Richtung des abgelenkten Strahlenbündels beträgt. Für den Einsatz als akustooptischer Modulator wird nur einer der Teilstrahlen genutzt. Am effektivsten ist es für die Materialbearbeitung, den Strahl nullter Ordnung zu verwenden, weil er die größere Leistung hat. Es ist aber auch möglich einen oder mehrere Strahlen erster Ordnung zu verwenden. Die Energie der nicht genutzten Strahlen wird unschädlich gemacht, indem sie beispielsweise auf einer Kühlfläche in Wärme umgesetzt wird. In Fig. 17 ist nur ein piezoelektrischer Wandler 45 vorgesehen, deshalb kann nur ein Laserstrahl 163 abgelenkt bzw. moduliert werden. Es können aber auch mehrere piezoelektrische Wandler auf dem gleichen Substrat aufgebracht werden, um damit mehrere Laserstrahlen, d. h. mehrere Kanäle gleichzeitig mit unterschiedlichen Ablenk- bzw. Modulationssignalen zu versehen. Die einzelnen Kanäle werden mit T₁ bis Tₙ bezeichnet. Wenn man, wie in Fig. 17 dargestellt, den akustooptischen Modulator in den einen Brennpunkt der Linse 165 legt und den Strahlengang durch den akustooptischen Modulator nahezu parallel ausführt, werden die Strahlen im anderen Brennpunkt der Linse 165 auf der hier angeordneten Bearbeitungsfläche fokussiert und die Strahlachsen zwischen der Linse 165 und der Bearbeitungsfläche 81 verlaufen parallel und treffen senkrecht auf die Bearbeitungsfläche. Eine solche Anordnung nennt man telezentrisch; der Vorteil ist, daß der Abstand zwischen den Strahlachsen konstant bleibt, wenn sich die Lage der Bearbeitungsfläche verändert. Dies ist für eine präzise Materialbearbeitung von hoher Bedeutung.

In Fig. 18 ist dargestellt, wie der nicht genutzte Strahl unschädlich gemacht wird. Der nicht genutzte Strahl wird über einen hoch reflektierenden Spiegel 166, der vorzugsweise zur besseren Wärmeableitung aus Metall hergestellt wird, abgefangen und umgelenkt, durch eine Konkavlinse 75 gestreut und so auf eine schräg angeordnete Platte 86 mit Bohrungen 87 gelenkt, daß keine Energie in den Laser zurück reflektiert werden kann. Die Platte 86 und auch gegebenenfalls der Spiegel 166 werden über ein Kühlsystem, das durch eine Pumpe 167 betrieben wird, gekühlt. Es ist auch möglich, anstatt der Konkavlinse eine Konvexlinse oder eine Glasplatte einzusetzen. Letzteres insbesondere, wenn durch andere Maßnahmen eine Zerstreuung des unschädlich zu machenden Strahlenbündels vorgenommen werden kann, was beispielsweise durch besondere Formung des hoch reflektierenden Spiegels 166 erfolgen kann, wie unter Fig. 4c beschrieben. Man kann die Konkavlinse 75 auch wegzulassen, wenn auf den Vorteil der kompletten Abdichtung der Laserkanone verzichtet wird. Die Platte 86 ist mit einer ebenen Oberfläche unter einem Winkel dargestellt. Es kann auch eine Platte mit einer Wölbung oder einer Höhlung verwendet werden. Die Oberfläche kann aufgerauht sein, um die Laserenergie gut zu absorbieren und sie an das Kühlmittel weiterzuleiten.

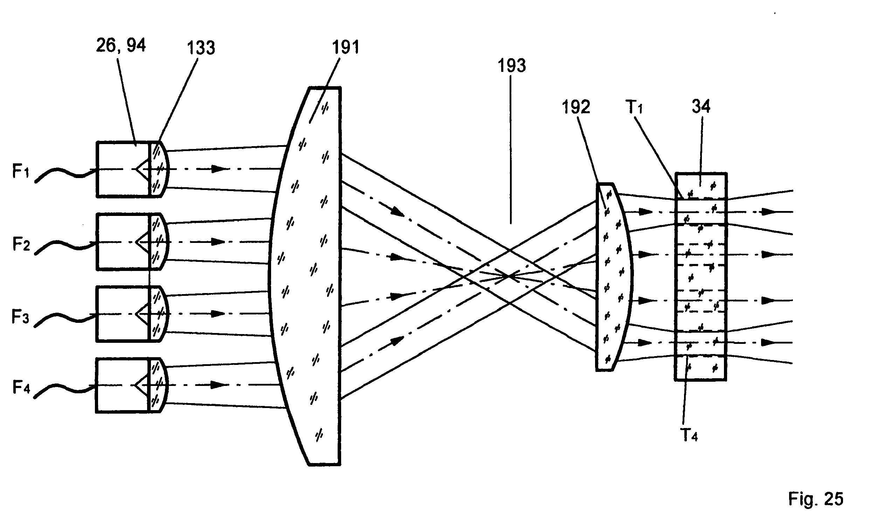

Für eine Anordnung mit mehreren Spuren ist es vorteilhaft, mehrere solcher Modulatoren auf einem gemeinsamen Kristall 34 gemäß Fig. 19 und 19a anzuordnen. Die einzelnen Modulatoren können wegen zu hoher Erwärmung nicht beliebig eng benachbart angeordnet werden. Besonders geeignet ist für die erfindungsgemäße Anordnung ist ein Modulator der Firma Crystal Technologies Inc., Palo Alto, USA, der unter der Bezeichnung MC 80 vertrieben wird und 5 getrennte Ablenk- bzw. Modulatorkanäle enthält. In diesem Fall ist der Abstand der Kanäle mit 2,5 mm vorgegeben, wobei der Strahldurchmesser mit 0,6 mm bis 0,8 mm angegeben ist. Ein ähnliches Produkt derselben Firma ist mit 10 Kanälen im Abstand von 2,5 mm ausgestattet. Der Abstand der Kanäle von 2,5 mm erfordert, daß der Durchmesser bzw. die Kantenlänge der Abschlußstücke 26, 94 kleiner als 2,5 mm ausgeführt werden. Wenn das Abschlußstück 26, 94 in seinem Durchmesser bzw. in seiner Kantenlänge aber größer als der Abstand der Kanäle im akustooptischen Ablenker bzw. Modulator ist, kann durch eine Zwischenabbildung, wie sie in Fig. 25 dargestellt ist, eine Anpassung vorgenommen werden. Ein solcher mehrkanaliger Ablenker bzw. Modulator kann auch in den Ausführungsbeispielen gemäß den Fig. 4, 4a, 4b, 4c, 36, 36a und 37 verwendet werden. Je nach Forderung der Anwendung müssen nicht alle Kanäle benutzt werden. In den gezeigten Anwendungsbeispielen werden nur 4 Kanäle dargestellt.

Es ist aber auch möglich, anstelle des akustooptischen Modulators andere Modulatoren, z.B. sogenannte elektrooptische Modulatoren einzusetzen. Elektrooptische Modulatoren sind unter den Begriffen "Lasermodulatoren", "Phasen-Modulatoren" und "Pockels-Zellen" auf den Seiten F16 bis F33 des Gesamtkatalogs G3, Bestell Nr. 650020 der Firma Laser Spindler & Hoyer, Göttingen beschrieben. Es sind auch mehrkanalige elektrooptische Modulatoren möglich verwendet worden, was in der Druckschrift "Der Laser in der Druckindustrie" von Werner Hülsbuch, Verlag W. Hülsbusch, Konstanz, auf Seite 523 in Abbildung 8-90a gezeigt ist. Verwendet man ein- oder mehrkanalige elektrooptischen Modulatoren in Zusammenhang mit einem doppelbrechenden Material, dann kann man jeden Laserstrahl in zwei Strahlen aufspalten, die über weitere Modulatoren getrennt moduliert werden können. Eine solche Anordnung wird in der Literatur auch als elektrooptischer Ablenker bezeichnet.

In Fig. 18a ist eine Anordnung mit einem elektrooptischen Modulator 168 dargestellt. In einem elektrooptischen Modulator wird beispielsweise die Polarisationsrichtung der nicht zur Bearbeitung erwünschten Laserstrahlung aus dem auftreffenden Strahlenbündel 163, gedreht (P_{b}) und anschließend in einem polarisationsabhängigen Strahlteiler, der auch als polararisationsabhängiger Spiegel 169 bezeichnet wird, die nicht zur Bearbeitung erwünschte Laserstrahlung P_{b} abgetrennt und in einen Sumpf, beispielsweise in einen Wärmetauscher, der aus einer gekühlten Platte 86 bestehen kann, geleitet. Die zur Bearbeitung erwünschte Strahlung Pₑ wird nicht in der Polarisationsrichtung gedreht und über die Linse 165 der Bearbeitungsfläche zugeführt. In den Ausführungsbeispielen nach den Figuren 4, 4b, und 4c können die ein- oder mehrkanaligen akustooptischen Modulatoren 34 durch entsprechende ein- oder mehrkanalige elektrooptische Modulatoren ersetzt werden. Ebenso kann in den Ausführungsbeispielen nach den Figuren 4, 4b, und 4c der hochreflektierende Spiegel 74, 97 durch den polarisationsabhängigen Spiegel 169 ersetzt werden (Fig. 18a), woraus sich eine Abfanganordnung 78 ergibt, und wobei der polarisationsabhängige Spiegel in den zur Bearbeitung erwünschten Strahlengang hinein reicht.

Man kann aber auch die Fiberlaser direkt modulieren. Solche direkt modulierbaren Fiberlaser, die über einen separaten Modulationseingang verfügen, werden beispielsweise von der Firma IPG Laser GmbH D-57299 Burbach, unter der Bezeichnung "Modell YPLM Series", angeboten. Der Vorteil ist, daß die akustooptischen Modulatoren und die zugehörige Elektronik für die Hochfrequenzquellen entfallen können. Außerdem kann die Übertragungseinheit vereinfacht werden, wie in Fig. 23 gezeigt ist.

Fig. 19 zeigt eine Draufsicht auf einen akustooptischen Ablenker bzw. Modulator. In der Beschreibung zu den Fig. 4, 4b und 4c wird erwähnt, daß der Raum 44 bzw.111 gemäß den Fig. 4, 4b und 4c, in dem die Modulatoren angeordnet sind, möglichst frei von solchen Komponenten sein soll, die Partikel oder Gase absondern, weil sich damit Partikel auf den hochbelasteten optischen Flächen absetzen könnten, was zum frühzeitigen Ausfall der Anordnung führen würde. Aus diesem Grunde sind die elektrischen Komponenten der Anordnung in Fig. 19 und 19a auf einer separaten Leiterplatte 171 angeordnet, die nur mit zwei Armen in den gedichteten Raum hineinragt und die elektrischen Anschlüsse zu den piezoelektrischen Gebern 45 herstellt. Die Leiterplatte 171 ist zum Modulatorgehäuse 172 vorzugsweise mittels einer Lötstelle 173 abgedichtet. Die Stirnseite der Leiterplatte ist vorzugsweise im Bereich des Raums 44 bzw. 111 durch ein nicht dargestelltes aufgelötetes Metallband versiegelt. Die Leiterplatte ist mehrlagig ausgeführt, um die einzelnen Hochfrequenzkanäle durch zwischengelegte Masseverbindungen abzuschirmen. Anstelle einer Leiterplatte kann auch eine andere Leitungsanordnung eingesetzt werden. Beispielsweise kann jeder Hochfrequenzkanal durch eine eigene abgeschirmte Leitung angeschlossen werden. Das Modulatorgehäuse 172 enthält eine Zugangsöffnung 174 zu den elektrischen Bauelementen. Der Modulatorkristall 34 kann an seiner Grundfläche metallisiert sein und ist vorzugsweise mittels einer Lötstelle oder einer Klebung 175 auf dem Modulatorgehäuse befestigt. Direkt unterhalb der Befestigungsstelle kann sich ein Anschluß 176 an ein Kühlsystem befinden, um die Verlustwärme über die Öffnungen 87 durch ein Kühlmittel abzutransportieren. Das Modulatorgehäuse 172 ist vorzugsweise durch einen Deckel 177 verschlossen, der die elektrischen Anschlüsse 181 trägt und auch die Anschlüsse für das Kühlsystem enthält, was aber nicht dargestellt ist. Mittels einer Dichtung 43 ist dafür gesorgt, daß das Modulatorgehäuse 172 gasdicht in das Gehäuse 35 bzw. 93 der Fig. 4, 4a, 4b, und 4c eingesetzt und mittels der Verbindung 42 befestigt wird.

Es ist möglich, den elektrooptischen Modulator 168 in ähnlicher Weise an dem Modulatorgehäuse (172) zu befestigen und über die Leiterplatte 171 zu kontaktieren.

In Fig. 20 ist der prinzipielle Strahlengang zu dem Ausführungsbeispiel Fig. 4 für die Strahlenbündel 144 der zugehörigen Fiberlaser F_{HD1} bis F_{HD4} angegeben. Die Strahlenbündel der Fiberlaser F_{VD1} bis F_{VD4} verlaufen teilweise deckungsgleich mit den gezeichneten Strahlen, haben aber erfindungsgemäß eine andere Wellenlänge und werden, wie aus Fig. 4a zu ersehen, über einen in Fig 20 nicht dargestellten wellenlängenabhängigen Spiegel 37 mit dem Strahlenpaket F_{HD1} bis F_{HD4} zu dem Strahlenpaket F_{D1} bis F_{D4} vereinigt. Weiterhin sind in Fig. 20 nicht die Strahlenpakete der Fiberlaser F_{VR1} bis F_{VR4} und F_{HR1} bis F_{HR4} dargestellt, die, wie aus Fig. 4a zu ersehen, ebenfalls über einen wellenlängenabhängigen Spiegel zu dem Strahlenpaket F_{R1} bis F_{R4} vereinigt werden. Wie aus der Anordnung des Streifenspiegels 46 in Fig. 4a zu erkennen ist, würden die Strahlenbündel des Strahlenpaketes F_{R1} bis F_{R4} in Fig. 20 um einen halben Spurabstand versetzt zu den gezeichneten Strahlen verlaufen. Damit enthält der vollständige Strahlengang statt der gezeichneten 4 Strahlenbündel insgesamt 8 Strahlenbündel, die auf der Bearbeitungsfläche insgesamt 8 getrennte Spuren ergeben. Es sind in Fig. 20 nur die beiden Strahlenbündel 144 der Fiberlaser F_{HD1} und F_{HD4} dargestellt. Wie unter Fig. 4 bereits erwähnt, können aber auch mehr Spuren angeordnet werden, zum Beispiel kann die Anzahl der Spuren auf der Bearbeitungsfläche auch auf 16 getrennt modulierbare Spuren erhöht werden. Diese Anordnung ermöglicht durch eine digitale Modulation des jeweiligen Lasers, d.h. der Laser wird durch Ein- und Ausschalten in nur zwei Zuständen betrieben, eine besonders einfache Steuerung und eine gute Formgebung des Bearbeitungsflecks auf der Bearbeitungsfläche. Diese digitale Modulationsart erfordert nur ein besonders einfaches Modulationssystem.

Im hochwertigen Mehrfarbendruck ist eine Unterscheidung von mehr als 100 Tonwertstufen gefordert, um ausreichend glatte Farbverläufe zu erhalten, optimal wären mehr als 400 Tonwertstufen. Wenn man z. B. im Tiefdruck, bei dem das Volumen der Näpfchen die auf den Bedruckstoff aufgebrachte Farbmenge bestimmt, ein Näpfchen aus 8 x 8 oder 16 x 16 kleinen Einzelnäpfchen zusammensetzt und die Näpfchentiefe konstant hält, kann man die bearbeitete Fläche in 64 bzw. 256 Stufen quantisieren. Wenn man aber die Näpfchentiefe durch zusätzliche analoge oder digitale Amplitudenmodulation oder eine Pulsdauermodulation der Laserenergie steuert, kann man das Volumen der Näpfchen auch bei geringer Anzahl von Spuren beliebig fein quantisieren. Wenn man die Näpfchentiefe zum Beispiel digital nur in 2 Stufen steuern würde, wie unter Fig. 28 näher beschrieben, könnte man mit 8 Spuren ein Näpfchen aus 8 x 8 Einzelnäpfchen zusammensetzen, die jeweils 2 unterschiedliche Tiefen haben können. Das heißt, man könnte das Volumen der Näpfchen in diesem Fall in 128 Stufen quantisieren, ohne den Vorteil der rein digitalen Modulationsart zu verlieren, was für die Stabilität des Verfahrens einen erheblichen Vorteil ergibt. Bei 16 Spuren und zwei Stufen in der Näpfchentiefe beträgt die Anzahl der digital möglichen Quantisierungsstufen bereits 512. Es ist auch möglich, die Näpfchen in zwei Bearbeitungsdurchgängen zu erzeugen, um die Anzahl der Tonwertstufen zu erhöhen.

Die Modulatoren 34 sowie der Streifenspiegel 46 sind in der Fig. 20 nicht dargestellt. Zur besseren Veranschaulichung ist der Querschnitt des Strahlenbündels 144 aus dem Abschlußstück des Fiberlasers F_{HD1}, das nach Passieren des wellenlängenabhängigen Spiegels deckungsgleich mit dem Strahlenbündel F_{D1} ist, mit einer Schraffur ausgelegt. Die Darstellung ist, wie alle anderen auch, nicht maßstäblich. Die beiden gezeichneten Strahlenbündel 144 ergeben auf der Bearbeitungsfläche 81 die Bearbeitungspunkte B₁ und B₄, die zum Aufbau des Bearbeitungsflecks 24 beitragen und auf der Bearbeitungsfläche 81 entsprechende Bearbeitungsspuren erzeugen. Die Achsen der Abschlußstücke 26 und der Strahlenbündel 144 der einzelnen Fiberlaser verlaufen in Fig. 20 parallel zueinander. Die Strahlenkegel der Abschlußstücke, d.h. die Form der Strahlenbündel 144, sind schwach divergierend dargestellt. In der Figur wird eine Strahltaille innerhalb der Linse 133 angenommen. Der Divergenzwinkel ist zum Durchmesser des Strahlenbündels in der zugehörigen Strahltaille umgekehrt proportional. Die Lage der Strahltaille und ihr Durchmesser kann aber durch Verändern der Linse 133 im Abschlußstück 26, 94, und/oder ihrem Abstand zu der Faser 28 oder der Laserfiber 5 beeinflußt werden. Die Berechnung des Strahlengangs erfolgt in der bekannten Weise. Siehe technische Erläuterungen auf den Seiten K16 und K17 des Gesamtkatalogs G3, Bestell Nr. 650020 der Firma Laser Spindler & Hoyer, Göttingen. Ziel ist, daß jeweils die Bearbeitungspunkte B₁ bis Bₙ auf der Bearbeitungsfläche 81 zu Strahltaillen werden, um die höchste Leistungsdichte in den Bearbeitungspunkten zu erhalten. Mit Hilfe der beiden Linsen 55 und 56 werden Strahltaillen und Spurabstände aus der Objektebene 182 , in der die Linsen 133 der Abschlußstücke 26 liegen, entsprechend dem Verhältnis der Brennweiten der Linsen 55 und 56 in eine Zwischenbildebene 183 verkleinert abgebildet. Wenn in diesem Fall der Abstand der Linse 55 von dem Abschlußstück 26 und von dem Überkreuzungspunkt 184 gleich ihrer Brennweite ist und wenn der Abstand der Linse 56 von der Zwischenbildebene 183 gleich ihrer Brennweite und gleich ihrem Abstand von dem Überkreuzungspunkt 184 ist, erhält man eine sogenannte telezentrische Abbildung, d. h. in der Zwischenbildebene verlaufen die Achsen der zu den einzelnen Spuren gehörenden Strahlenbündel wieder parallel. Die Divergenz ist aber deutlich vergrößert. Die vorzugsweise telezentrische Abbildung hat den Vorteil, daß die Durchmesser der nachfolgenden Linsen 57 und 61 nur unwesentlich größer sein müssen, als der Durchmesser eines Strahlenbündels. Die Linsen 57 und 61 verkleinern in einer zweiten Stufe das Bild aus der Zwischenbildebene 183 auf die Bearbeitungsfläche 81 in der beschriebenen Weise. Eine vorzugsweise telezentrische Abbildung, nämlich daß die Achsen der einzelnen Strahlenbündel zwischen der Objektivlinse 61 und der Bearbeitungsfläche 81 parallel verlaufen, hat hier den Vorteil, daß Abstandsveränderungen zwischen der Bearbeitungsfläche und der Laserkanone keine Veränderung im Spurabstand bringen, was sehr wichtig für eine präzise Bearbeitung ist. Die Abbildung muß nicht unbedingt wie beschrieben in 2 Stufen mit je 2 Linsen erfolgen, es gibt andere Anordnungen, die auch parallele Strahlachsen zwischen Objektivlinse und Bearbeitungsfläche erzeugen können, wie in Fig. 21 und 22 gezeigt wird. Auch sind Abweichungen in der Parallelität der Strahlachsen zwischen der Objektivlinse 61 und der Bearbeitungsfläche 81 tolerierbar, solange das Ergebnis der Materialbearbeitung zufriedenstellend ist.

In Fig. 21 ist ein prinzipieller Strahlengang zu dem Ausführungsbeispiel Fig. 4b angegeben. Die Darstellung ist nicht maßstäblich. Wie bereits in Fig. 20 handelt es sich bei den beiden Strahlenbündeln 144 der Laser F_{HD1} und F_{HD4} nur um eine Teilmenge der Strahlenbündel aller vorhandenen Laser, um das Prinzip zu erläutern. Im Gegensatz zu Fig. 20 sind aber in Fig. 21 die Achsen der einzelnen Strahlenbündel der Abschlußstücke nicht parallel, sondern unter einem Winkel zueinander angeordnet, was in Fig. 24 näher dargestellt wird und vorteilhaft durch Abschlußstücke 94 gemäß den Fig. 10, 10a und 10b erreicht wird. Durch diese Anordnung würden sich die einzelnen Strahlenbündel 144 ähnlich wie in Fig. 20 überkreuzen, ohne daß eine Linse 55 erforderlich ist. Im Bereich des gedachten Überkreuzungspunktes ist die kurzbrennweitige Zerstreuungslinse, also eine Konkavlinse 101 eingefügt, welche die ankommenden Strahlen wie dargestellt abknickt und die Strahlenbündel divergent macht, d. h. aufweitet. Die Konvexlinse 102 ist vorzugsweise im Schnittpunkt der Achsenstrahlen angeordnet und bildet zusammen mit der Linse 101 ein umgekehrtes Galiläisches Teleskop. Dadurch werden beispielsweise parallele Eingangsstrahlenbündel in parallele Ausgangsstrahlenbündel mit vergrößertem Durchmesser zwischen den Linsen 102 und 103 umgewandelt. Die gewünschte Parallelität jedes Eingangsstrahlenbündels kann wie bereits beschrieben durch geeignete Wahl von Brennweite und Abstand der Linse 133 zur Faser 28 bzw. Laserfiber 5 in den Abschlußstücken 26, 94 vorgenommen werden. Die Objektivlinse 103 fokussiert die vergrößerten Strahlenbündel auf die Bearbeitungsfläche 81 zu den Bearbeitungspunkten B₁ bis B₄, die zum Aufbau des Bearbeitungsflecks 24 beitragen und auf der Bearbeitungsfläche 81 entsprechende Bearbeitungsspuren erzeugen. Durch Veränderung der Brennweite der Linse 103 kann der Abbildungsmaßstab auf einfache Art verändert werden. Deshalb ist es vorteilhaft, wenn die Linse 103 als austauschbare Objektivlinse ausgeführt wird. Es kann aber auch eine Vario-Fokussieroptik wie bereits beschrieben verwendet werden. Wenn die Position der Linse 103 so gewählt wird, daß der Abstand zwischen den Linsen 102 und 103 der Brennweite der Linse 103 entspricht, sind die Achsen der Strahlenbündel zwischen der Linse 103 und der Bearbeitungsfläche parallel und ergeben konstante Abstände der Spuren auf der Bearbeitungsfläche, auch bei verändertem Abstand zwischen der Laserkanone und der Bearbeitungsfläche.

In Fig. 22 ist der prinzipielle Strahlengang zu dem Ausführungsbeispiel Fig. 4c angegeben. Die Darstellung ist, wie in allen anderen Figuren, nicht maßstäblich. Der Strahlengang ist dem der Fig. 21 sehr ähnlich, mit dem Unterschied, daß statt der Linse 101 ein gewölbter Spiegel 121 und statt der Linse 102 ein Hohlspiegel 115 verwendet werden. Durch die sich ergebende Faltung ist der Strahlengang erheblich kürzer. Der Strahlengang entspricht etwa dem eines umgekehrten Spiegelteleskops. Spiegelteleskope sind unabhängig von der Wellenlänge, was bei der Verwendung von Lasern mit unterschiedlicher Wellenlänge vorteilhaft ist. Die Abbildungsfehler können durch die Verwendung von asphärischen Flächen reduziert werden oder mit einer optischen Korrekturplatte 117, die aber nicht in Fig. 22 gezeigt ist, korrigiert werden. Es ist vorteilhaft, wenn die Brennweite der Objektivlinse 112 gleich ihrem Abstand zu dem Hohlspiegel ist. Dann werden die Achsen der Strahlenbündel zwischen der Linse 112 und der Bearbeitungsfläche 81 parallel und ergeben konstante Abstände der Spuren auf der Bearbeitungsfläche, auch bei verändertem Abstand zwischen der Laserkanone und der Bearbeitungsfläche. Außerdem ergibt sich ein vorteilhaft großer Abstand von der Objektivlinse zu der Bearbeitungsfläche. Es kann auch wie beschrieben eine Vario-Fokussieroptik eingesetzt werden.

In Fig. 23 ist eine Anordnung mit mehreren Lasern gezeigt, bei der die einzelnen Laserausgänge in Form der Abschlußstücke 26 auf einem Kreissegment angeordnet sind und auf einen gemeinsamen Überkreuzungspunkt 185 zielen. Diese Anordnung ist besonders für direkt modulierbare Laser geeignet, da sich dann ein sehr geringer Aufwand ergibt. In einer solchen Anordnung kann die Abbildung auf die Bearbeitungsfläche 81 mit nur einer einzigen Linse 186 erfolgen. Es kann aber auch eine Anordnung nach den Figuren 4b oder 4c zur Abbildung verwendet werden. Die Strahlenkegel der Strahlenbündel aus den Abschlußstücken sind so eingestellt, daß sich für alle Laser auf der Bearbeitungsfläche 81 eine Strahltaille und somit ein scharfes Bild ergibt. Vorzugsweise sind die Abstände zwischen dem Überkreuzungspunkt 185 und der Linse 186 sowie zwischen der Linse 186 und der Bearbeitungsfläche 81 gleich groß und entsprechen der Brennweite der Linse 186. In diesem Fall sind die Achsen der einzelnen Strahlenbündel zwischen der Linse 186 und der Bearbeitungsfläche 81 parallel und ergeben konstante Abstände zwischen den Bearbeitungsspuren, auch bei verändertem Abstand zwischen der Laserkanone und der Bearbeitungsfläche. Es können auch, wie aber nicht dargestellt, mehrere Ebenen von Lasern übereinander angeordnet werden, um die Leistungsdichte und die Leistung der Laserstrahlungsquelle zu erhöhen. Vorzugsweise sind die Ebenen der Laser parallel zueinander angeordnet. Dann ergibt sich wie in den Fig. 29 und 31 dargestellt, daß die einzelnen Strahlenbündel aus den einzelnen Ebenen in den Bearbeitungspunkten auf der Bearbeitungsfläche 81 auf einen Fleck treffen und so eine besonders hohe Leistungsdichte erzeugen.

In Fig. 24 ist eine Variante zur Fig. 23 angegeben. Es sind 4 Fiberlaser F_{HD1}, F_{HD2}, F_{HD3}, F_{HD4} mit ihren Abschlußstücken 94, die in den Fig.10, 10a, und 10b näher beschrieben werden, auf einem Kreissegment aneinander gereiht. Die Abschlußstücke 94 sind infolge ihrer Form besonders zum Aneinanderreihen geeignet. Da hier keine direkt modulierbaren Fiberlaser verwendet werden, ist ein vierkanaliger akustooptischer Modulator 34 eingefügt. Die piezoelektrischen Geber 45 können, wie in Fig. 24 gezeigt, ebenfalls auf einem Kreissegment angeordnet sein. Sie können aber auch, wie in Fig. 24a dargestellt, parallel angeordnet sein, solange die Strahlenbündel noch ausreichend von dem akustischen Feld der piezoelektrischen Geber 45 erfaßt werden. Anstelle der Linse 186 wird vorteilhaft eine Übertragungseinheit verwendet, wie sie in den Fig. 4b und 4c beschrieben ist.

In Fig. 25 wird eine verkleinernde Zwischenabbildung mittels der Linsen 191 und 192 angegeben, so daß der Abstand zwischen den einzelnen Abschlußstücken 26, 94 größer sein darf, als der Abstand zwischen den einzelnen Modulatorkanälen T1 bis T4 auf dem mehrkanaligen akustooptischen Modulator 34. Das Abbildungsverhältnis entspricht dem Verhältnis der Brennweiten der beiden Linsen 191 und 192. Die Zwischenabbildung wird vorzugsweise telezentrisch ausgebildet, indem der Abstand der Linse 191 zu den Linsen 133 der Abschlußstücke 26 bzw. 94 und zu dem Überkreuzungspunkt 193 gleich ihrer Brennweite ist, und indem der Abstand vom Überkreuzungspunkt 193 zu der Linse 192 sowie der Abstand der Linse 192 zum Modulatorkristall 34 gleich ihrer Brennweite ist. Es kann durch Verstellen des Abstands zwischen den beiden Linsen aber auch erreicht werden, daß die aus der Linse 192 austretenden Strahlen nicht mehr parallel verlaufen, sondern in einem Winkel zueinander, um daran einen Strahlengang gemäß den Fig. 21 oder 22 anzuschließen. Eine Zwischenabbildung gemäß Fig. 25 kann auch in Verbindung mit einer Anordnung der Abschlußstücke auf einem Kreissegment gemäß Fig. 23 und 24 verwendet werden.

Die Zwischenabbildung (191, 192) wird in Fig. 25 zwischen den Abschlußstücken (26, 94) und dem Modulator (34) gezeigt. Es kann aber in Strahlrichtung vor oder nach der Zwischenabbildung ein wellenlängen- oder polarisationsabhängiger Spiegel 37 angeordnet sein. Es kann auch eine Zwischenabbildung (191, 192) im Strahlengang nach dem Modulator, vor oder nach dem Streifenspiegel 46 angeordnet sein. Vorzugsweise wird die Zwischenabbildung im Strahlengang an den in Fig. 4a mit "E" bezeichneten Orten eingesetzt.

In den Fig. 26 und Fig. 26a ist dargestellt, wie der Abstand zwischen den Spuren in der Bearbeitungsebene verringert werden kann. Fig. 26 ist eine Seitenansicht, Fig. 26a die zugehörige Draufsicht. Da die aus den Abschlußstücken 26, 94 austretenden Strahlenbündel 144 einen geringeren Durchmesser haben als die Gehäuse der Abschlußstücke, bleiben Zwischenräume bestehen, die nicht ausgenutzt werden. Außerdem werden die minimalen Abstände zwischen den Spuren und die maximalen Durchmesser der Strahlenbündel durch die mehrkanaligen akustooptischen Modulatoren 34 vorgegeben. Um die Abstände zwischen den Spuren zu erhöhen, wird ein Streifenspiegel 46 vorgesehen, der streifenförmig in Abständen abwechselnd transparent und verspiegelt ist. Der Streifenspiegel 46 und die Modulatoren sind in Fig. 26a nicht gezeigt. In den Fig. 27 und 27a ist ein solcher Streifenspiegel 46 dargestellt, wobei Fig. 27a eine Seitenansicht der Fig. 27 zeigt. Auf einem geeigneten, für die Laserstrahlung transparenten Substrat 194 sind hoch reflektierende Streifen 195 aufgebracht. Die Zwischenräume 196 sowie die Rückseite sind vorzugsweise mit einer reflexmindernden Schicht versehen. Die Strahlenbündel 144 aus den Abschlußstücken 26, 94 der Fiberlaser F_{D1} bis F_{D4} treten durch den transparenten Teil des Streifenspiegels 46 ungehindert hindurch. Die Strahlenbündel 144 aus den Abschlußstücken 26, 94 der Fiberlaser F_{R1} bis F_{R4} sind so angeordnet, daß sie an den Streifen des Streifenspiegels so reflektiert werden, daß sie in einer Reihe mit den Strahlenbündein F_{D1} bis F_{D4} liegen. Damit ist der Abstand zwischen den Spuren halbiert worden.

In Fig. 27b ist ein Streifenspiegel 46 dargestellt, bei dem das Substrat des Spiegels in den Zwischenräumen 196 entfernt wurde, und vorzugsweise die gesamte verbleibende Oberfläche hoch reflektierend verspiegelt ist, so daß sich Streifen 195 ergeben. In diesem Fall können die Streifenspiegel vorzugsweise aus Metall hergestellt werden, was bei hohen Leistungen und der damit verbundenen Erwärmung besonders vorteilhaft ist.

Eine Anordnung mit Streifenspiegeln kann sehr gut mit einer Anordnung mit wellenlängenabhängigen Spiegeln kombiniert werden, wie beispielsweise in den Fig. 4, 4a, 4b, 4c gezeigt ist. Über die Linse 55 kann der weitere Strahlengang gemäß Fig. 20 angeschlossen werden. Es können die Achsen der einzelnen Abschlußstücke 26, 94 aber auch unter einem Winkel angeordnet sein, wie in den Fig. 23 und 24 gezeigt ist. In diesem Fall kann der weitere Strahlengang gemäß Fig. 21 oder 22 verlaufen und die Linse 55 entfällt.

In den Fig. 28 und 28a wird gezeigt, wie Fiberlaser verschiedener Wellenlänge, z.B. Nd:YAG Laser mit 1060 nm und solche mit einer anderen Dotierung mit 1100 nm über einen wellenlängenabhängigen Spiegel 37 miteinander vereinigt werden. Der Wellenlängenunterschied kann geringer sein, er kann aber auch größer sein. In Fig. 28a sind die Modulatoren und der wellenlängenabhängige Spiegel nicht gezeigt. Wellenlängenabhängige Spiegel sind vorzugsweise optische Interferenzfilter, die durch Aufdampfen von geeigneten dielektrischen Schichten auf ein für die betreffenden Wellenlängen transparentes Substrat hergestellt werden und als Hochpaß- oder Tiefpaßfilter sehr steile Filterkanten haben können. Wellenlängen bis zu der Filterkante werden durchgelassen, Wellenlängen jenseits der Filterkante werden reflektiert. Es sind auch Bandpaßfilter möglich. Ebenfalls kann man Laser gleicher Wellenlänge, aber verschiedener Polarisationsrichtung über polarisierte Strahlvereiniger, vorzugsweise Polarisationsprismen, zusammenführen. Erfindungsgemäß ist auch eine Kombination von polarisierten Strahlvereinigem und wellenlängenabhängigen Spiegeln möglich. In Fig. 28 treten die Strahlenbündel 144 aus den Abschlußstücken 26, 94 der Fiberlaser F_{HD1} bis F_{HD4} mit der Wellenlänge λ₁ durch einen wellenlängenabhängigen Spiegel 37 ohne Behinderung hindurch, während die Strahlenbündel F_{VD1} bis F_{VD4} mit der Wellenlänge λ₂ an ihm reflektiert werden und somit beide Strahlenbündel nach dem Spiegel ineinander vereinigt sind. Über je einen mehrkanaligen akustooptischen Modulator 34 kann erfindungsgemäß jedes Strahlenbündel getrennt moduliert werden. Da auf der Bearbeitungsfläche jeweils 2 Laser verschiedener Wellenlänge im gleichen Bearbeitungspunkt die gleiche Spur bearbeiten, ist damit eine digitale Amplitudenmodulation in 2 Stufen einfach möglich, um z. B. bei der Erzeugung von Druckformen für den Tiefdruck die Tiefe der Näpfchen zu steuern, wenn die beiden beteiligten Strahlenbündel jeweils nur ein- oder ausgeschaltet werden. Es kann aber auch ein gemeinsamer Modulator für beide vereinigten Strahlenbündel verwendet werden. In diesem Fall ist der Modulator zwischen dem wellenlängenabhängigen Spiegel 37 und der Linse 55 angeordnet, wie in den Fig. 4, 4a, 4b, 4c dargestellt. Über die Linse 55 schließt sich der weitere Strahlengang der Übertragungseinheit gemäß Fig. 20 an. Es können die Achsen einzelnen Abschlußstücke 26,94 aber auch unter einem Winkel zueinander angeordnet sein, wie in den Fig. 23 und 24 gezeigt ist. In diesem Fall kann der weitere Strahlengang gemäß Fig. 21 oder 22 verlaufen und die Linse 55 entfällt.

In Fig. 29 ist gezeigt, wie Fiberlaser mit ihren Abschlußstücken 26, 94 (Fig. 31) in mehreren Ebenen angeordnet werden können. Es liegen 3 Ebenen von Abschlußstücken, die an Fiberlaser angeschlossen sind, übereinander. Die erste Spur ist mit F₁ für die erste Ebene, mit F₂ für die zweite Ebene und mit F₃ für die dritte Ebene bezeichnet. Die Ziffern 11, 12 und 13 bezeichnen die erste Ebene der weiteren Spuren. Die Achsen der aus den Abschlußstücken austretenden Strahlenbündel 144 sind in den einzelnen Ebenen parallel zueinander ausgerichtet. Die Achsen der Strahlenbündel der einzelnen Spuren können zueinander parallel verlaufen wie in Fig. 20 dargestellt, oder unter einem Winkel zueinander gemäß Fig. 23 oder 24.

In Fig. 30 sind die Abschlußstücke 26, 94 (Fig. 31) von beispielsweise 7 Fiberlasern F₁ bis F₇ in einem Sechseck so angeordnet, daß die Achsen ihrer Strahlenbündel 144 zueinander parallel sind. Hierzu können vorteilhaft Abschlußstücke nach Fig. 12 verwendet werden. Dadurch ergibt sich der kleinstmögliche Durchmesser eines gemeinsamen Strahlenbündels aus sieben einzelnen Strahlenbündeln.

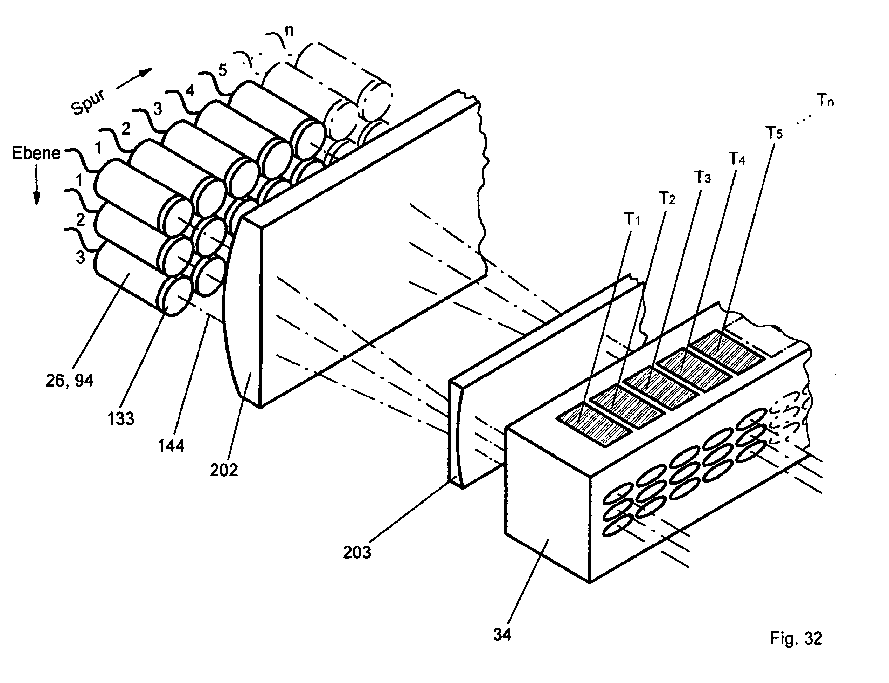

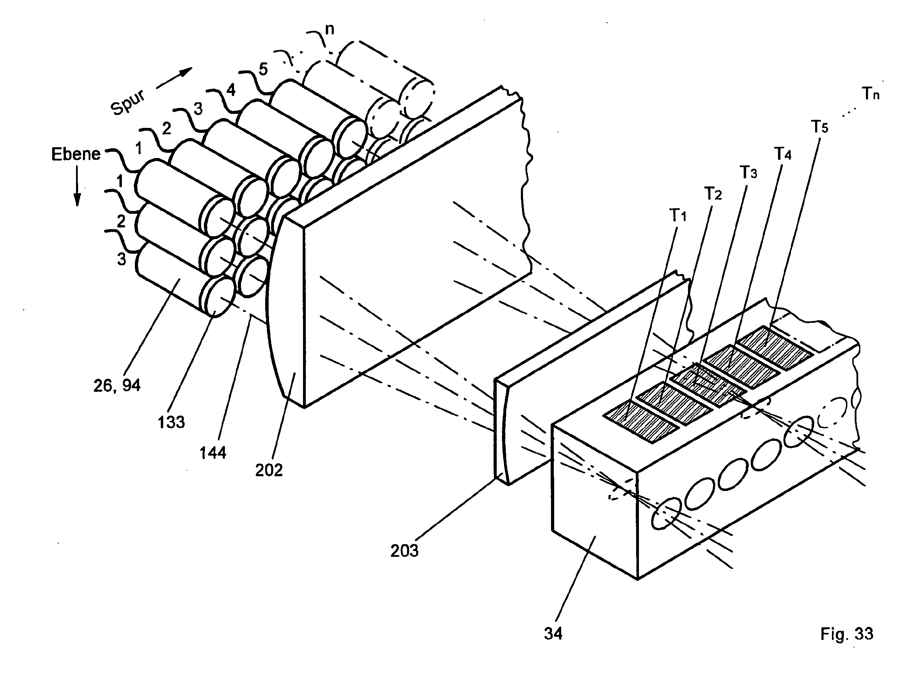

Fig. 31 ist zunächst eine Schnittdarstellung durch die drei Ebenen der ersten Spur der Fig. 29. Eine Linse 197 sammelt alle eingehenden parallelen Strahlen in ihrem Brennpunkt 201 auf der Bearbeitungsfläche 81. Dadurch werden Leistung und Leistungsdichte um die Anzahl der im Brennpunkt vereinigten Laser vervielfacht, bei 3 Ebenen also verdreifacht. Wenn die Achsen der aus den Abschlußstücken 26, 94 austretenden Strahlenbündel für Spuren und Ebenen parallel zueinander verlaufen, würden ebenfalls zusätzlich die Strahlenbündel aller Spuren in dem Brennpunkt vereinigt, und es würde auf der Bearbeitungsfläche ein gemeinsamer Bearbeitungspunkt entstehen, der eine Bearbeitungsspur erzeugt. Wenn die Achsen der aus den Abschlußstücken 26, 94 austretenden Strahlenbündel für die Spuren unter einem Winkel zueinander gemäß Fig. 23 oder 24 verlaufen, wird auf der Bearbeitungsfläche für jede Spur der Abschlußstücke bzw. ihrer Strahlenbündel ein Bearbeitungspunkt erzeugt, der eine Bearbeitungsspur erzeugt. Es werden also ebenso viele Bearbeitungsspuren nebeneinander aufgezeichnet, wie Spuren von Abschlußstücken angeordnet sind. Die Leistung der Strahlenbündel der verschiedenen Ebenen wird in dem jeweiligen Bearbeitungspunkt überlagert und die Leistungsdichte in dem gezeigten Beispiel verdreifacht. Dabei können die einzelnen Fiberlaser direkt moduliert werden, es können aber auch externe Modulatoren verwendet werden. In den Fig. 32 und 33 wird beschrieben, wie vorzugsweise ein entsprechend der Anzahl der Spuren mehrkanaliger akustooptischer Modulator zur gleichzeitigen Modulation aller Strahlenbündel der verschiedenen Ebenen verwendet werden kann.

Fig. 31 ist weiterhin eine Schnittzeichnung durch die Bündelanordnung nach Fig. 30. Es ist bekannt, daß parallele Strahlenbündel , die in eine Linse einfallen, einen gemeinsamen Fokus haben. In dem Buch "Optik und Atomphysik" von R.W. Pohl, 13. Auflage, erschienen 1976 im Springer Verlag ist auf Seite 13 in Abb. 2.21 eine solche Anordnung gezeigt. Weiterhin ist in der Druckschrift DE-A-196 03 111 eine Anordnung beschrieben, in der, wie dort aus der Fig. 1 ersichtlich, die Strahlung aus mehreren Laserdioden in jeweils eine Single-Mode-Faser eingekoppelt wird, die Strahlung am Austritt jeder Faser zu jeweils einem parallelen Strahlenbündel kollimiert wird und alle parallelen Strahlenbündel mittels einer gemeinsamen Linse auf einen gemeinsamen Fleck gerichtet werden, um eine erhöhte Leistungsdichte zu erreichen. Die Anordnung hat aber gegenüber der in Fig. 31 dargestellten Anordnung mit Fiberlasern gravierende Nachteile. Wenn man nämlich Strahlung effizient in Single-Mode-Fasern einkoppeln will, sind dazu Single-Mode-Laserdioden erforderlich, damit die Apertur der Single-Mode-Faser nicht überfüllt wird und die gesamte Strahlung in den Kern der Sigle-Mode-Faser übertragen werden kann. Single-Mode-Laserdioden sind aber nur mit sehr begrenzter Leistung herstellbar, weil die Belastbarkeit der winzigen Laserspiegel eine technologische Barriere darstellt. Deshalb sind Single-Mode-Laserdioden nur bis zu etwa 200 mW Ausgangsleistung verfügbar und pro Watt sehr viel teurer als Multi-Mode-Dioden, die mit Strahlungsleistungen bis zu mehreren Kilowatt angeboten werden. Bei Single-Mode-Fasem für 800 nm Wellenlänge beträgt das Produkt aus Kerndurchmesser und numerischer Apertur etwa 5 µm x 0,11 = 0,55 µm, während es bei einem Fiberlaser mit einem typischen Durchmesser der Pumpfiber von 300 µm und einer numerischen Apertur von 0,4 bei 300 µm x 0,4 = 120 µm liegt, was einen Faktor 220 ausmacht. Betrachtet man das Flächenverhältnis beider Fasern, so ergibt sich ein Faktor von (300/5)² = 3600. Auch wenn man beim Fiberlaser noch eine Reduzierung der Laserstrahlung um den Faktor des Absorptionswirkungsgrades von etwa 0,6 annimmt, mit dem die Pumpstrahlung in Laserstrahlung umgesetzt wird, ist die erzielbare Leistung der Laserstrahlung am Austritt eines Fiberlasers um mehrere Größenordnungen höher als die Leistung am Austritt einer Single-Mode-Fiber. Auch wenn man Single-Mode-Dioden oder andere Laserstrahlungsquellen sehr hoher Leistung zur Verfügung hätte, wäre es dennoch nicht möglich, diese befriedigend in Single-Mode-Fasern einzukoppeln, da die Fasern bei der geringsten Fehljustierung am Fasereintritt verbrennen würden. Dieses Problem gibt es bei den Fiberlasern nicht, da zum Pumpen ein relativ großer Faserdurchmesser zur Verfügung steht und die Energie erst innerhalb der Laserfiber in den Single-Mode-Kern der Laserfiber übertragen wird, was problemlos und mit gutem Wirkungsgrad möglich ist.

Die Linse 197 in Fig. 31 vereinigt in ihrem Brennpunkt 201, der den Bearbeitungsfleck 24 darstellt, auf der Bearbeitungsfläche 81 die gesamte Leistung aller sieben Strahlenbündel F₁ bis F₇ der entsprechenden Fiberlaser. Damit werden die Leistung und die Leistungsdichte im Brennpunkt um den Faktor sieben höher, als die eines einzelnen Strahlenbündels. Wenn z. B. 100 W erforderlich sind, um auf der Bearbeitungsfläche eine erforderliche Leistungsdichte zu erzeugen, so reichen in diesem Fall sieben Laser mit einer Strahlungsleistung von je etwa 15 Watt aus. Es können auch mehr als sieben Laser angeordnet werden. Die Laser sind vorzugsweise direkt modulierbar. Es ist aber auch möglich, alle sieben Strahlenbündel separat oder insgesamt mit einem externen Modulator zu modulieren oder mehrere solcher Bündelanordnungen einem mehrkanaligen Modulator in solcher Weise zuzuführen, daß die Modulatorkanäle vorzugsweise im Brennpunkt einer jedem Bündel zugehörigen, vereinigenden Linse 197, angeordnet sind. Es ist auch möglich, die vervielfachte Leistung eines jeden Bündels vor oder nach der Modulation in Fasern einzukoppeln. Weiterhin können solche Bündelanordnungen in vorteilhafter Weise in Laserkanonen gemäß den Fig. 4, 4a, 4b, 4c eingesetzt werden. Vorteilhaft ist es, die einzelnen Laser separat zu modulieren. Das ist besonders geeignet, wenn eine hohe Anzahl von Lasern verwendet wird, da dann beispielsweise durch digitale Modulation der einzelnen Laser eine quantisierte Modulation, die einer Analogmodulation ähnlich ist, eine Quasi-Analogmodulation der vereinigten Laserstrahlung ermöglicht wird. Es ist aber auch möglich, die Strahlenbündel 144 aller Laser gemeinsam beispielsweise mit einem akustooptischen Modulator zu modulieren. In diesem Fall muß das Ultraschallfeld der Modulatorzelle eine solche Größe aufweisen, daß das gesamte in Fig. 30 dargestellte Strahlenbündel moduliert werden kann. Allerdings wird dadurch die Schaltzeit des Akustooptischen Modulators so groß, daß infolge der Rotationsbewegung der die Bearbeitungsfläche enthaltenden Trommel die Form der zu gravierenden Näpfchen gestört wird. Es ist aber möglich, den Laserstrahl mittels einer Ablenkbewegung in Richtung der Drehbewegung des zu gravierenden Druckzylinders während der Gravur mitzuführen und dadurch einen auf der Bearbeitungsfläche stehenden Bearbeitungsfleck 24 zu erzielen. Die Ablenkbewegung kann erfindungsgemäß mit dem gleichen akustooptischen Modulator erfolgen, mit dem die Amplitudenmodulation erfolgt. Es kann aber auch eine weitere akustooptische Zelle eingesetzt werden, mit der die Ablenkung erfolgt.

Fig. 32 zeigt in einem weiterführenden Beispiel, wie durch Anordnen von Abschlußstücken 26, 94 mit ihren zugehörigen Fiberlasern in mehreren Ebenen die Leistungsdichte auf der Bearbeitungsfläche erheblich erhöht werden kann, aber gleichzeitig eine Modulation aller zu einer Spur gehörenden Strahlenbündel 144 mit einem einzigen, entsprechen der Anzahl der Spuren mehrkanaligen akustooptischen Modulator 34 durchgeführt werden kann. In diesem Beispiel sind die Abschlußstücke in 3 übereinander liegenden Ebenen zu je n Spuren angeordnet. Die Leistung sämtlicher Strahlenbündel 144 aller Ebenen soll für jede Spur in der Bearbeitungsfläche weitgehend in einem Bearbeitungspunkt gebündelt sein, um eine hohe Leistungsdichte zu erzielen. Die Abschlußstücke 26, 94 sind in Spuren und Ebenen beispielsweise parallel angeordnet, indem die Abschlußstücke 26 eng aneinander gereiht sind. Dazu können wie gezeigt, Abschlußstücke mit rundem Querschnitt verwendet werden, vorzugsweise werden aber Abschlußstücke mit quadratischem Querschnitt nach Fig. 9 und 9a eingesetzt. Bei der parallelen Anordnung der Spuren kann das dargestellte Abbildungssystem mit den zylindrischen Linsen 202 und 203, auch Zylinderoptik genannt, beispielsweise sinngemäß zu einer Anordnung, wie die der Fig. 4, hinzugefügt werden. Wenn die einzelnen Spuren aber unter einem Winkel gemäß den Fig. 23 oder 24 verlaufen sollen, werden vorzugsweise Abschlußstücke 94 nach den Fig. 10, 10a und 10b verwendet. Auch in dieser Anordnung bleiben die Strahlenbündel der einzelnen Ebenen parallel, die Passungen der Abschlußstücke 94 sollen hierfür in der Seitenansicht Fig. 10a parallel verlaufen. Wenn die Achsen der Strahlenbündel für die Spuren unter einem Winkel zueinander verlaufen, kann die Zylinderoptik mit den Linsen 203 und 203 beispielsweise sinngemäß zu Anordnungen gemäß den Fig. 4b oder 4c hinzugefügt werden. Die aus den Abschlußstücken austretenden Strahlenbündel 144 sind auf die konvexe Zylinderlinse 202 gerichtet, welche die Strahlen in ihrem Fokus zu einem Strich mit der Länge des Strahldurchmessers vereinigen würde. Im Bereich des Fokus der langbrennweitigen Zylinderlinse 2023 ist eine konkave Zylinderlinse 203 mit geringerer Brennweite als die Zylinderlinse 202, so angebracht, daß ihr Fokus mit dem Fokus der Zylinderlinse 202 übereinstimmt. Dadurch werden die Strahlen, welche die Linse 203 verlassen, wieder parallel. Die Abstände zwischen den einzelnen Ebenen haben sich aber gegenüber den Abständen, den die Strahlenbündel beim Verlassen der Abschlußstücke 26, 94 hatten, um das Verhältnis der Brennweiten der beiden Zylinderlinsen reduziert. In Richtung der Spuren sind die Abstände der Strahlenbündel unverändert geblieben, da die Zylinderlinsen in dieser Richtung keine brechende Wirkung zeigen. Dadurch ergeben sich in dem Modulator elliptische Strahlquerschnitte. Der Zweck dieser Anordnung ist, die gesamte Höhe der 3 übereinander liegenden Ellipsen so klein zu machen, daß sie in etwa der langen Achse der Ellipsen entspricht, um in den Kanälen des akustooptischen Modulators ähnliche Verhältnisse zu schaffen, wie bei einem runden Strahlquerschnitt, damit beispielsweise ähnlich kurze Schaltzeiten erzielt werden.

In Fig. 33 ist gezeigt, daß man aber auch den Abstand der beiden Zylinderlinsen etwas verändern kann, so daß sich im Modulator alle drei elliptischen Strahlenbündel überlappen, was zwar eine geringere Schaltzeit im akustooptischen Modulator ergibt, aber auch eine höhere Leistungsdichte im Modulatorkristall mit sich bringt. Man kann zu diesem Zweck die Zylinderlinse 203 auch weglassen.

Die Zylinderoptik (202, 203) wird in Fig. 25 zwischen den Abschlußstücken (26, 94) und dem Modulator (34) gezeigt. Es kann aber in Strahlrichtung vor oder nach der Zylinderoptik ein wellenlängen- oder polarisationsabhängiger Spiegel 37 angeordnet sein. Es kann auch eine Zylinderoptik (202, 203) im Strahlengang nach dem Modulator, vor oder nach dem Streifenspiegel 46 angeordnet sein. Vorzugsweise wird die Zwischenabbildung im Strahlengang an den in Fig. 4a mit "E" bezeichneten Orten eingesetzt.

Fig. 34 zeigt zum Entfernen des von der Bearbeitungsfläche abgetragenen Materials ein Mundstück 82, dessen vorwiegende Aufgabe es ist, durch eine gerichtete Strömung dafür zu sorgen, daß sich im optischen Strahlengang zwischen Objektivlinse und Bearbeitungsfläche 81 möglichst keine Wolken aus Gasen und/oder abgetragenem Material bilden, die einen Teil der Laserenergie absorbieren und sich auf der Bearbeitungsfläche absetzen und so das Arbeitsergebnis negativ beeinflussen.

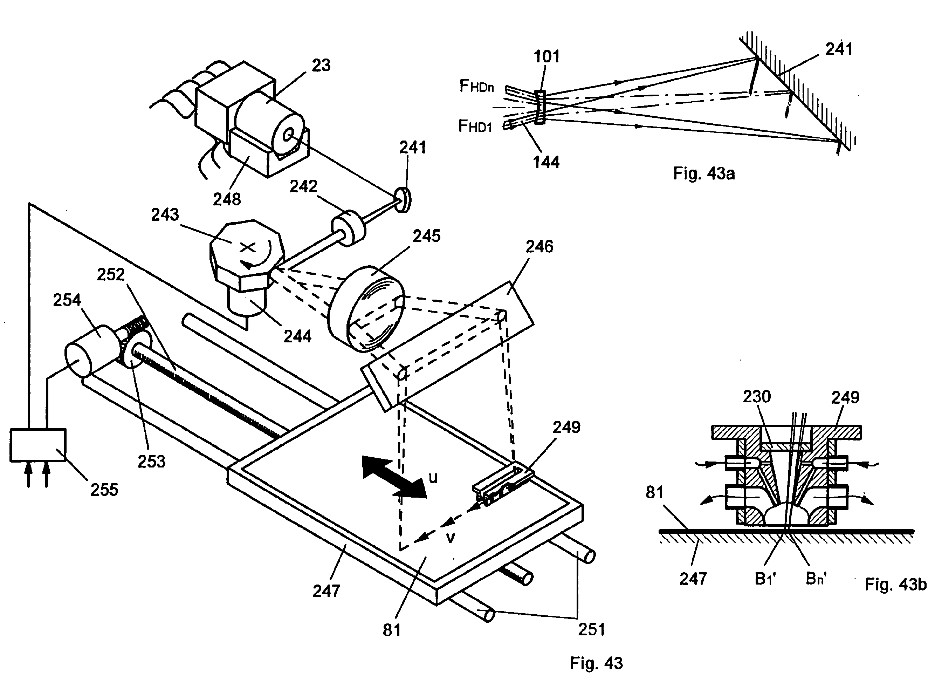

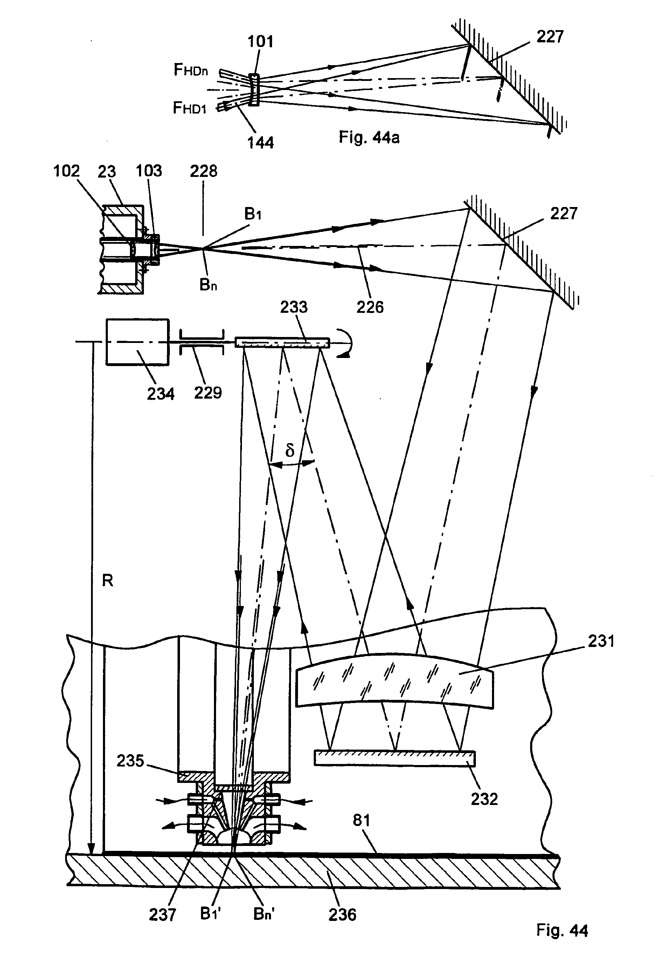

Das Mundstück 82 vermeidet infolge seiner besonderen Formgebung die geschilderten Nachteile. Es ist vorzugsweise mit einfach lösbaren Verbindungen 204 an der Laserkanone 23 befestigt, so daß es einfach entfernt und gereinigt werden kann und auch eine einfache Reinigung sowie einen einfachen Austausch der nicht dargestellten Objektivlinse 61, 103, 112 ermöglicht. In einem vorzugsweise zylindrischen Grundkörper 205 befinden sich eine zylindrische Bohrung 206 zur Anpassung an die Objektivlinse und eine vorzugsweise konische Bohrung 207 als Durchlaß für die Strahlenbündel sowie eine weitere vorzugsweise zylindrische Bohrung, die den Bearbeitungsraum 211 darstellt. Der Abstand des Grundkörpers 205 zur Bearbeitungsfläche 81 soll nicht zu groß sein. In dem Bearbeitungsfleck 24 liegen die nicht dargestellten Bearbeitungspunkte zur Erzeugung der einzelnen Bearbeitungsspuren auf dem zu bearbeitenden Material. In dem Grundkörper befindet sich vorzugsweise eine breite umlaufende Absaugnut 212, die über mehrere Absaugkanäle 213, die einen großen Querschnitt haben sollen, mit dem Bearbeitungsraum 211 verbunden ist. Vorzugsweise sind 3 bis 6 Absaugkanäle 213 vorhanden. In dem Grundkörper befindet sich eine weitere vorzugsweise umlaufende Zuluftnut 214, die über Düsenbohrungen 215 mit dem Bearbeitungsraum 211 und über kleinere Bypassbohrungen 216 mit der konischen Bohrung 207 verbunden ist. Vorzugsweise sind 3 bis 6 Düsenbohrungen 215 und 3 bis 20 Bypassbohrungen 216 auf dem Umfang der Zuluftnut 214 verteilt. Alle Bohrungen können gegen einander und gegenüber den Absaugkanälen 213 auf dem Umfang versetzt sein. Es können auch weitere Bypassbohrungen angebracht und auf die Objektivlinse gerichtet sein, was aber nicht dargestellt ist. Der Grundkörper ist umgeben von einem gasdicht aufgebrachten Ring 217, der im Bereich der Nut 212 mehrere Absaugstutzen 221 enthält, an die Absaugschläuche angeschlossen sind, die über ein Absaugfilter zu einer Vakuumpumpe geführt werden. Absaugschläuche, Absaugfilter und Vakuumpumpe sind in Fig. 34 nicht gezeigt. Im Bereich der Nut 214 enthält der Ring mindestens einen Zuluftstutzen 222, über den mittels eines Zuluftschlauches gefilterte Druckluft zugeführt wird. Mittels eines Ventils kann die Zuluftmenge so eingestellt werden, daß sie gerade ausreicht, um den Bearbeitungsraum ausreichend zu spülen und daß sie über die Bypassbohrungen einen geringen Luftstrom entlang der konischen Bohrung erzeugt, der ein Eindringen von Partikeln in die konische Bohrung weitgehend verhindert. Zuluftschlauch, Ventil und Filter sind in Fig. 34 nicht dargestellt. Die Düsenbohrungen 215 sind so auf den Bearbeitungsfleck 24 gerichtet, daß die bei der Bearbeitung entstehenden Wolken aus Gas, festem und geschmolzenem Material zügig aus dem Strahlengang heraus geblasen werden, damit diese so wenig wie möglich Laserenergie absorbieren und das Bearbeitungsergebnis nicht negativ beeinflussen können. Mit der Zuluft können auch oxydationsfördernde oder oxydationshemmende oder andere Gase eingeblasen werden, die sie sich positiv auf den Bearbeitungsvorgang auswirken. Durch den Spalt zwischen der Bearbeitungsfläche und dem Grundkörper 205 fließt auch eine geringe Luftmenge aus der Umgebung mit durch den Bearbeitungsraum zu den Absaugkanälen, was aber nicht dargestellt ist. Das Filter in der Absaugleitung ist in der Nähe des Mundstückes gut zugänglich angebracht und sorgt für eine Reinhaltung der Vakuumpumpe. Es ist auch möglich, das Filter direkt in der Absaugnut 212 anzubringen. Wie unter Fig. 39a beschrieben, ist es hilfreich, wenn zusätzlich ein Schutzgas über die Objektivlinse geführt wird. Sollte das Mundstück 82 durch die von der Bearbeitungsfläche reflektierte Laserstrahlung zu heiß werden und reicht die durchströmende Luft zur Kühlung nicht aus, dann kann das Mundstück mit zusätzlichen Bohrungen versehen werden, durch die ein Kühlmittel gepumpt wird, was aber nicht in den Figuren gezeigt ist. Es kann sich auch innerhalb der zylindrischen Bohrung 205 eine einfach zu wechselnde, beiderseits hoch vergütete Glasplatte 218 befinden, die Schmutzpartikel von der Objektivlinse fernhält und ihrerseits bei Bedarf oder vorbeugend einfach ausgetauscht werden kann. Die Form des Mundstücks kann auch von der beschriebenen und dargestellten Form abweichen. Beispielsweise müssen die Bohrungen nicht wie beschrieben zylindrisch oder konisch ausgeführt sein, sie können in der Form variiert werden. Ebenso können beispielsweise die Düsenbohrungen und Absaugkanäle beliebige Formen annehmen und auch unsymmetrisch angeordnet werden. Beispielsweise können in Fig. 34 die Düsenbohrungen mehr im oberen Teil der Figur angeordnet werden, während die Absaugkanäle mehr im unteren Teil der Figur liegen. Man kann beispielsweise auch auf die Düsenbohrungen und/oder die Bypassbohrungen verzichten. Auch kann die Form des Mundstückes abgewandelt werden, insbesondere wenn die Form der Bearbeitungsfläche und die Art der Relativbewegung zwischen Bearbeitungsfläche und Laserstrahlungsquelle dies verlangen. Es ist denkbar, eine abgewandelte Form des beschriebenen Mundstückes einzusetzen, wenn das zu bearbeitende Material sich beispielsweise statt auf einer Trommeloberfläche auf einer ebenen Fläche befindet und die Laserstrahlung zeilenweise daran vorbeigeführt wird. In diesem als Flachbett- Anordnung bezeichneten Fall, der in den Fig. 43, 43a und 43b näher dargestellt ist, wird das Mundstück der Zeilenlänge entsprechend langgestreckt ausgeführt und seiner Länge entsprechend mit einem langgezogenen Bearbeitungsraum versehen. Von einer oder von beiden Seiten ist das Mundstück mit Düsenbohrungen und Absaugkanälen bestückt. Die Glasplatte würde in diesem Fall eine Rechteckform erhalten und sich über die gesamte Länge der Anordnung erstrecken. Man könnte die Fig. 34 in diesem Fall sinngemäß als einen Querschnitt des langgezogenen Mundstücks betrachten. Auch wenn das zu bearbeitende Material sich in einem Hohlzylinder befindet, was in den Fig. 44a und 44b näher dargestellt ist, läßt sich ein ähnliches Mundstück herstellen, indem das für die Flachbett-Anordnung beschriebene Mundstück in seiner Längsrichtung so an die Form des Hohlzylinders angepaßt wird, daß sich über die gesamte Länge ein geringer Spalt zwischen der Bearbeitungsfläche und dem Mundstück ergibt. Die Glasplatte würde in diesem Fall eine Rechteckform erhalten und über die gesamte Länge der Anordnung durchgebogen sein.

In der Nähe des Mundstücks, aber nicht notwendigerweise mit ihm oder mit der Laserkanone verbunden, kann sich eine an sich bekannte Schabeeinrichtung befinden, die aber nicht in den Figuren gezeigt ist. Es ist beispielsweise die Aufgabe der Schabeeinrichtung, während des Bearbeitungsvorgangs an Tiefdruckformen die an den Rändern der Näpfchen entstehenden Aufwerfungen abzuschaben. Des weiteren kann sich vorzugsweise in der Nähe der Laserkanone eine nicht dargestellte Bürsteneinrichtung befinden, die die ausgehobenen Näpfchen ausbürstet und von anhaftendem Schmutz befreit. Weiterhin kann sich erfindungsgemäß vorzugsweise an der Laserkanone eine nicht dargestellte Meßeinrichtung befinden, welche die Position und /oder das Volumen der Näpfchen unmittelbar nach ihrer Erzeugung mißt. Im Gegensatz zu Näpfchen, die mittels elektromechanischer Gravur oder mit einem einzelnen Laserstrahl hergestellt worden sind, läßt sich für Näpfchen, die mit der erfindungsgemäßen Laserstrahlungsquelle erzeugt werden und steile Kanten und konstante Tiefe haben, das Volumen erfindungsgemäß präziser bestimmen, indem mit einer speziellen, schnellen Kamera die Fläche des Näpfchen ermittelt und daraus das Volumen abgeleitet wird. Dabei ist es vorteilhaft, eine Serie von Näpfchen auszumessen, um Meßfehler zu reduzieren. Es liegt im Rahmen der Erfindung, daß zu diesem Zweck spezielle Kontrollfelder in einem Bereich des Tiefdruckzylinders graviert werden, der zu Kontrollmessungen und/oder zu Kontrolldrucken vorgesehen ist. Mit dieser Meßgröße für die erzeugten Näpfchen und mit der für diesen Ort vorgegebenen Näpfchengröße kann ein Soll- Ist- Vergleich erstellt werden. Das Ergebnis kann dazu verwendet werden, um die Position und /oder das Volumen der anschließend erzeugten Näpfchen zu korrigieren.

In Fig. 35 sind die Verhältnisse auf der Bearbeitungsfläche dargestellt. Die Bearbeitungspunkte sind mit Indizes gekennzeichnet, die auf die sie erzeugenden Strahlenbündel der Fiberlaser gemäß den Figuren 4, 4a, 4b und 4c hindeuten. Zum Beispiel erzeugen die Strahlenbündel der Fiberlaser F_{VR1} und F_{HR1} gemeinsam den Bearbeitungspunkt B_{FVR1+FHR1}. Der Durchmesser der Bearbeitungspunkte ist mit B bezeichnet, ihr Abstand mit A. In dem unter Fig. 19 und 19a beschriebenen mehrkanaligen akustooptischen Modulator ist der zulässige Durchmesser des Strahlenbündels 144 kleiner als der Abstand der Kanäle des Modulators. Auch in den Abschlußstücken 26, 94 kann der Durchmesser des Strahlenbündels 144 nicht ohne großen Aufwand ebenso groß gemacht werden, wie der Außendurchmesser der Abschlußstücke. Hieraus ergibt sich, daß A somit größer als B ist. Dies führt zu unerwünschten Zwischenräumen bei den Bearbeitungsspuren 224, die sich infolge der Relativbewegung zwischen dem zu bearbeitenden Material und der Laserkanone ergeben. Die Bearbeitungsspuren haben eine Spurbreite D, die dem Durchmesser der Bearbeitungspunkte B entsprechen und in Fig. 35 mit 1 bis 8 gekennzeichnet sind. Um diese Zwischenräume zu reduzieren, wurden bereits mittels des Streifenspiegels wie unter Fig. 4, 4a, 26 und 26a beschrieben, zwei Strahlenpakete ineinander verschachtelt, um die Zwischenräume zu halbieren. Um die verbleibenden Zwischenräume noch weiter zu reduzieren oder ganz zu vermeiden oder die Bearbeitungsspuren 224 zur Überlappung zu bringen, kann man die Laserkanone gegenüber der relativen Bewegungsrichtung zwischen dem zu bearbeitenden Material und der Laserkanone so verdrehen, daß die Spuren näher aneinander kommen, was in Fig. 35 gezeigt ist. Um beispielsweise einen Abstand C der Bearbeitungsspuren 224 zu erzielen, der gleich dem Durchmesser B der Bearbeitungspunkte ist, muß die Laserkanone nach der Beziehung cos β = B/A um den Winkel β verdreht werden. Durch die Verdrehung der Laserkanone entstehen auf der Bearbeitungsfläche Verzerrungen in der Bildinformation, da die Anfänge in den einzelnen Bearbeitungsspuren nunmehr gegeneinander verschoben sind. Diese Verzerrungen werden aber bereits bei der Aufbereitung der Bearbeitungsdaten kompensiert. Es ist auch möglich, diese Kompensation durch eine einstellbare unterschiedliche Verzögerung der Signale in den einzelnen Datenkanälen unmittelbar vor der Modulation vorzunehmen oder die Verzerrungen einfach hinzunehmen. Weitere Möglichkeiten zur Einstellung und Verringerung der Abstände der Bearbeitungsspuren sind in den Fig. 36, 36a, 36b 36c und 37 dargestellt.

In Fig. 36 ist das Prinzip dargestellt, wie sich Bearbeitungspunkte B₁...B₄ auf der Bearbeitungsfläche 81 ergeben, wenn in einem mehrkanaligen akustooptischen Modulator 34 mit 4 getrennten Kanälen die einzelnen Kanäle mit verschiedenen Frequenzen f₁ bis f₄ beaufschlagt werden. Dabei wird beispielsweise der Modulatorkanal T₁ (Fig. 36a) mit einer Frequenz f₁ versorgt, wobei f₁ mit höherer Frequenz gegenüber f₄ im Modulatorkanal T₄ (Fig. 36a) vorgesehen ist, so daß sich für die Bearbeitungsspur 1 ein größerer Abstand von I₀ ergibt, als für die Bearbeitungsspur 4. Die Kanäle T₂ und T₃ sind mit entsprechenden Frequenzen f₂ und f₃ versehen, um die gezeigte Anordnung der Bearbeitungsspuren 224 zu erzielen. Man kann aber auch die Frequenzen so anordnen, daß die Frequenz f₁ geringer ist als die Frequenz f₄. Auch ist es möglich, den einzelnen Modulatorkanälen T₁ bis T₄ die Frequenzen f₁ bis f₄ willkürlich zuzuordnen. In diesem Fall ist eine Linse 165, wie sie in den Fig. 17 und Fig. 36a dargestellt ist, nicht unbedingt erforderlich, sondern die aus den Abschlußstücken austretende Laserstrahlung kann so fokussiert sein, daß sich in den Bearbeitungspunkten auf der Bearbeitungsfläche ein scharfes Bild ergibt.

In Fig. 36a ist an einem nicht maßstäblichen Beispiel mit rotierender Trommel, auf der die Bearbeitungsfläche 81 liegt, dargestellt, wie die durch die Linse 165 fokussierten Strahlenbündel auf der Mantellinie M der Trommel auftreffen. Dabei entspricht die Lage der Durchstoßungspunkte P der Strahlenachsen mit der Ebene der Linse 165 dem Prinzip der Fig. 36. Dazu ist der Modulator 34 mit den Kanälen T₁ bis T₄ zu den Strahlenbündeln 144 der Fiberlaser F₁ bis F₄ entsprechend angeordnet. Durch eine geeignete Wahl der Frequenzen f₁ bis f₄ erreicht man, daß die Teilstrahlen, welche die Bearbeitungspunkte B₁ bis B₄ erzeugen, in gewünschten Abständen in Richtung der Mantellinie M zueinander liegen. Dies hat den Vorteil, daß die Lage jedes Bearbeitungspunktes und somit jeder Bearbeitungsspur 224 individuell durch Verstellen der zugehörigen Frequenz einstellbar ist. Ein besonderer Vorteil der Anordnung ergibt sich, wenn man, wie in Fig. 17 angegeben, den mehrkanaligen akustooptischen Modulator etwa in dem einen und die Bearbeitungsfläche etwa in dem anderen Brennpunkt der Linse 165 anordnet und die Achsen der Strahlenbündel der Fiberlaser F₁ bis F₄ in etwa parallelen Ebenen anordnet. Dann liegen die Bearbeitungspunkte B₁ bis B₄ in einer Reihe auf der Mantellinie M (Fig. 36a) und die Achsen der Teilstrahlen, welche die Bearbeitungspunkte bilden, sind parallel und stehen senkrecht auf der Bearbeitungsfläche (Fig. 17). Ein weiterer Vorteil der Anordnung besteht darin, daß der Braggwinkel zur Optimierung des Wirkungsgrades für jeden Modulatorkanal individuell eingestellt werden kann, was aber in den Figuren aber nicht gezeigt wird. In diesem Beispiel werden die abgelenkten Strahlen zur Materialbearbeitung benutzt, während die nicht abgelenkten Strahlen I₀ durch eine Abfanganordnung ähnlich wie in Fig.18 dargestellt, ausgeblendet werden. Im Gegensatz zu der Anordnung in Fig. 18 ist hier gezeigt, daß der als Abfanganordnung wirkende Spiegel 166 auch zwischen der Linse 165 und der Bearbeitungsfläche angeordnet werden kann. Man kann aber auch, wie unter Fig. 4 beschrieben, auf die Abfanganordnung verzichten, wenn man durch eine symmetrische oder unsymmetrische Defokussierung der in I₀ enthaltenen, zur Bearbeitung unerwünschten Strahlung ihre Leistungsdichte soweit herabsetzt, daß kein Bearbeitungseffekt hervorgerufen wird, wenn sie auf die Bearbeitungsfläche gerichtet wird.

Fig. 36b zeigt eine erweiterte Ausführungsform der Fig 36a in der Seitenansicht. Zwischen dem mehrkanaligen Modulator mit den Kanälen T₁ bis Tₙ die Linsen 202 und 203 eingefügt, die vorzugsweise Zylinderlinsen sind und eine Zylinderoptik bilden, wie unter Fig. 32 und Fig. 33 beschrieben. Diese Zylinderoptik verkleinerten Abstand zwischen den Kanälen T₁ und Tₙ am Ort der Linse 165 und damit bei vorgegebener Brennweite der Linse 165, den Winkel, unter dem die Strahlen der einzelnen Kanäle T₁ bis Tₙ auf die Bearbeitungsfläche auftreten, was besonders bei einer großen Anzahl von Kanälen von Bedeutung ist und die Kosten für die Linse 165, die auch ein System aus mehreren Linsen sein kann, sowie ihre Machbarkeit erheblich begünstigt.

Fig. 36c zeigt eine Draufsicht zu Fig. 36b, aus der zu ersehen ist, daß die Zylinderoptik in dieser Ansicht im wesentlichen keine Wirkung zeigt. Die in den akustooptischen Modulator 161 eingekoppelten Strahlenbündel F₁ bis Fₙ sind zwar unter dem gleichen Bragg-Winkel dargestellt, sie können aber auch individuell verschieden unter dem jeweils optimalen Bragg-Winkel eingekoppelt werden.

Fig. 37 stellt einen weiteren Vorteil der Anordnungen nach Fig. 36, 36a, 36b und 36c heraus, nämlich daß durch gleichzeitiges Anlegen von zwei unterschiedlichen Frequenzen an die jeweiligen Modulatorkanäle anstelle der Bearbeitungspunkte B₁ bis B₄ nun jeweils zwei Bearbeitungspunkte B₁₁, B₁₂ bis B₄₁, B₄₂ erzeugt werden können. Damit sind anstelle von 4 Bearbeitungsspuren nunmehr 8 getrennt modulierbare Bearbeitungsspuren 224 entstanden, ohne die Anzahl der Laser und/oder der Modulatorkanäle zu erhöhen. Es liegt im Rahmen der Erfindung, auch mehr als zwei Frequenzen je Modulator zu verwenden. Es sind bereits 12 unterschiedliche Frequenzen mit einem einzigen Modulatorkanal zu einem ähnlichen Zweck realisiert worden. Ein weiterer Vorteil bei der Erzeugung von Bearbeitungspunkten mittels der akustooptischen Ablenkung ist die mögliche Verschiebung der Bearbeitungspunkte mit hoher Ablenkgeschwindigkeit. Durch Verändern der angelegten Frequenzen kann man einzelne oder alle Bearbeitungsspuren 224 sehr schnell gegenüber ihrer bisherigen Lage versetzen und hat damit eine weitere Möglichkeit, die Lage und Form der Näpfchen günstig zu beeinflussen. Mit dieser Maßnahme kann man auch insbesondere sehr genau die Lage der Bearbeitungsspuren einer Sollgröße entsprechend nachführen. Dabei sind Genauigkeiten von einem Bruchteil einer Spurbreite möglich. Erfindungsgemäß kann man mit einem bekannten interferometrisch arbeitendem Meßsystem die Ist- Position der einzelnen Bearbeitungsspuren präzise ermitteln, indem man beispielsweise die Ist- Position der Laserstrahlungsquelle während des Bearbeitungsvorgangs aufnimmt und durch Vergleich mit der Soll- Position der Bearbeitungsspuren ein Korrektursignal zur erforderlichen Verschiebung und Nachführung der Bearbeitungsspuren erzeugen.

Dies kann besonders dann von Interesse sein, wenn an ein bereits vorhandenes Bearbeitungsmuster nahtlos angeschlossen werden soll oder wenn ein bereits vorhandenes Muster nachbearbeitet werden soll. Ein weiterer enormer Vorteil der Anordnung besteht darin, daß der Braggwinkel zur Optimierung des Wirkungsgrades für jeden Modulatorkanal individuell eingestellt werden kann, was aber in den Figuren nicht gezeigt wird. Bisher sind akustooptische Anordnungen, bei denen aus einem Laserstrahl durch Anlegen mehrerer Frequenzen mehrere Teilstrahlen erzeugt werden, und die für alle Teilstrahlen einen gemeinsamen Bragg-Winkel haben, in der Materialbearbeitung nicht zum Durchbruch gekommen, weil der Wirkungsgrad zu gering ist. Wählt man aber wie vorgeschlagen, eine Kombination aus mehreren Laserstrahlen mit jeweils individuell eingestelltem Bragg-Winkel und mehreren akustooptisch erzeugten Teilstrahlen je Laserstrahl, dann läßt sich ein deutlich höherer Wirkungsgrad erzielen, so daß eine große Anzahl von gleichzeitig wirkenden Bearbeitungsspuren für die Materialbearbeitung realisiert werden kann.

Wie unter Fig. 18 und 18a beschrieben, kann man aber auch ein- oder mehrkanalige elektrooptische Modulatoren in Zusammenhang mit einem doppelbrechenden Material einsetzen, um jeden Laserstrahl in zwei Strahlen aufzuspalten, die über weitere elektrooptische oder akustooptische Modulatoren getrennt moduliert werden können.

Es wurde betont, daß in den Fig. 36, 36a, 36b, 36c und 37 die Materialbearbeitung mit den abgebeugten Laserstrahlen erfolgen soll und daß die in dem nicht abgebeugtem Laserstrahl enthaltene Strahlung unschädlich gemacht werden soll, um keinen Bearbeitungseffekt zu erzeugen. Das ist aber nicht zwingend erforderlich, und es sind Fälle denkbar, in denen man umgekehrt arbeitet. Deshalb soll ein weiterer Vorteil der Anordnungen genannt und an Fig. 36a erläutert werden: Wenn man die in den Laserstrahlen I₀ enthaltene Strahlung zur Materialbearbeitung verwenden will, entfernt man den Spiegel 166. Damit ergibt sich auf der Mantellinie in einem Fleck die gesamte Strahlungsleistung aus allen vier Lasern F₁ bis F₄. Damit ergibt sich in diesem Fleck eine mehr als vierfache Leistungsdichte gegenüber den bisherigen Bearbeitungspunkten B₁ bis B₄ und man kann davon ausgehen, daß bei bestimmten Materialien und Prozeßparametern in B₁ bis B₄ kein Bearbeitungseffekt entsteht. Das heißt, die Bearbeitungsfläche dient gleichzeitig als Sumpf für die Strahlung, die keinen Bearbeitungseffekt hervorrufen soll. Dies ist von Vorteil, da sich auf der Bearbeitungsfläche ein thermisches Gleichgewicht einstellt, da in jedem Fall die gesamte Laserenergie der Bearbeitungsfläche zugeführt wird. Es liegt im Rahmen der Erfindung, daß weniger oder mehr als vier Laser mit zugehörigen Modulatorkanälen eingesetzt werden und daß je Modulatorkanal durch Verwendung von mehr als einer Frequenz je Modulatorkanal die Differenz in der Leistungsdichte zwischen der Strahlung, die einen Bearbeitungseffekt hervorrufen soll und der Strahlung, die keinen Bearbeitungseffekt hervorrufen soll vergrößert wird. Es liegt weiterhin im Rahmen der Erfindung, daß das beschriebene Prinzip vorteilhaft angewendet werden kann, wenn der in den akustooptischen Modulator einfallende Laserstrahl eine große Divergenz hat, wie das beispielsweise der Fall ist, wenn der akustooptische Modulator in einer Anordnung gemäß Fig. 31 in der Nähe des Brennpunktes 201 angeordnet werden soll oder in Anordnungen, bei denen der Laser eine besonders große Divergenz hat. In Fig. 31 soll beispielsweise die Achse des aus Laser F₂ austretenden Strahlenbündels die Lage des optimalen Braggwinkels für eine bestimmte Frequenz darstellen. In diesem Fall ist die Braggbedinging für die eine Frequenz für die Strahlen am Rand des Strahlenbündels, beispielsweise der Laser F₁ und F₃ weitaus schlechter erfüllt, als für die zentralen Strahlen, beispielsweise des Lasers F₂ und es wird nur ein geringer Anteil der Strahlung abgebeugt, was für den Modulator einen geringen Kontrast bedeutet. Legt man aber mehrere Frequenzen gleichzeitig an den akustooptischen Modulator an und wählt diese Frequenzen so aus, daß sie sowohl für die äußeren als auch für die mittleren einfallenden Strahlenbündel bezüglich des Braggwinkels optimal sind, ergibt sich der höchstmögliche Kontrast und auf der Bearbeitungsfläche entsteht die höchstmögliche Differenz in der Leistungsdichte zwischen der Strahlung, die einen Bearbeitungseffekt hervorrufen soll und der Strahlung, die keinen Bearbeitungseffekt hervorrufen soll.

In Fig. 38 ist dargestellt, wie durch geschickte Anordnung der Komponenten im optischen Strahlengang dafür gesorgt werden kann, daß die Laserstrahlenbündel niemals senkrecht auf die optischen Flächen auftreffen. Dadurch wird vermieden, daß ein Teil der Strahlung von diesen Flächen zurück in die Laser reflektiert wird. Wenn nämlich Energie zurück in einen Laser gelangt, findet im Laser eine Anregung statt und der Laser beginnt in der Amplitude der abgegebenen Strahlung zu oszillieren. Damit ist die Ausgangsleistung nicht mehr konstant und es bilden sich in der bearbeiteten Fläche Muster, die das Ergebnis unbrauchbar machen können. Es sind in Fig. 38 die Achsenstrahlen von zwei Ebenen dargestellt, es können die Laser aber auch in einer oder mehreren Ebenen angeordnet werden, solange nicht die Symmetrieachse zu den beiden gezeichneten Achsen benutzt wird. Der akustooptische Modulator ist aus Funktionsgründen bereits um den Winkel α_{B} verdreht. Um aber sicher zu sein, daß nicht Energie infolge des wechselnden Ultraschallfeldes zurück in den Laser reflektiert wird, kann der Modulator zusätzlich um einen Winkel γ verdreht werden, wie in Fig. 38 gezeigt ist. Eine weitere Möglichkeit zur Vermeidung von Oszillationen der Laser ist die Einfügung eines oder mehrerer optischer Bauelemente an geeigneten Stellen in den Strahlengang, welche die Laserstrahlung nur in einer Richtung transmittieren lassen. Beispielsweise können dazu sogenannte Faraday-Isolatoren verwendet werden, wie sie in dem unter Fig. 20 genannten Katalog der Firma Spindler und Hoyer auf der Seite F2 beschrieben sind. Solche Isolatoren sind in den Figuren nicht dargestellt.

Fig. 39 zeigt eine Linse 101, deren Fassung Bohrungen 87 enthält, die die Linse vorzugsweise in mehreren Windungen umschließen und von einem Kühlmittel durchflossen sind. Bei Anordnungen mit hoher Leistung kann man die Absorption des optischen Mediums der Linsen nicht außer acht lassen. Außerdem wird von jeder optischen Fläche auch bei bester Vergütung ein geringer Anteil der Strahlung gestreut und von den Fassungsteilen absorbiert. Deshalb ist eine Kühlung der Linsenfassungen sinnvoll. Es wurde bereits erwähnt, daß für die am höchsten beanspruchten Linsen Materialien mit hoher Wärmeleitfähigkeit und geringer Absorption wie z. B. Saphir vorteilhaft sind. Saphir hat außerdem den Vorteil, daß die Linsenoberfläche infolge der großen Härte des Materials beim Reinigen nicht verkratzt. Auch ist für eine gute Kontaktierung des optischen Mediums zu der Fassung zu sorgen. Dies wird vorteilhaft durch eine Metallisierung der Randzone des optischen Elementes und durch eine Verlötung 223 mit der Fassung erreicht. Metallische Lote eine bessere Wärmeleitung als Glaslote.

Es ist auch möglich, die kritischen Bauteile der Laserkanone 23 und der Pumpquelle 2 mit Hilfe sogenannter Mikrokanalkühler zu kühlen, wie sie in dem Aufsatz "Lasers in Material Processing" in der Druckschrift SPIE Proceedings Vol. 3097, 1997 beschrieben sind.

Fig. 39a zeigt einen Schnitt durch eine erfindungsgemäße Fassung 118 für die Objektivlinse 61, 103, 112, die beispielsweise mit einem Gewinde an dem Tubus 65, 96, oder der Fassung 116 befestigt und mit einer Dichtung 125 gedichtet wird. Die Objektivlinse kann in die Fassung geklebt oder vorzugsweise an ihrem Rand metallisiert und in die Fassung gelötet werden. Die Fassung kann mit einer oder mehreren Bohrungen 120 versehen sein, durch die ein Schutzgas, das aus dem Innenraum der optischen Einheit 8 kommt, ausströmt und beispielsweise mittels einer Nut 119 über die zu der Bearbeitungsfläche weisende Seite der Objektivlinse 61, 103, 112 geleitet wird, um eine Verunreinigung der Objektivlinse durch Materialpartikel oder Gase, die bei der Bearbeitung freigesetzt werden zu vermeiden.

Fig. 40 beschreibt eine weitere Möglichkeit, Fiberlaser oder Lichtleitfasern, vorzugsweise Singlemodefasern, für eine Anordnung in Spuren und Ebenen mit geringem Abstand vorzubereiten. Die Faser 28 bzw. Laserfiber 5 ist auf dem letzten Ende allseitig soweit abgeschliffen, daß eine Seitenlänge entsteht, die soweit reduziert ist, daß die Austrittspunkte der Laserstrahlung 13 in einem geforderten geringen Abstand liegen. In diesem Fall können die Abschlußstücke 26, 94 entfallen und es ergibt sich eine besonders einfacher Aufbau. Dabei können die gegenüberliegenden Flächen paarweise parallel zueinander oder unter einem Winkel zueinander verlaufen oder ein Paar verläuft parallel und das andere Paar verläuft unter einem Winkel zueinander, wie bereits auch für die Abschlußstücke unter den Fig. 9 und 10 beschrieben.

In Fig. 40a ist eine Draufsicht auf bzw. ein Querschnitt durch die abgeschliffene Laserfiber gezeigt. Der Querschnitt kann vorzugsweise rechteckig oder quadratisch sein, er kann aber aber auch alle anderen Formen haben.

Fig. 40b zeigt eine Seitenansicht des Faserbündels, in der die Fasern ähnlich wie in Fig. 40 bearbeitet wurden, so daß die Achsen der einzelnen Strahlenbündel 13 nahezu parallel verlaufen.

Fig. 40c stellt eine Seitenansicht des Faserbündels dar, in der die Fasern keilförmig bearbeitet wurden, so daß sich die Achsen der einzelnen Strahlenbündel 13 außerhalb des Faserbündels überschneiden.

Fig. 40d eine zeigt wiederum eine Seitenansicht des Faserbündels, in der Achsen der einzelnen Fasern zwar parallel verlaufen, aber die Austrittsflächen der einzelnen Fasern unter verschiedenen Winkeln ε zur Faserachse angeordnet sind, so daß die Achsen der einzelnen Strahlenbündel 13 sich innerhalb des Faserbündels überschneiden.

In Fig. 41 ist gezeigt, wie aus abgeschliffenen Fasern oder Laserfibern gemäß Fig. 40 und Fig. 40a, Fig. 40b, Fig. 40c, 40d eine Aufnahme mit 4 Spuren erstellt werden kann. Eine Aufnahme in mehreren Ebenen ist in Fig. 41 in Form von zwei weiteren Ebenen gestrichelt dargestellt. Die Aufnahme ist auch nicht auf 4 Spuren und 3 Ebenen beschränkt, es können nach diesem Prinzip die Laserausgänge in beliebig vielen Spuren und Ebenen angeordnet werden. Durch entsprechende Formgebung beim Abschleifen der Fasern ist es möglich, die Abstände zwischen den Austrittspunkten der Laserstrahlung 13 zu bestimmen. Beispielsweise kann der Abstand so ausgeführt werden, daß sich auf der Bearbeitungsfläche 81 die Laserstrahlung der einzelnen Ebenen so überlappt, daß sich nur Spuren ergeben oder daß sich die einzelnen Spuren so überlappen, daß sich nur Ebenen ergeben. Es können die Abstände zwischen den Austrittspunkten der Laserstrahlung 13 aber auch so gewählt werden, daß sich auf der Bearbeitungsfläche die Laserstrahlen aller Spuren und aller Ebenen in einem Punkt überlappen. Zu diesem Zweck kann man die Fiberlaser oder Lichtleitfasern auch in einem Bündel anordnen.

Das Prinzip der beschriebenen Anordnung von Laserausgängen in mehreren Ebenen oder in mehreren Spuren oder in mehreren Spuren und in mehreren Ebenen oder überlappend in einem Punkt gilt erfindungsgemäß auch für die auf der Bearbeitungsfläche 81 auftreffenden Laserstrahlen. Nach diesem Ordnungsprinzip können auf der Bearbeitungsfläche ebenfalls mehrere Spuren oder mehrere Ebenen oder mehrere Spuren und mehrere Ebenen von Laserstrahlen angeordnet werden, oder es können die Laserstrahlen überlappend in einem Punkt angeordnet werden.

Die Anordnung nach den Fig. 40, 40a, 40b, 40c, 40d und 41 ist besonders für direkt modulierbare Laser geeignet. Es können aber auch externe Modulatoren verwendet werden. Die austretenden Strahlenbündel können mit den bekannten Anordnungen in die Bearbeitungsfläche abgebildet werden, es kann aber auch eine Aufnahme ausgeführt werden, bei der die Strahlenbündel direkt, d. h. ohne Übertragungseinheit, auf die Bearbeitungsfläche gerichtet werden, indem beispielsweise die Ausgänge einer Laserstrahlungsquelle nach Fig. 41 ganz nahe an die Bearbeitungsfläche herangeführt werden oder auf der Materialoberfläche gleitend aufliegen, was eine besonders einfache Anordnung ergibt. Ein solches Verfahren kann beispielsweise Anwendung finden, wenn durch Energieeinstrahlung Umwandlungen in der Materialoberfläche angeregt werden sollen oder wenn ein Materialtransfer vorgenommen werden soll. Im Beispiel eines Materialtransfers wird auf das zu bebildernde Material, das beispielsweise ein Druckzylinder, eine Offsetplatte, ein Zwischenträger oder der Bedruckstoff selbst sein kann, eine dünne Folie gelegt, auf deren Unterseite, die dem zu bebildernden Material zugewendet wird, eine Schicht aufgebracht ist, die mittels Energieeinstrahlung abgelöst und auf das zu bebildernde Material übertragen werden kann.

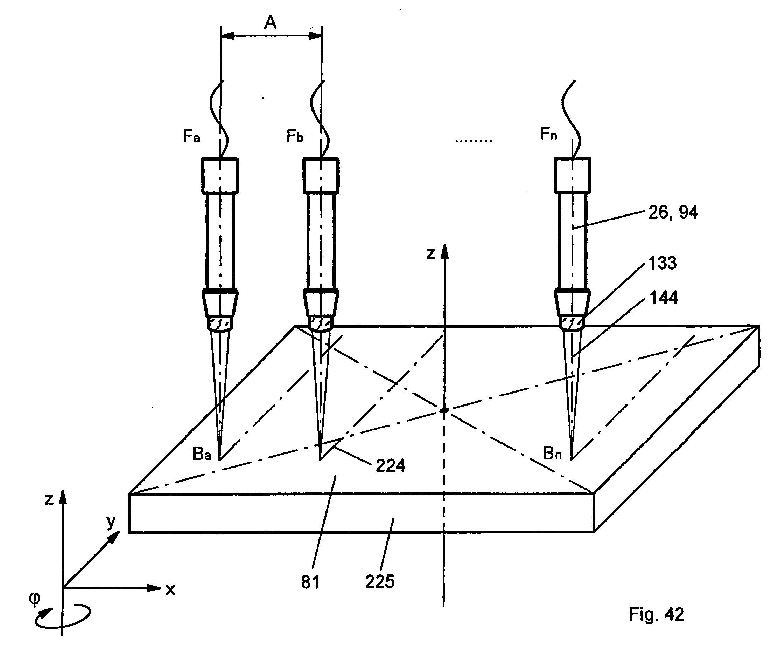

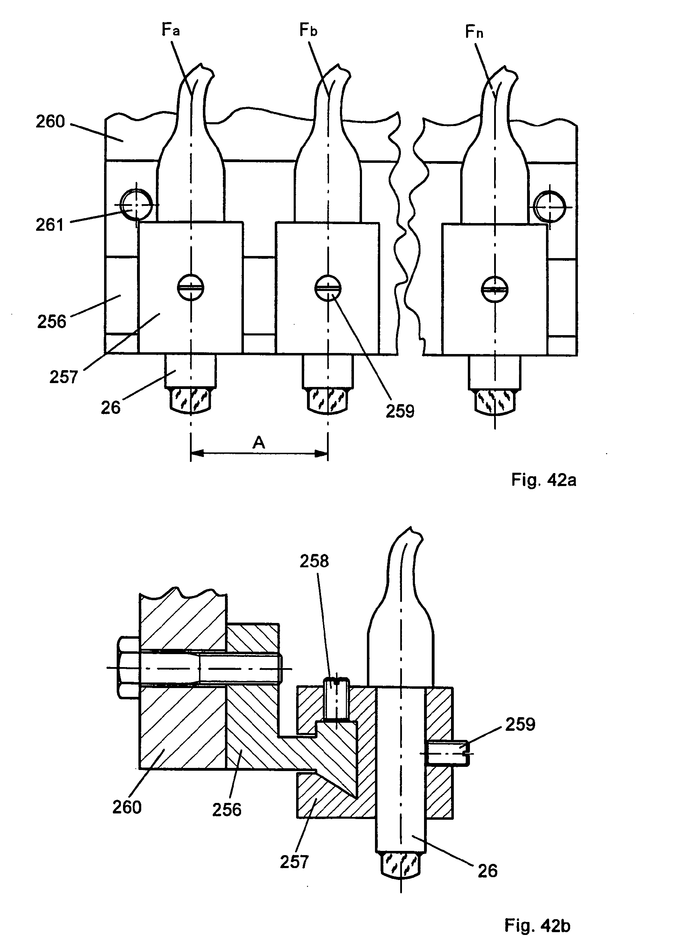

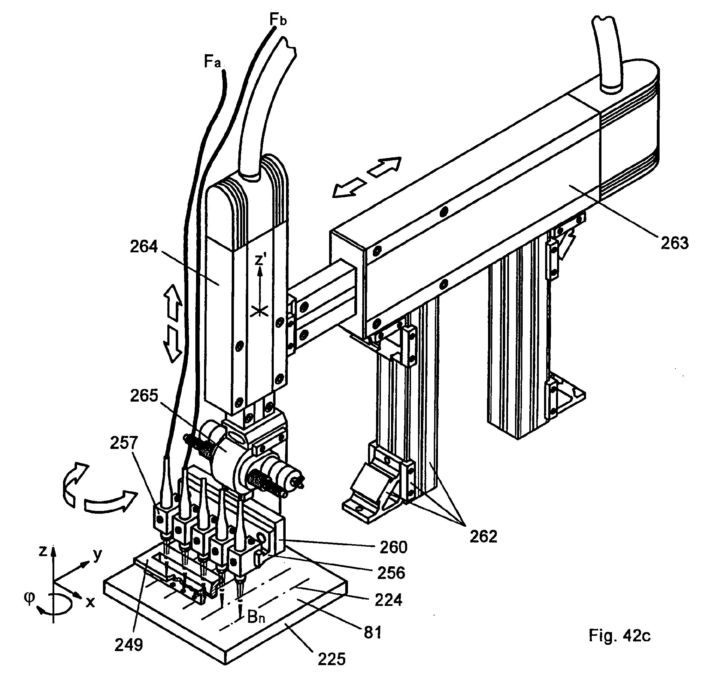

Fig. 42 zeigt eine weitere Ausführungsform der Laserstrahlungsquelle, wie sie für das mehrkanalige Schneiden und Ritzen von beispielsweise Halbleitermaterialien verwendet werden kann, und wie sie in der parallel laufenden, gleichzeitig mit der vorliegenden Patentanmeldung eingereichten deutschen Patentanmeldung P 198 40 936.2 des Anmelders "Anordnung zum mehrkanaligen Schneiden und Ritzen von Materialien mittels Laserstrahlen. Die Abschlußstücke 26, 94 der Fasern bzw. Fiberlaser Fₐ bis Fₙ haben Strahlenbündel 144, die mittels der Linse 133 in einem vorgegebenen Abstand von dem Abschlußstück fokussiert sind. Der Durchmesser der Bearbeitungspunkte Bₐ bis Bₙ beträgt beispielsweise 20 µm, er kann aber auch darunter oder darüber liegen. Weiterhin sind die Abschlußstücke auf einer in den Fig. 42a und 42b näher beschriebenen Profilschiene 256 so angeordnet, daß ihr gegenseitiger Abstand "A" auf beliebige Werte eingestellt werden kann, bis die Abschlußstücke aneinanderstoßen. Die Profilschiene ist vorzugsweise an einem Arm eines Roboters (Fig. 42c) befestigt und kann beispielsweise in den Richtungen x, y, z relativ zu einem Tisch 225 mittels Stellantrieben, die in Fig. 42c gezeigt sind, bewegt werden. Außerdem kann die Profilschiene relativ zu dem Tisch um einen Winkel ϕ mit der Achse z' (Fig. 42c) verdreht werden, was auch dazu benutzt werden kann, den gegenseitigen Abstand der Bearbeitungsspuren zu bestimmen. In den Ausführungsbeispielen gemäß den Figuren 4, 4b, 4c, 43, 44 wird die Laserkanone 23 um die Achse des Rohres 51, 95, 113 verdreht, um die Abstände zwischen den Bearbeitungsspuren zu verändern. Weiterhin kann der Tisch in den Richtungen x, y, z bewegt und um einen Winkel ϕ mit der Achse z verdreht werden. Auf dem Tisch 225 kann das zu bearbeitende Material, beispielsweise ein oder mehrere aus einem gezogenen Halbleiterbarren abgetrennte sogenannte "Wafer", mittels nicht gezeigter Spann- oder Saugvorrichtungen befestigt werden. Mittels der Laserenergie in den einzelnen Bearbeitungspunkten B₁ bis Bₙ lassen sich in das Halbleitermaterial beispielsweise feine parallele Spuren ritzen, wie sie zum Beispiel zur Kontaktierung von Photovoltaik-Zellen benötigt werden. Man kann aber auch in das Halbleitermaterial feine Bohrungen einbringen oder es mittels des Lasers zerschneiden, um so beispielsweise elektrische Schaltkreise auseinander zu trennen. Nahe der Bearbeitungsfläche 81 ist für jede Bearbeitungsspur 224 getrennt oder für mehrere Bearbeitungsspuren 224 gemeinsam eine erfindungsgemäße Anordnung zum Entfernen des von der Bearbeitungsfläche abgetragenen Materials 249 (Fig. 42c) angebracht, deren Wirkungsweise in Fig. 34 detailliert beschrieben ist. Wenn die Profilschiene mit den Abschlußstücken relativ gegenüber dem Tisch verdreht wird, um den Abstand zwischen den Bearbeitungsspuren zu verändern, ist es erfindungsgemäß zweckmäßig, die durch die relative Verdrehung entstehende Verzeichnung des aufzuzeichnenden Musters durch eine Vorverzerrung des aufzubringenden Musters und /oder eine zeitliche Steuerung des Datenstroms zu kompensieren. Durch die Verdrehung ist es auch möglich, gezielt unterschiedliche Linienabstände bei Relativbewegungen in x- und in **y-**Richtung zu erzeigen. Beispielsweise sind für die Kontaktierung der Photovoltaik-Zellen zwei verschiedene Linienmuster erforderlich: Ein erstes Muster, bei dem die eingeritzten Linien nach der Metallisierung den Kontakt zum Halbleitermaterial herstellen, soll Abstände zwischen den einzelnen Linien von einigen Millimetern haben und sollen beispielsweise in x-Richtung verlaufen. Desweiteren sind sogenannte Stromschienen erforderlich, die rechtwinklig zu den Kontaktlinien verlaufen und diese miteinander verbinden. Diese die Stromschienen bildenden Linien sollen beispielsweise in y-Richtung verlaufen und nahe beieinander liegen, damit sie nach der Metallisierung wie ein geschlossenes Band wirken. Erfindungsgemäß läßt sich ein solches Muster sehr einfach herstellen, indem die Profilschiene mit den Abschlußstücken so weit verdreht wird, bis sich das gewünschte Muster ergibt. Durch die parallele Anordnung von mehreren Fiberlaserausgängen kann die zur Bearbeitung erforderliche Zeit erheblich reduziert werden, beispielsweise können für das Ritzen der Photovoltaikelemente 10 Laserausgänge parallel verwendet werden, was den Ausstoß um den Faktor 10 erhöht.

Die beschriebene Anordnung zum Schneiden und Ritzen ist nicht allein nur für die Bearbeitung von Halbleitermaterialien geeignet, sondern kann für alle Materialien angewendet werden, bei denen es auf die präzise Erzeugung von Mustern, wie z.B. bei der Druckformherstellung ankommt.

Fig. 42a und die zugehörige Schnittzeichnung Fig. 42b zeigen, wie die Abschlußstücke 26 der einzelnen Fiberlaser Fₐ bis Fₙ befestigt sind. Die Profilschiene 256 ist mittels Verbindungen 261 an einem Träger 260 befestigt, der beispielsweise der Arm eines Roboters sein kann. Die Abschlußstücke 26 sind in Fassungen 257 aufgenommen und mit Schrauben 259 fixiert. Die Fassungen 257 sind mit einem zu der Profilschiene 256 passenden Profil versehen, auf die Profilschiene 256 aufgereiht, in vorgegebene Abstände "A" zu einander eingestellt und mittels der Schrauben 259 fixiert. Durch eine erfindungsgemäß kleine Bauweise der Abschlußstücke 26 und der Fassungen 257 wird ein sehr geringer Abstand "A" möglich. Mittels des Roboters kann die Profilschiene mit den Abschlußstücken zum Zweck der Materialbearbeitung über die Bearbeitungsfläche geführt werden, wie es in Fig. 42 dargestellt und ausführlich beschrieben ist. Die erforderlichen Bewegungen zur Erzeugung der Bearbeitungsspuren können von dem in Fig. 42 beschriebenen Tisch 225 ausgeführt werden, sie können aber auch von dem Arm des Roboters ausgeführt werden. Vorzugsweise kann der Arm des Roboters auch eine Drehbewegung um die zu der Achse der Abschlußstücke etwa parallele Drehachse z' der Anordnung vornehmen. Mit dieser Verdrehung und einer relativen Verschiebung zwischen dem Arm des Roboters und dem Tisch 225, ist es möglich, den Abstand der auf der Bearbeitungsfläche 81 erzeugten Bearbeitungsspuren zu verändern und vorzugsweise geringer einzustellen, als es dem eingestellten Maß "A" entspricht.

In Fig. 42c ist ein Beispiel für den Roboter angegeben, wie er beispielsweise aus Komponenten der Firma Montech- Deutschland GmbH, Postfach 1949, 79509 Lörrach zusammengestellt werden kann. Auf einem Ständersystem "Quickset" 262 ist ein Horizontal- Lineareinheit 263 befestigt, der wiederum eine Vertikal- Lineareinheit 264 mit einem Drehantrieb 265 aufnimmt. An dem Drehantrieb sitzt der eigentliche Roboterarm 260, an dem die Profilschiene 256 mittels der Verbindung 261 befestigt ist. Eine weitere Horizontal- Lineareinheit ist möglich, aber nicht dargestellt.

Mit den gleichen Elementen lassen sich die verschiedenen Bewegungsrichtungen des Tisches 225 realisieren, wobei die Bewegungsrichtungen auch zum Teil dem Tisch und zum Teil der Profilschiene zugeordnet werden können. In den Figuren sind das Gehäuse zur Aufnahme einzelner Komponenten, das Kühlsystem, die Steuerung für die Laser, die Pumpquellen für die Fiberlaser, von denen nur die Abschlußstücke 26, 94 gezeigt sind, die Anordnung zum Entfernen des von der Bearbeitungsfläche abgetragenen Materials und die Maschinensteuerung für die Antriebe nicht dargestellt.

In Fig. 43 ist eine weitere Flachbett-Anordnung mit der erfindungsgemäßen Laserstrahlungsquelle gezeigt. Das zu bearbeitende Material mit der Bearbeitungsfläche 81 befindet sich auf einem Tisch 247, der auf Führungen 251 gelagert ist und mittels einer Spindel 252 präzise in der Vorschubrichtung u bewegt werden kann. Die Spindel 252 wird von einem aus einer Steuerelektronik 255 getriebenen Motor 254 über ein Getriebe 253 in Rotation versetzt. Die aus der Laserkanone 23 austretende Laserstrahlung erzeugt in einer hier nicht dargestellten Zwischenbildebene 228, die beispielsweise in der Fig. 44 dargestellt ist, die Bearbeitungspunkte B₁ bis Bₙ. Die Laserstrahlung wird über einen Umlenkspiegel 241 und einer zu einer optischen Einheit gehörigen Optik 242 auf einen Drehspiegel 243 geleitet, der beispielsweise eine Spiegelfläche haben kann, der aber auch als Drehspiegel mit mehreren Spiegelflächen ausgebildet sein kann und der von einem aus der Steuerelektronik 255 getriebenen Motor 244 in eine Drehbewegung versetzt wird. Der Drehspiegel 243 lenkt die Laserstrahlung in Pfeilrichtung v zeilenweise über die Bearbeitungsfläche. Zwischen dem Drehspiegel und der Bearbeitungsfläche befindet sich eine der optischen Einrichtung zugehörigen Optik 245, deren Aufgabe es ist, auf der Bearbeitungsfläche einen über die gesamte Zeilenlänge scharfen Bearbeitungsfleck zu erzeugen, der aus mehreren Bearbeitungspunkten B₁' bis Bₙ', die in Fig. 43 gezeigt sind, bestehen kann. Die Bearbeitungspunkte erzeugen auf der Bearbeitungsfläche 81 infolge der Rotation des Drehspiegels Bearbeitungsspuren 224, wie sie beispielsweise in den Fig. 35, 36 und 37 dargestellt sind. Vorzugsweise ist zwischen der Bearbeitungsfläche 81 und der Optik 245 ein langer Umlenkspiegel 246 vorgesehen, um eine kompakte Bauweise zu erzielen. Die Laserkanone 23 wird vorzugsweise in dem Prisma 248 so verdreht, daß die Bearbeitungsspuren auf der Bearbeitungsfläche den gewünschten Abstand zueinander haben, was in Fig. 35 dargestellt ist. Die Fixierung der Laserkanone kann mit einem nicht dargestellten Spannband erfolgen. Nahe der Bearbeitungsfläche 81 ist über die gesamte Zeilenlänge eine erfindungsgemäße Anordnung 249 zum Entfemen des von der Bearbeitungsfläche abgetragenen Materials angebracht, die über die gesamte Länge mit einer Glasplatte 230 versehen sein kann und in Fig. 43b näher dargestellt ist. In Fig. 43 kann eine Laserkanone mit den Linsen 102 und 103 gemäß der Fig. 4b und einem in Fig. 20 dargestellten Strahlengang vorgesehen sein, es können aber auch alle anderen Arten der erfindungsgemäßen Laserkanonen eingesetzt werden. Weiterhin lassen sich in einer solchen Flachbett- Anordnung auch mehrere Laserstrahlungsquellen anbringen, um den Bearbeitungsvorgang zu beschleunigen. Erfindungsgemäß kann man eine zweite Laserstrahlungsquelle mit der zugehörigen Optik und der Anordnung 249 zum Entfernen des von der Bearbeitungsfläche abgetragenen Materials gegenüber der gezeigten Anordnung so anbringen, daß sich auf der Bearbeitungsfläche weitere Bearbeitungsspuren ergeben.

Es liegt im Rahmen der Erfindung, daß der Drehspiegel auch durch einen oszillierenden Spiegel ersetzt werden kann. Es liegt weiterhin im Rahmen der Erfindung, daß der Drehspiegel durch zwei oszillierende Spiegel ersetzt werden kann, wobei die Schwingrichtung des einen Spiegels, genannt "Spiegel u", auf der Bearbeitungsfläche 81 in der mit u bezeichneten Richtung liegt und wobei die Schwingrichtung des anderen Spiegels, genannt "Spiegel v", auf der Bearbeitungsfläche 81 in der mit v bezeichneten Richtung liegt.

Eine Anordnung mit oszillierenden Spiegeln eignet sich besonders gut zum schnellen Ritzen von Photovoltaik-Zellen, wie es ausführlich unter Fig. 42 beschrieben wurde. Die zu ritzende Zelle wird beispielsweise von einer nicht in der Figur 43 dargestellten Ladevorrichtung auf den Tisch 247 gebracht und in die richtige Position gebracht. Die Laserkanone 23 ist so gedreht, daß in den beiden Bearbeitungsrichtungen u und v die gewünschten Abstände in den Bearbeitungsspuren entstehen. In einem ersten Bearbeitungsvorgang zeichnet beispielsweise Spiegel u die Kontaktlinien auf, während Spiegel v die richtige Positionierung der Kontaktlinienpakete vomimmt. In einem zweiten Bearbeitungsvorgang zeichnet Spiegel v die Stromschienen auf, während Spiegel u die richtige Positionierung der Linienpakete vornimmt. Bei diesen Bearbeitungsvorgängen wird die Photovoltaic-Zelle nicht bewegt. Es liegt im Rahmen der Erfindung, daß der Tisch 247 durch ein nicht dargestelltes Magazin ersetzt werden kann, in dem eine bestimmte Anzahl von Photovoltaic-Zellen zur Bearbeitung angeliefert wird, daß die Bearbeitung der jeweiligen Zelle direkt in dem Magazin erfolgt und daß die bearbeitete Zelle nach der Bearbeitung automatisch aus dem Magazin entnommen und in ein zweites Magazin umgeladen wird, wobei die nächste, unbearbeitete Zelle zur Bearbeitung an die Stelle der entnommenen Zelle rückt.

Infolge der sehr hohen Strahlqualität der Laserstrahlungsquelle, die sich durch die beugungsbegrenzt arbeitenden Fiberlaser ergibt, läßt sich ein nahezu paralleles Laserstrahlenbündel erzeugen, wie in Fig. 43 zwischen der Optik 242 und Drehspiegel 243 gezeigt wird und wie es auch in der Fig. 4 zwischen den Linsen 57 und 61 zu sehen ist. Infolgedessen ist es auch möglich, in Fig. 43 die Optik 245, den Drehspiegel 243 und den Umlenkspiegel 246 zu entfernen und zu ersetzen durch einen nicht dargestellten Umlenkspiegel, der das aus der Optik 242 austretende, nahezu parallele Laserstrahlenbündel in Richtung der Bearbeitungsfläche 81 umlenkt und auf eine nicht dargestellte, kurzbrennweitige Objektivlinse, die ähnlich ausgeführt ist, wie die Objektivlinsen 61, 103 oder 112.

Umlenkspiegel und Objektivlinse sind erfindungsgemäß zu einer Einheit miteinander verbunden und gleiten auf einer nicht dargestellten Führungsschiene in der Richtung v und zurück, so daß auf der Bearbeitungsfläche (81) mehrere parallele Bearbeitungsspuren entsprechend der Anzahl der Kanäle in der Laserstrahlungsquelle aufgezeichnet werden, ähnlich wie bisher mit dem Drehspiegel 243 und der Optik 245.

Erfindungsgemäß ist die Führungsschiene als Lager mit sehr geringer Reibung, beispielsweise als Luftlager oder als Magnetlager ausgeführt. Der Antrieb der Einheit aus Objektivlinse und Umlenkspiegel in Richtung v und zurück erfolgt durch jeweils einen Stoß in die entsprechende Richtung, der beispielsweise durch ein vorzugsweise berührungsloses elektromagnetisches System ausgeführt wird, wobei die aus dem Abbremsen der bewegten Einheit gewonnene Energie teilweise wieder zum Antrieb benutzt wird. Teile der Führungsschiene, Umlenkspiegel und Objektivlinse sind beispielsweise in einem geschlossenen Raum untergebracht, der Fenster zum Eintritt und zum Austritt der Laserstrahlung enthält und evakuiert werden kann, um die Reibungsverluste zu reduzieren. Antrieb und Führungsschiene stellen einen Linearantrieb für die Einheit aus Objektivlinse und Umlenkspiegel dar.

Es liegt im Rahmen der Erfindung, daß über eine beispielsweise optische Referenzspur die jeweilige wahre Position der bewegten Einheit zu Korrekturzwecken ermittelt werden kann. Eine Anordnung 249 dient zum Entfernen des von der Bearbeitungsfläche (81) abgetragenen Materials. Der Vorteil einer solchen Anordnung ist, daß sie sich sehr kostengünstig für große Weglängen und hohe Auflösungen realisieren läßt und daß sie sich durch Verschieben des einen und/oder anderen Antriebs auf verschiedene Formate einstellen läßt. Es lassen sich auch mehrere solcher Einheiten parallel anordnen, um die Bearbeitungsgeschwindigkeit zu erhöhen.

In Fig. 43a ist eine Vereinfachung der Anordnung nach Fig. 43 dargestellt, indem aus der Laserkanone die beiden Linsen 102 und 103 entfernt worden sind. Bei einem entsprechenden Abstand der Laserkanone von dem Umlenkspiegel 241 werden die aus der Linse 101 austretenden divergierenden Laserstrahlenbündel mittels der Linsen 241 und 245 auf die Bearbeitungsfläche 81 fokussiert und erzeugen die Bearbeitungspunkte B₁ bis Bₙ, die in diesem Fall mit den Bearbeitungspunkten B₁' bis Bₙ' identisch sind.

In Fig. 43b ist die Anordnung 249 zum Entfernen des von der Bearbeitungsfläche abgetragenen Materials näher dargestellt. Die Wirkungsweise ist in der Fig. 34 detailliert beschrieben worden.

In Fig. 44 ist eine Hohlbett-Anordnung zur Materialbearbeitung mit der erfindungsgemäßen Laserstrahlungsquelle gezeigt. Hohlbett-Anordnungen sind bekannt, beispielsweise sind zwei Anordnungen mit Hohlbett in der Druckschrift "Der Laser in der Druckindustrie" von Werner Hülsbuch, Verlag W. Hülsbusch, Konstanz, auf den Seiten 461 und 562 beschrieben. Das zu bearbeitende Material mit der Bearbeitungsfläche 81 befindet sich in einem Zylinder oder vorzugsweise einem Teil eines Zylinders 236 mit dem Radius R. Diese Anordnung wird mit Hohlbett bezeichnet, auf dessen Achse ein Lager 229 mit einem Drehspiegel 233 angeordnet ist. Der Drehspiegel kann beispielsweise eine Spiegelfläche haben, kann aber auch mit mehreren Spiegelflächen ausgebildet sein und von einem Motor 234 in Rotation gesetzt werden und auf einem nicht dargestellten, in Richtung der Zylinderachse gegenüber dem Zylinder 236 verschiebbaren Schlitten angeordnet sein. Auf dem nicht dargestellten Schlitten sind weiterhin in der Nähe der Bearbeitungsfläche 81 eine zu einer optischen Einrichtung gehörige Optik 231 und ein Spiegel 232 angeordnet. Die Optik 231 und der Spiegel 232 stellen eine bekannte Spiegeloptik dar. Weiterhin befinden sich auf dem Schlitten ein Umlenkspiegel 227 und die Laserkanone 23 sowie nahe der Bearbeitungsfläche 81 eine Anordnung 235 zum Entfernen des von der Bearbeitungsfläche abgetragenen Materials, die in Fig. 34 näher beschrieben ist. Die aus der Laserkanone austretenden Strahlenbündel 226 erzeugen in einer Zwischenbildebene 228 Bearbeitungspunkte B₁ bis Bₙ, die mittels des Umlenkspiegels 227, der Spiegeloptik 231, 232 und dem Drehspiegel 233 auf die Bearbeitungsfläche 81 übertragen werden. Sie erzeugen hier die Bearbeitungspunkte B₁' bis Bₙ'. Die Bearbeitungspunkten B₁' bis Bₙ', die den Bearbeitungsfleck bilden, erzeugen über die ganze Zeilenlänge hinweg Bearbeitungsspuren 224 (Fig. 35, 36 und 37), die aufgrund des konstanten Radius des Hohlbetts über die gesamte Zeilenlänge scharf aufgezeichnet werden. Der Vorteil der gezeigten Anordnung besteht darin, daß sich ein kompakter Aufbau erzielen läßt. Insbesondere ermöglicht die dargestellte Anordnung einen kleinen Winkel δ zwischen den Achsen des auf den Drehspiegel 233 einfallenden Strahlenbündels und dem Strahlenbündel, das von dem Drehspiegel auf die Bearbeitungsfläche reflektiert wird, was für eine geringe Verzeichnung in der Aufzeichnungsgeometrie auf der Bearbeitungsfläche erwünscht ist. Die Laserkanone wird vorzugsweise in einem nicht dargestellten Prisma gelagert und mit einem ebenfalls nicht dargestellten Spannband befestigt. Die Laserkanone kann um ihre Achse verdreht und in Achsrichtung verschoben werden. Durch die Verdrehung kann der Abstand zwischen den Bearbeitungsspuren verändert werden, was in Fig. 35 dargestellt ist. Durch die Verschiebung kann der Abstand zu der Bearbeitungsfläche verändert werden. Nahe der Bearbeitungsfläche 81 ist über die gesamte Zeilenlänge eine erfindungsgemäße Anordnung 235 zum Entfernen des von der Bearbeitungsfläche abgetragenen Materials angebracht, die ähnlich wie in Fig. 43b ausgebildet sein kann, wobei sie entsprechend dem Radius R des Zylinders 236 gebogen ausgeführt ist und über die gesamte Länge mit einer nicht dargestellten, gebogenen Glasplatte 237 versehen sein kann und deren Wirkungsweise unter Fig. 34 detailliert beschrieben worden ist. In Fig. 44 ist eine Laserkanone mit den Linsen 102 und 103 gemäß der Fig. 4b und einem in Fig. 20 dargestellten Strahlengang vorgesehen. Es können aber auch alle anderen Arten der erfindungsgemäßen Laserkanone eingesetzt werden. Weiterhin lassen sich in einer solchen Hohlbett- Anordnung auch mehrere Laserstrahlungsquellen anbringen, um den Bearbeitungsvorgang zu beschleunigen. Beispielsweise kann man einen zweiten Drehspiegel und eine zweite Laserstrahlungsquelle sowie eine zweite Anordnung 235 zum Entfernen des von der Bearbeitungsfläche abgetragenen Materials gegenüber der gezeigten Anordnung so anbringen, daß sich auf der Bearbeitungsfläche weitere Bearbeitungsspuren ergeben.

In Fig. 44a ist eine Vereinfachung der Anordnung nach Fig. 44 dargestellt, indem aus der Laserkanone die beiden Linsen 102 und 103 entfernt wurden. Bei einem entsprechenden Abstand der Laserkanone von dem Umlenkspiegel 227 werden die aus der Linse 101 austretenden divergierenden Laserstrahlenbündel mittels der Linse 231 auf die Bearbeitungsfläche 81 fokussiert und erzeugen die Bearbeitungspunkte B₁ bis Bₙ, die in diesem Fall mit den Bearbeitungspunkten B₁' bis Bₙ' identisch sind.

## Patentansprüche

1. Laserstrahlungsquelle hoher Leistungsdichte und hoher Energie (1) zur Materialbearbeitung, mit einer optischen Einheit (8) zur Formung des Laserstrahls auf einer Bearbeitungsfläche (81), wobei
mehrere diodengepumpte Fiberlaser (2) vorgesehen sind, deren Ausgänge (13) in mehreren Spuren nebeneinander angeordnet sind,
**dadurch gekennzeichnet, dass**
die optische Einheit (8) zur Formung des Laserstrahls eine Modutationseinheit aufweist, auf deren Eingang die Ausgangsstrahlen der einzelnen Fiberlaser (2) gerichtet sind und durch die die einzelnen Laserstrahlen jeweils moduliert werden, wobei
die Modulationseinheit einen oder mehrere Modulatoren in Form von akustooptischen Ablenkem (34) aufweist, und wobei
die aus der Modulationseinheit austretenden Laserstrahlen mittels der optischen Einheit (8) so zusammengefasst und gebündelt werden, dass die Strahlen nebeneinander in mehreren Spuren auf der Bearbeitungsfläche (81) auftreffen.

2. Laserstrahlungsquelle nach Anspruch 1, **dadurch gekennzeichnet, dass** mindestens ein Laserausgang vorgesehen ist, an den mehrere Fiberlaser (2) angeschlossen sind.

3. Laserstrahlungsquelle nach Anspruch 1 oder 2, **dadurch gekennzeichnet, dass** die Ausgänge (13) der Fiberlaser (2) mit einem Abschlussstück (26, 94) versehen sind, durch das die Fiberlaser (2) mit der optischen Einheit (8) verbunden sind und dass die optische Einheit (8) zur Formung des Laserstrahls am Strahlungseintritt (9) Fassungen (29) aufweist, welche die Abschlussstücke (26, 94) der Laser so aufnehmen, dass die Ausgangsstrahlen der Laser am Strahlungsaustritt (10) der optischen Einheit (8) zur Formung des Strahls auf der Bearbeitungsfläche (81) auftreffen.

4. Laserstrahlungsquelle nach einem der vorangehenden Ansprüche, **dadurch gekennzeichnet, dass** die Modulationseinheit (Fig. 4a, Fig. 19, Fig. 19a) aus einem oder mehreren mehrkanaligen Modulatoren (34) besteht.

5. Laserstrahlungsquelle nach einem der vorangehenden Ansprüche, **dadurch gekennzeichnet, dass** die optische Einheit (8) zur Formung des Laserstrahls eine Übertragungseinheit zur Übertragung der aus den Abschlussstücken austretenden Laserstrahlen auf die Bearbeitungsfläche (81) aufweist, die mindestens eine Linse (165, 186, 197) enthält.

6. Laserstrahlungsquelle nach Anspruch 5, **dadurch gekennzeichnet, dass** die Übertragungseinheit mindestens eine Sammellinse und mindestens eine Zerstreuungslinse (101) aufweist.

7. Laserstrahlungsquelle nach Anspruch 5 oder 6, **dadurch gekennzeichnet, dass** die Übertragungseinheit zweistufig ausgebildet ist, wobei die erste Stufe die in der einer Sammellinse (133) der Abschlussstücke (26, 94) gebildeten Strahlenbündel (144) verkleinert in eine Zwischenbildebene (183) überträgt und die zweite Stufe die Strahlenbündel der Zwischenbildebene (183) verkleinert auf die Bearbeitungsfläche (81) überträgt.

8. Laserstrahlungsquelle nach einem der Ansprüche 5 bis 7, **dadurch gekennzeichnet, dass** die Übertragungseinheit ein auswechselbares Objektiv (61, 103, 112) aufweist

9. Laserstrahlungsquelle nach einem der Ansprüche 3 bis 8, **dadurch gekennzeichnet, dass** die aus Sammellinsen (133) der Abschlussstücke (26, 94) austretenden Strahlenbündel (144) einen Austrittskegel aufweisen, der durch den Abstand der Sammellinse (133) zum Faserende innerhalb der Abschlussstücke (26, 94) so einstellbar ist, dass sich für Bearbeitungspunkte B₁ bis Bₙ auf der Bearbeitungsfläche (81) eine optimale Schärfe ergibt.

10. Laserstrahlungsquelle nach einem der vorangehenden Ansprüche, **dadurch gekennzeichnet, dass** die optische Einheit (8) zur Formung des Laserstrahls auf der Bearbeitungsfläche (81) Mittel zum Unschädlichmachen von Laserstrahlung, die auf der Bearbeitungsfläche (81) keinen Bearbeitungseffekt hervorrufen soll, aufweist.

11. Laserstrahlungsquelle nach einem der vorangehenden Ansprüche, **dadurch gekennzeichnet, dass** die Ausgänge (13) der Fiberlaser (2) in einer Aufnahme zusammengefasst sind, wobei die Aufnahme so ausgebildet ist, dass die Laserstrahlung auf die Bearbeitungsfläche (81) gerichtet ist.

12. Laserstrahlungsquelle nach einem der Ansprüche 5 bis 11, **dadurch gekennzeichnet, dass** zwischen dem Strahlungsaustritt aus der Übertragungseinheit und der Bearbeitungsfläche (81) eine Anordnung (82) zum Entfernen des von der Bearbeitungsfläche (81) abgetragenen Materials vorgesehen ist.

13. Laserstrahlungsquelle nach einem der vorangehenden Ansprüche, **dadurch gekennzeichnet, dass** die optische Einheit (8) zur Formung des Laserstrahls so ausgeführt ist, dass sich auf der Bearbeitungsfläche (81) Strahltaillen ergeben.

14. Laserstrahlungsquelle nach einem der vorangehenden Ansprüche, **dadurch gekennzeichnet, dass** der Aufbau teilweise modular ausgeführt wird, indem Module vorgesehen sind, die aus jeweils einem Fiberlaser (2) mit einer Pumpquelle (18), einer Laserfiber (5) und einem Abschlussstück (26, 94) bestehen.

15. Laserstrahlungsquelle nach Anspruch 14, **dadurch gekennzeichnet, dass** für jedes Modul, das einen Fiberlaser (2) enthält, ein Elektronikmodul zur Ansteuerung des Fiberlasermoduls vorgesehen ist.

16. Laserstrahlungsquelle nach Anspruch 14 oder 15, **dadurch gekennzeichnet, dass** aus der Laserfiber (5) ein geringer Teil der Pumpstrahlung für eine Messzelle auskoppelbar ist.

17. Laserstrahlungsquelle nach einem der Ansprüche 14 bis 16, **dadurch gekennzeichnet, dass** ein Regelkreis vorgesehen ist zum Vergleich der Strahlung jedes Strahlenbündels (144) am Strahlungseintritt (9) der optischen Einheit (8) mit einem Sollwert, wobei eine Abweichung so auf die Stromversorgung der Pumpquelle einwirkt, dass die Abweichung beseitigt wird.

18. Anordnung zur Materialbearbeitung mittels Laser, **gekennzeichnet durch** eine Laserstrahlungsquelle (1) nach einem der vorangehenden Ansprüche sowie **durch**
ein Gehäuse (21) zur Aufnahme einzelner Komponenten der Anordnung,
mindestens eine in dem Gehäuse angeordnete drehbar gelagerte, von einem Antrieb in Rotation gesetzte Trommel (22), auf deren Oberfläche eine Bearbeitungsfläche (81) vorgesehen ist,
wobei die Laserstrahlungsquelle (1) eine Laserkanone (23) enthält, deren Strahlung auf die Bearbeitungsfläche gerichtet ist,
mindestens einen in dem Gehäuse angeordneten Schlitten, der auf einer Führung entlang der Trommel von einem Vorschubantrieb axial verschiebbar ist, und auf dem die Laserkanone (23) angeordnet ist,
einem Kühlsystem,
einer Steuerung für die Laser,
und einer Maschinensteuerung für die Antriebe.

19. Anordnung zur Materialbearbeitung nach Anspruch 18, **dadurch gekennzeichnet, dass** die akustooptischen Ablenker(34) der Laserstrahlungsquelle (1) Steuereingänge zur Veränderung des Abstands zwischen den Bearbeitungsspuren und/oder der Laserleistung während des Bearbeitungsvorgangs aufweisen.

20. Anordnung zur Materialbearbeitung nach Anspruch 18 oder 19, **dadurch gekennzeichnet, dass** Mittel zur Messung der Abweichung der Lage der Bearbeitungsspuren von ihrer Soll-Lage während des Bearbeitungsvorgangs vorgesehen sind, wobei aufgrund der Abweichungen Steuersignale erzeugt werden, die während des Bearbeitungsvorgangs so auf die akustooptische Ablenkung der Laserstrahlen einwirken, dass die Abweichungen beseitigt werden.

## Claims

1. Laser radiation source with high power density and high energy (1) for material machining, with an optical unit (8) for shaping the laser beam on a machining surface (81), wherein
a plurality of diode-pumped fibre lasers (2) are provided whose outputs (13) are arranged side by side in a plurality of tracks,
**characterized in that**
the optical unit (8) for shaping the laser beam has a modulation unit on whose input the output beams of the individual fibre lasers (2) are trained and by means of which the laser beams are individually modulated,
the modulation unit having one or more modulators in the form of acousto-optical deflectors (34), and
the laser beams exiting from the modulation unit being grouped together and focused, by means of the optical unit (8), so that the beams impinge on the machining surface (81) side by side in a plurality of tracks.

2. Laser radiation source according to Claim 1, **characterized in that** at least one laser output is provided to which a plurality of fibre lasers (2) are connected.

3. Laser radiation source according to Claim 1 or Claim 2, **characterized in that** the outputs (13) of the fibre lasers (2) are provided with a terminal (26, 94) for connecting the fibre lasers (2) to the optical unit (8) and **in that** the optical unit (8) for shaping the laser beam has sockets (29) at the radiation entrance (9) which receive the terminals (26, 94) of the lasers so that the output beams of the lasers at the radiation exit (10) of the optical unit (8) for shaping the beam impinge on the machining surface (81).

4. Laser radiation source according to any one of the preceding claims, **characterized in that** the modulation unit (Fig. 4a, Fig. 19, Fig. 19a) consists of one or more multichannel modulators (34).

5. Laser radiation source according to any one of the preceding claims, **characterized in that** the optical unit (8) for shaping the laser beam has a transmission unit comprising at least one lens (165, 186, 197) for transmitting the laser beams exiting from the terminals on to the machining surface (81).

6. Laser radiation source according to Claim 5, **characterized in that** the transmission unit has at least one converging lens and at least one diverging lens (101).

7. Laser radiation source according to Claim 5 or Claim 6, **characterized in that** the transmission unit is configured in two stages, the first stage transmitting the pencil (144) formed in a converging lens (133) of the terminals (26, 94), reduced in size, into an intermediate image plane (183), and the second stage transmitting the pencil of the intermediate image plane (183), reduced in size, on to the machining surface (81).

8. Laser radiation source according to any one of Claims 5 to 7, **characterized in that** the transmission unit has an interchangeable lens (61, 103, 112).

9. Laser radiation source according to any one of Claims 3 to 8, **characterized in that** the pencils (144) exiting from converging lenses (133) of the terminals (26, 94) have an exit cone that can be set by the distance of the converging lens (133) from the fibre end inside the terminals (26, 94) to yield optimal sharpness for machining points B1 to Bn on the machining surface (81).

10. Laser radiation source according to any one of the preceding claims, **characterized in that** the optical unit (8) for shaping the laser beam on the machining surface (81) has means for rendering innocuous any laser radiation not intended to produce a machining effect on the machining surface (81).

11. Laser radiation source according to any one of the preceding claims, **characterized in that** the outputs (13) of the fibre lasers (2) are grouped together in a receptacle, the receptacle being configured so that the laser radiation is trained on to the machining surface (81).

12. Laser radiation source according to any one of Claims 5 to 11, **characterized in that** an arrangement (82) for removing material stripped from the machining surface (81) is provided between the radiation exit from the transmission unit and the machining surface (81).

13. Laser radiation source according to any one of the preceding claims, **characterized in that** the optical unit (8) for shaping the laser beam is configured so that beam waists form on the machining surface (81).

14. Laser radiation source according to any one of the preceding claims, **characterized in that** it is made partly modular in construction by the provision of modules each consisting of a fibre laser (2) with pump source (18), laser fibre (5) and terminal (26, 94).

15. Laser radiation source according to Claim 14, **characterized in that** for every module that contains a fibre laser (2), an electronic module for triggering the fibre laser module is provided.

16. Laser radiation source according to Claim 14 or Claim 15, **characterized in that** a small portion of the pump radiation can be coupled out of the laser fibre (5) for a measurement cell.

17. Laser radiation source according to any one of Claims 14 to 16, **characterized in that** a control circuit is provided for comparing the radiation of each pencil (144) at the radiation entrance (9) of the optical unit (8) with a set value, any deviation then acting on the power supply to the pump source so as to eliminate the deviation.

18. Arrangement for machining material by laser, **characterized by** a laser radiation source (1) according to any one of the preceding claims and by
a housing (21) to accommodate individual components of the arrangement,
at least one drum (22) which is rotatably mounted inside the housing and is drivable in rotation by a drive unit, and on whose surface a machining surface (81) is provided,
said laser radiation source (1) comprising a laser gun (23) whose radiation is trained on to the machining surface,
at least one carriage which is arranged inside the housing, is axially traversable along the drum on a guide by means of a feed drive, and carries the laser gun (23),
a cooling system,
a control system for the lasers,
and a machine control for the drives.

19. Material machining arrangement according to Claim 18, **characterized in that** the acousto-optical deflectors (34) of the laser radiation source (1) have control inputs for varying the distance between machining tracks and/or the laser output during the machining operation.

20. Material machining arrangement according to Claim 18 or Claim 19, **characterized in that** means are provided for measuring deviations of the position of the machining tracks from their required position during the machining operation, control signals being generated in response to any such deviations and acting on the acousto-optical deflection of the laser beams during the machining operation so as to eliminate the deviations.

## Revendications

1. Source de rayonnement laser de forte densité de puissance et de forte énergie (1) pour l'usinage de matériaux comportant une unité optique (8) pour former le faisceau laser sur une surface d'usinage (81), comportant plusieurs lasers à fibre à pompage par diode (2) dont les sorties (13) sont juxtaposés selon plusieurs traces,
source de rayonnement laser **caractérisée en ce que**
pour former le faisceau laser, l'unité optique (8) comporte une unité de modulation qui module les différents faisceaux de sortie des différents lasers à fibre (2) dirigés sur son entrée,
* l'unité de modulation comportant un ou plusieurs modulateurs sous la forme de déflecteurs acousto-optiques (34), et
* les faisceaux laser sortant de l'unité de modulation sont réunis et regroupés par l'unité optique (8) de façon que les faisceaux arrivent sur plusieurs traces de la surface d'usinage (81).

2. Source de rayonnement laser selon la revendication 1,
**caractérisée par**
au moins une sortie laser à laquelle sont reliés plusieurs lasers à fibre (2).

3. Source de rayonnement laser selon la revendication 1 ou 2,
**caractérisée en ce que**
les sorties (13) des lasers à fibre (2) sont munies d'un embout (26, 94) pour relier le laser à fibres (2) à l'unité optique (8), et
l'unité optique (8) comporte les douilles (29) pour former le faisceau laser à l'entrée de rayonnement (9) et qui reçoivent les embouts (26, 94) des lasers pour que les faisceaux de sortie des lasers arrivent à la sortie de rayonnement (10) de l'unité optique (8) pour former le faisceau sur la surface d'usinage (81).

4. Source de rayonnement laser selon l'une des revendications précédentes,
**caractérisée en ce que**
l'unité de modulation (figure 4a, figure 19, figure 19a) se compose d'un ou plusieurs modulateurs (34) multicanaux.

5. Source de rayonnement laser selon l'une des revendications précédentes,
**caractérisée en ce que**
l'unité optique (8) pour former le faisceau laser, comporte une unité de transmission pour transmettre les faisceaux laser sortant des embouts à la surface d'usinage (81) comportant au moins une lentille (165, 186, 197).

6. Source de rayonnement laser selon la revendication 5,
**caractérisée en ce que**
l'unité de transmission comporte au moins une lentille collectrice et au moins une lentille de dispersion (101).

7. Source de rayonnement laser selon la revendication 5 ou 6, **caractérisée en ce que**
l'unité de transmission est à deux étages,
* le premier étage transmettant par une lentille collectrice (133) réduisant le faisceau de rayons (144) formé dans la lentille collectrice (133) des embouts (26, 94) pour transmettre dans un plan d'image intermédiaire (183), et
* le second étage transmet le faisceau de rayons réduit dans le plan de l'image intermédiaire (183) à la surface d'usinage (81).

8. Source de rayonnement laser selon l'une des revendications 5 à 7,
**caractérisée en ce que**
l'unité de transmission comporte un objectif interchangeable (61, 103, 112).

9. Source de rayonnement laser selon l'une des revendications 3 à 8,
**caractérisée en ce que**
le faisceau de rayons (144) sortant des lentilles collectrices (133) des embouts (26, 94) ont un cône de sortie réglable par la distance entre la lentille collectrice (133) et l'extrémité de la fibre dans l'embout (26, 94) pour que la netteté soit optimale aux points d'usinage B₁... Bₙ sur la surface d'usinage (81).

10. Source de rayonnement laser selon l'une des revendications précédentes,
**caractérisée en ce que**
pour former le faisceau laser sur la surface d'usinage (81), l'unité optique (8) comporte des moyens pour neutraliser le faisceau laser qui n'a pas d'effet d'usinage sur la surface d'usinage (81).

11. Source de rayonnement laser selon l'une des revendications précédentes,
**caractérisée en ce que**
les sorties (13) des lasers à fibre (2) sont regroupées dans un moyen de réception réalisé pour diriger le faisceau laser sur la surface d'usinage (81).

12. Source de rayonnement laser selon l'une des revendications 5 à 11,
**caractérisée en ce qu'**
entre la sortie de faisceau de l'unité de transmission et la surface d'usinage (81), il y a un dispositif (82) pour évacuer la matière enlevée de la surface d'usinage (81).

13. Source de rayonnement laser selon l'une des revendications précédentes,
**caractérisée en ce que**
pour former le faisceau laser, l'unité optique (8) est réalisée pour avoir les rétrécissements des faisceaux sur la surface d'usinage (81).

14. Source de rayonnement laser selon l'une des revendications précédentes,
**caractérisée en ce que**
la construction est partiellement modulaire **en ce qu'**elle comporte des modules formés chacun d'un laser à fibre (2) avec une source de pompage (18), une fibre laser (5) et une pièce terminale (26, 94).

15. Source de rayonnement laser selon la revendication 14,
**caractérisée en ce que**
chaque module comportant un laser à fibre (2) est associé à un module électronique pour commander le module à laser à fibre.

16. Source de rayonnement laser selon les revendications 14 ou 15,
**caractérisée en ce qu'**
une faible partie du rayonnement de pompage est découplée du laser à fibre (5) pour alimenter une cellule de mesure.

17. Source de rayonnement laser selon l'une des revendications 14 à 16,
**caractérisée par**
un circuit de régulation pour comparer le rayonnement de chaque faisceau de rayons (144) à l'entrée du rayonnement (9) de l'unité optique (8) à une valeur de consigne, et en cas d'écart, on agit sur l'alimentation électrique de la cellule de pompage pour éliminer l'écart.

18. Dispositif d'usinage de matière par laser, **caractérisé par** une source de rayonnement laser (1) selon l'une quelconque des revendications précédentes et comprenant,
- un boîtier (21) pour recevoir les différents composants du dispositif,
- au moins un tambour (22) monté en rotation dans le boîtier et entraîné en rotation et dont la surface porte une surface d'usinage (81),
- la source de rayonnement laser (1) comporte un canon laser (23) dont le faisceau est dirigé vers la surface d'usinage,
- au moins un chariot installé dans le boîtier coulissant sur un guide le long du tambour, axialement par un entraînement de déplacement et portant le canon laser (23),
- un système de refroidissement,
- une commande du laser, et
- une commande de machine pour l'entraînement.

19. Dispositif d'usinage de matière selon la revendication 18,
**caractérisé en ce que**
les déflecteurs acousto-optiques (34) de la source de rayonnement laser (1) ont des entrées de commande pour modifier la distance entre les traces d'usinage et/ ou la puissance laser pendant la phase d'usinage.

20. Dispositif d'usinage de matière selon la revendication 18 ou 19,
**caractérisé par**
des moyens pour mesurer l'écart de la position des traces d'usinage par rapport à la position de consigne pendant la phase d'usinage, et
à partir des écarts, on génère des signaux de commande qui agissent sur le déflecteur acousto-optique des rayons laser pendant l'usinage pour éliminer les écarts.
